Europäisches Patentamt

European Patent Office

Office européen des brevets

(19)

(11) **EP 1 703 389 A2**

(12) **EUROPEAN PATENT APPLICATION**

(43) Date of publication:
 **20.09.2006 Bulletin 2006/38**

(51) Int Cl.:
 *G06F 9/46* (2006.01)

(21) Application number: **06075641.8**

(22) Date of filing: **20.03.2006**

(84) Designated Contracting States:
 **AT BE BG CH CY CZ DE DK EE ES FI FR GB GR
 HU IE IS IT LI LT LU LV MC NL PL PT RO SE SI
 SK TR**
 Designated Extension States:
 **AL BA HR MK YU**

(30) Priority: **18.03.2005 NL 1028574**

(71) Applicant: **Universiteit Leiden
 2312 AV Leiden (NL)**

(72) Inventors:
 • **Groenewegen, Lucas P. J.
 2517 TE Den Haag (NL)**
 • **de Vink, Erik P.
 5658 HA Eindhoven (NL)**

(74) Representative: **van Westenbrugge, Andries et al
 Nederlandsch Octrooibureau,
 J.W. Frisolaan 13,
 P.O. Box 29720
 2502 LS Den Haag (NL)**

(54) **Method for transferring a computer system from a first phase to a second phase**

(57) Method for transferring a computer system from a first phase (I) to a second phase (II), the computer system having a plurality of components, one of them being a coordinator; the first phase (I) being defined by a first rule set for a first implementation of the computer system; the second phase (II) being defined by a second rule set for a second implementation of the computer system; during the first phase (I) the coordinator being arranged for prescribing the first rule set to the plurality of components according to a first coordination scheme; during the second phase (II) the coordinator being arranged for prescribing the second rule set to the plurality of components according to a second coordination scheme; wherein the coordinator is arranged to execute the following for transferring the computer system from the first phase (I) to the second phase (II):

a) loading a migration rule set comprising a first migration rules part (A) and a second migration rules part (B);

b) adjusting the first coordination scheme of the coordinator based on the first migration rules part (A) into the second coordination scheme, and

c) gradually transferring the other components to the second phase (II) based on the second migration rules part (B).

*Fig 7.3*

**Description**

TECHNICAL FIELD

The present invention relates to a method for transferring a computer system from a first phase (I) to a second phase (II), the computer system having a plurality of components.

STATE OF THE ART

A computer system may be a single stand-alone computer comprising one or more processors, but may also be a collection of computers arranged to communicate with each other via a network.

The computer system is implemented with certain components in either hardware or software to perform, during operation, one or more tasks. At a given point in time, the computer system has a given implementation of components, or in other words, the system is in a certain phase. Over time, the implementation of components may change for some reason, for example due to a change of tasks required. The change of the implementation causes the computer system to pass over from one (first) phase having a first set of components and tasks to another (second) phase which involves a second set of components and tasks.

The implementation of components can be defined in a broad sense: it may involve components relating to software blocks or computational functions, but also components that relate to hardware entities and their functions within the computer system.

Such a first and second phase of the computer system is described by a first and second rule set respectively. Each rule set defines a number of components, such as software and/or hardware components, that are part of the computer system, a number of states in which the number of components can be, a number of actions that can be performed by the, computer system and a number of possible transitions between the different states. Thus, the first rule set and the second rule set respectively describe a first and second implementation of the computer system.

The first rule set is being prescribed by a component that acts as coordinator according to a coordination scheme which handles interactions between components in the computer system. The coordinator continues to maintain the current situation.

It is known in the prior art that the coordinator does not need to have detailed knowledge of the behavior of all the components that form the computer system. The coordinator only needs to have global knowledge about the behavior of the components forming the computer system. This will further be explained below.

According to the prior art methods are known for transferring such a computer system from the first phase to the second phase. According to these methods, the transfer takes place by loading a second rule set describing the second phase. When this second rule set is loaded, the migration takes place in abrupt and instantaneous manner: Before loading of this second rule set the computer system is in the first phase and acts in accordance with the first rule set. After loading the second rule set the computer system is in the second phase and acts in accordance with the second rule set. In order to allow such an abrupt transition without adverse impact on running tasks or components in operation, it is necessary to turn off the computer system, to reset the computer system or at least to put the computer system in some kind of resting state, in which no relevant tasks take place.

This is a rather cumbersome and disadvantageous course of events, since turning off the computer system takes time, is user-unfriendly and may interfere with running processes.

Therefore, it is an object of the present invention to provide a *system and method* that allows an easy transfer of a computer system from a first phase to a second phase, without the need of turning off or resetting the computer system. This object is achieved by a method for transferring a computer system from a first phase to a second phase, the computer system having a plurality of components, one of them being a coordinator;
the first phase being defined by a first rule set for a first implementation of the computer system;
the second phase being defined by a second rule set for a second implementation of the computer system;
during the first phase the coordinator being arranged for prescribing the first rule set to the plurality of components according to a first coordination scheme;
during the second phase the coordinator being arranged for prescribing the second rule set to the plurality of components according to a second coordination scheme;
wherein the coordinator is arranged to execute the following for transferring the computer system from the first phase to the second phase:

a) loading a migration rule set comprising a first migration rules part and a second migration rules part,
b) adjusting the first coordination scheme of the coordinator based on the first migration rules part into the second coordination scheme, and
c) gradually transferring the other components to the second phase based on the second migration rules part.

By providing a migration rule set comprising a first and second part, in which the first part specifies the migration of the coordinator and the second set specifies the migration of the behavior of the components, it is possible to execute the transfer gradually. According to the invention, the transfer is not performed in an abrupt way, but gradually. Between the first phase and a second phase, a transition phase can be identified, in which some components are working according to the first rule set and other components are working according to the second rule set.

In a further embodiment, the method comprises an action in which the coordinator first loads the second rule set and determines the migration rule set based on the second rule set before executing actions b) and c).

Based on this, the coordinator, after having loaded the second rule set, is capable of subsequently determining a suitable migration rule set, that, when executed, transfers the computer system from the first phase to the second phase.

According to a further aspect of the present invention, the method provides that each component in the first phase, can be in one of a plurality of states and that the migration rule set specifies in which set of states from said plurality of states a component needs to be to be transferable from the first phase to the second phase.

By specifying the set of states in which a component should be in order to transfer it from the first to the second phase, the coordinator can perform the transfer without further instructions. As a result of this, the exact course of the transition is not determined at forehand, but depends on the actual states and transitions between states of the components.

Also, the present invention relates to a computer system comprising a processing unit and memory, the memory being connected to the processing unit, the computer system having a capability of transferring from a first phase to a second phase, the computer system having a plurality of components, one of them being a coordinator; the first phase being defined by a first rule set for a first implementation of the computer system;
the second phase being defined by a second rule set for a second implementation of the computer system; during the first phase the coordinator being arranged for prescribing the first rule set to the plurality of components according to a first coordination scheme; during the second phase the coordinator being arranged for prescribing the second rule set to the plurality of components according to a second coordination scheme; wherein the coordinator is arranged to execute the following for transferring the computer system from the first phase to the second phase:

a) loading a migration rule set comprising a first migration rules part and a second migration rules part,
b) adjusting the first coordination scheme of the coordinator based on the first migration rules part into the second coordination scheme, and
c) gradually transferring the other components to the second phase based on the second migration rules part.

Moreover, the present invention relates to a computer program to be loaded by a computer system, the computer system comprising a processing unit and memory, the processing unit being connected to the memory, the computer program product, after being loaded, allowing the processing unit to provide to the computer system a capability of transferring from a first phase to a second phase, the computer system having a plurality of components, one of them being a coordinator; the first phase being defined by a first rule set for a first implementation of the computer system; the second phase being defined by a second rule set for a second implementation of the computer system; during the first phase the coordinator being arranged for prescribing the first rule set to the plurality of components according to a first coordination scheme; during the second phase the coordinator being arranged for prescribing the second rule set to the plurality of components according to a second coordination scheme; wherein the coordinator is arranged to execute the following for transferring the computer system from the first phase to the second phase:

a) loading a migration rule set comprising a first migration rules part and a second migration rules part,
b) adjusting the first coordination scheme of the coordinator based on the first migration rules part into the second coordination scheme, and
c) gradually transferring the other components to the second phase based on the second migration rules part.

Furthermore, the present invention relates to a data carrier for a computer program as described above.

1. Introduction

Software systems are ever growing in size and complexity. In order to understand and to handle their size and complexity, architectures are used. An architecture provides a global description of an actually (far) more detailed software system. Architectures exist of different types and styles, depending on the (global) questions one wants to be answered on the basis of an architecture, see e.g. [Documenting Arch's, ref. 1]. Nevertheless, any architectural description consists of a number of components connected by certain links. A component usually represents some (aggregated) structural information together with some global properties or functionality thereof, made visible and accessible via one or more interfaces of the component. Depending on the concrete links between components, one component can interact with another component by addressing such an interface.

It is not common to speak about a component's behavior. On the one hand it is clear that a component has (internal) dynamics, by means of which the components can play its role within the setting of the other components as globally indicated by the architecture. On the other hand it is often stated, a component is stateless, which means (it is as if) a component does not change. Very often, if another component asks something from it, it will answer that question (according to some interface specification) and that is it. Even in case of a communication protocol, the component will handle its protocol role as specified and, again, that is it.

In the latter case, however, one can see a relation with the (hidden, internal) dynamics of the component: such a protocol role has to be consistent with the component's own (internal) behavior. In case a component, via its different interfaces, can be involved in playing different protocol roles, possibly overlapping in time, the necessary consistency is not only between each role and the component's internal behavior, but also between the different roles. In such a situation it is useful to model protocol roles as well as internal behavior in terms of a behavioral description, like UML's statechart diagrams. Although we lack the right notions for establishing consistency between different statecharts in general, we can, via careful consistency checking as part of larger consistency management, verify specific forms of consistency, see [Kuester, Nuseibeh, Finkelstein, ref. 5].

On the basis of a system's architecture one often wants to decide whether the system is going to be compatible with its planned surroundings. Such surroundings can consist of suitable architectures of other software systems or of suitable architectures of business units and of business processes or even of suitable partial architectures of the business' environment (such as client processes). Here too, communication is to take place via interfaces and according to protocols. So here too the same consistency matters arise.

It is on the basis of architecture too, one wants to get insight about questions concerning alignment of ICT and business [ArchiMate, ref. 6], concerning integration of software systems [Toussaint, ref. 7], concerning required or expected or emerging or maturing change of software and business together. Here not only the above consistency matters arise, but on top of that we have additional dynamics from old protocols to new protocols and from old internal behavior to new internal behavior. If, moreover, some form of smooth migration from old to new should be taken into account, the corresponding consistency matters are even more complicated.

Although, as we already said above, it is not common to speak about a component's behavior, we actually see a need for such a notion. As such component's behavior, because it occurs on the global level of the architectural description, should not be mistaken for the component's internal behavior - which is far too detailed for the architectural level - we shall refer to it as global behavior.

Global behavior of a component within an architecture expresses on the level of that architecture what happens or could happen to such the component as well as what the component does or could do. This not only applies to an architectural situation where the component has been fully integrated with other components, but also to a situation where the architecture has to be aligned, tuned, adapted or more radically changed. Particularly in the latter cases, a component's global behavior then has to undertake a transformation from old global behavior to new global behavior, possibly via intermediate global behavior. As we shall see further down, this is itself another example of global behavior; in this case, the dynamics describing how global behavior of the various components changes. It so happens, global behavior always can be described in terms of changes of more detailed behavior. For that reason our notion of global behavior is also referred to as *behavior behavior:* global level dynamics of underlying more detailed behavior.

So for understanding not only composition, aggregation, collaboration and integration of components, but also alignment, (consistent) change and migration of components, we advocate a notion of global behavior. One can think of global behavior as taking place via the underlying (hidden) internal behavior, as a kind of higher order dynamics superpositioned on top of normal detailed behavior. The problem then is, how can we observe the global behavior. What we tend to see when observing normal, detailed behavior, is just detailed steps taking place from state to state. But some of these steps as it were belong to higher order activity. Without any further notions for higher order dynamics, it is unclear how we can discriminate between a step belonging to normal detailed behavior only and a step belonging to a higher order of behavior.

As we shall point out, formalizing global behavior allows for a new way of understanding normal step-by-step behavior as an accumulation of superpositioned behaviors. In this manner we are able to understand and specify not only collaboration and (consistent) integration in a new way, but also self-modifying systems: their evolution or change, even on-the-fly, i.e. while the execution of the system as modelled remains ongoing. The understanding is such that it leads to model formulations, specifying in detail a solution for a concrete collaboration or evolution problem. In addition, the understanding can be captured in terms of operational semantics, such that any model formulated can be analysed.

Global behavior restricted to a context of components whose detailed behaviors have to be coordinated consistently on order to achieve some collaborative goal, has already been studied on the basis of the coordination specification language Paradigm. In [GroeVink, ref. 3] we introduced a formal definition of the Paradigm notions, together with operational semantics for a rather restricted class of Paradigm models, so-called hierarchical models where components can be employee of no more than one manager (component). In that case a component can have at most one global behavior superpositioned on its detailed behavior.

In this paper we shall generalize the operational semantics to Paradigm models where a component can have arbitrarily many global behaviors superpositioned on its detailed behavior. Moreover, we shall considerably extend the application domain of the new version of Paradigm, by allowing for special operational semantics geared towards modifying the underlying Paradigm model. This will enable us, guided by the structuring notions provided by Paradigm, to specify in detail how a model can change on-the-fly to a new model and from there to a third model and so on.

To this aim the paper has the following structure. After this introductory and motivating section the paper consists of two parts. Part 1 covers the global behaviors where the model does not change. Part 2 covers the extension to changing models. As such model changes are specified on the basis of concrete semantics changing itself, we shall speak about a stationary situation in Part 1 and about a malleable situation in Part 2.

Part 1 addressing stationary situations has three sections. Section 2 presents a new version of Paradigm resulting in stationary operational semantics for any stationary Paradigm model. Section 3 illustrates this approach with a detailed example of delegation and self-management. Section 4 gives some conclusions, in particular paving the way towards non-stationary, mouldable situations.

Part 2 addressing malleable situations has six sections. In Section 5 the semantical part of the new version of Paradigm is adapted such that Paradigm model become malleable via their malleable semantics. Section 6 explains how the malleable semantics can be geared towards evolution on-the-fly in a sufficiently well-structured manner. The well-structuredness is captured by a so-called McPal pattern, combining two forms of jitting (doing things Just-In-Time): JIT-modelling and JIT-informing. A large example of evolution on-the-fly is presented and distributed over Sections 7 and 8.

2. Paradigm with Stationary Semantics

2.1. Introduction to a New Set-Up of Paradigm

The main goal of this section is, to present Paradigm together with full operational semantics for it. The actual formulation of the new semantics is both accurately and flexibly defined on top of a new set of definitions of the main Paradigm notions. An advantage of this approach is, the set of notions used here is more concise compared to the presentation of the Paradigm notions in [GrVi 02, ref. 3] as well as it guarantees each Paradigm model to have such semantics. In addition, the new presentation of the Paradigm notions slightly extends the old approach, which turns out to be useful for modelling evolution on-the-fly. A second important advantage of this approach is, by more clearly separating Paradigm notions from matters of consistency and of semantics, we are able to vary the application domain of Paradigm's behavior behavior by varying the consistency and the related semantics, without changing the underlying notions.

The way we define the operational semantics on top of the Paradigm notions is via so-called consistency rules. These rules are formulated within a kind of Cartesian framework for modelling the various components involved. In the first part of the paper we keep this Cartesian framework stationary, together with a likewise static set of consistency rules. In so doing, we prepare the modelling ground for detailed specification of complicated coordination issues, as delegation and self-management, both illustrated in an example. In the second part, we introduce a certain freedom in varying the consistency rules; it is on the basis of these variations that we additionally introduce a structured form of varying the Cartesian framework for modelling the relevant components. On the basis of this combined form of structured variation of consistency rules and Cartesian framework, we are able to formulate Paradigm models specifying evolution on-the-fly of themselves.

However, a disadvantage of the new approach is, it does somewhat obscure the original intuition behind the notions. This could be the more troublesome, as the Paradigm notions in their original form already have turned out to be not so easy to understand.

To overcome the disadvantage, we shall not only give the intuition behind the various notions from the new approach, but we shall also relate the approach as a whole to our original intuitive interpretation, by pointing out how the latter's presence is hidden in the new approach. Moreover, we point out where our new approach in a subtle but nevertheless substantial manner extends the scope of the original approach. The discussion may also help in clarifying why the Paradigm notions are not so easy to understand. Finally, we illustrate the new approach with small Paradigm model fragments, thus preparing the ground for the delegation and self-management example in the next section.

2.2. Paradigm's Kernel Notions

The new Paradigm definition integrates a subset of the original notions and their new operational semantics. It thereby generalizes the semantics to all Paradigm models, such as employees being their own manager, or managers sharing employees even with respect to the same partition. Henceforth, operational semantics exist for any Paradigm model, whereas in the original approach the semantics covered purely hierarchical situations only, where an employee has no more than one manager, not being itself, see [GrVi 02]. Another difference between the old and the new Paradigm definition is, the definition below is somewhat more general. Moreover, the new approach provides a useful separation between the Paradigm notions on the one hand and consistency matters as well as operational semantics on the other hand.

We begin our presentation by introducing the Paradigm notions upon which we shall base the consistency and semantics we want. After that we discuss and illustrate these notions, particularly with respect to differences between old and new. Then we formulate the kind of consistency we want to have in a particular modelling situation, in terms of rules. Based on these consistency rules we present the operational semantics for such a particular modelling situation. Then we discuss and illustrate the consistency rules and the semantics and we compare the new set-up of Paradigm to the old set-up.

Definition 2.1.

(a) A process P is a tuple (st(P), ac(P), ts(P)),

- where st(P) is a collection of states,
- where ac(P) is a collection of actions,
- and where ts(P) $\subseteq$ st(P) x ac(P) x st(P) is a collection of transitions between such states, labelled with an action.

If the action label of a transition equals $\in$, one can drop the action coordinate from the transition specification; if we do that, we call such a transition unlabeled instead of labelled.

A labelled transition $(s_1, a, s_2)$ is usually denoted by $s_1 \xrightarrow{a} s_2$; in its unlabeled form a transition $(s_1, s_2) = (s_1, \in, s_2)$ is usually denoted as $s_1 \rightarrow s_2$.

(b) A subprocess S of a process P is a tuple ( restr(P), trps(S) ),

- where restr(P) is a process ( st(S), ac(S), ts(S) ), such that st(S) = st(P), ac(S) $\subseteq$ ac(P) and ts(S) = {(x, a, y) $\in$ ts(P)| x, y $\in$ st(S), a $\in$ ac(S)}
- and where trps(S) is a collection of so-called traps of S, being non-empty subsets of st(S) with the property:

if $\vartheta$ is a trap of S and $s_1 \xrightarrow{a} s_2$ is a transition in ts(S), then $s_1 \in \vartheta$ implies $s_2 \in \vartheta$.

If a trap v of S equals st(S), it is called the trivial trap of S.

(c) A collection {$S_i$ | i $\in$ I} of subprocesses of process P is called covering or P-covering if

$$st(P) = \bigcup_{i \in I} st(S_i), \quad ac(P) = \bigcup_{i \in I} ac(S_i) \text{ and } ts(P) = \bigcup_{i \in I} ts(S_i)$$

A partition $\pi$ of a process P, also denoted a P ( $\pi$ ), is a P-covering collection of subprocesses.

A process - Definition 2.1.a - is an abstract description of the dynamics of some sequential component of a possible larger system. At any point of (relevant) time such a component is in exactly one of its states, the current state at that time. Moreover, the component can change its (current) state by making a transition as specified. Such a transition always happens in one go, as the component cannot spend time outside its states. Apparently, actions as transition labels are considered potentially relevant in a formal sense. Nevertheless, we very often omit these labels, although in a more informal sense they can be clarifying by indicating which activity is driving the transition. In a similar sense, the names chosen for the states can serve as welcome comments, in this case informally clarifying the result of an incoming transition or the basis of an outgoing transition.

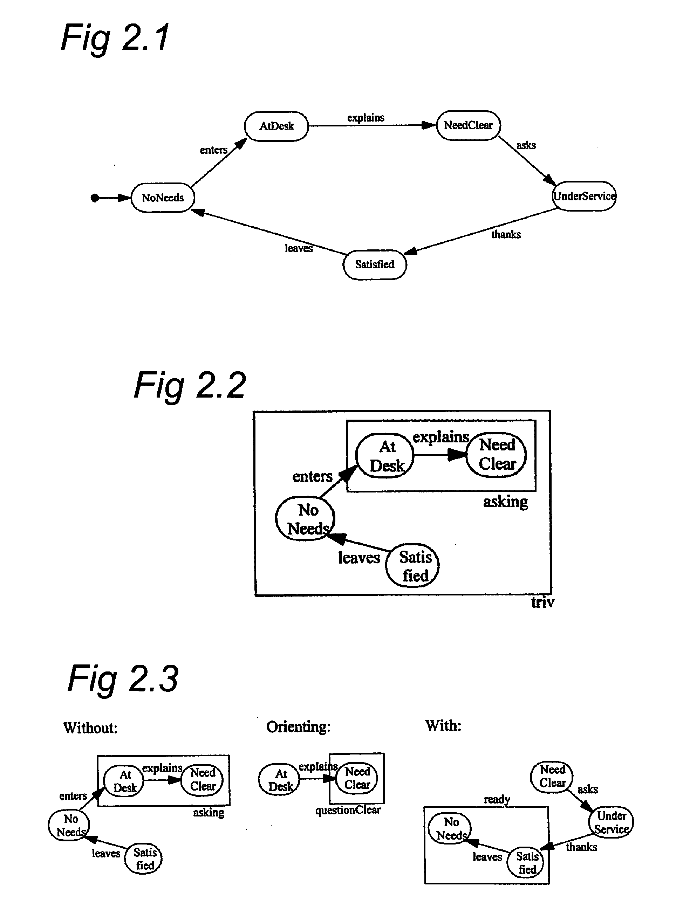

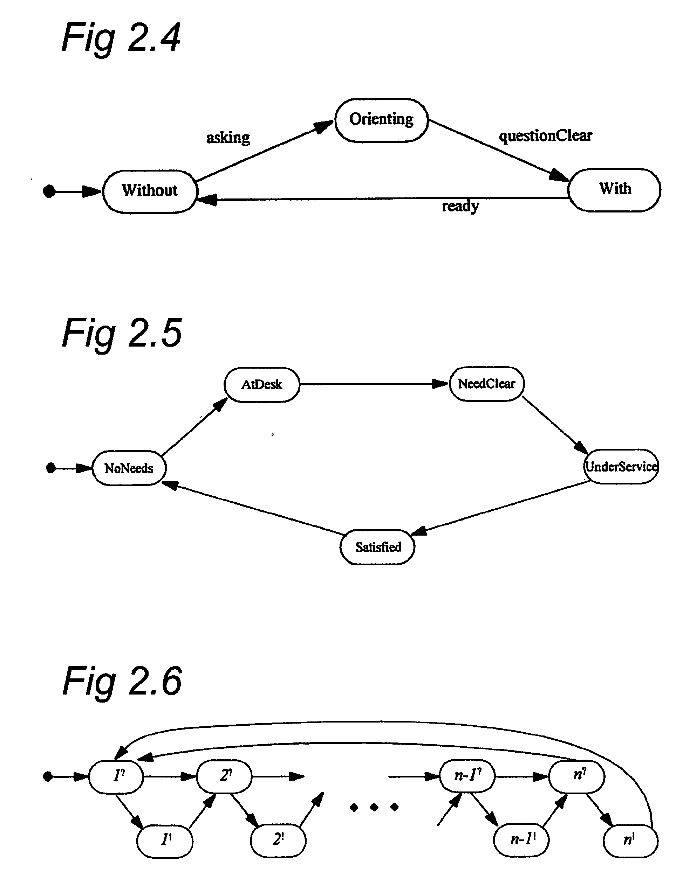

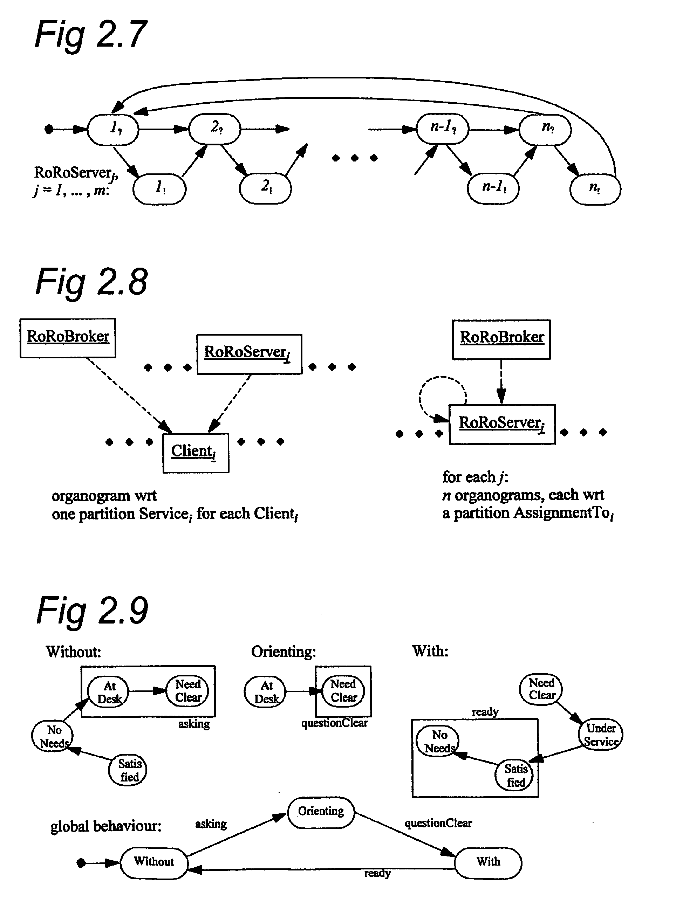

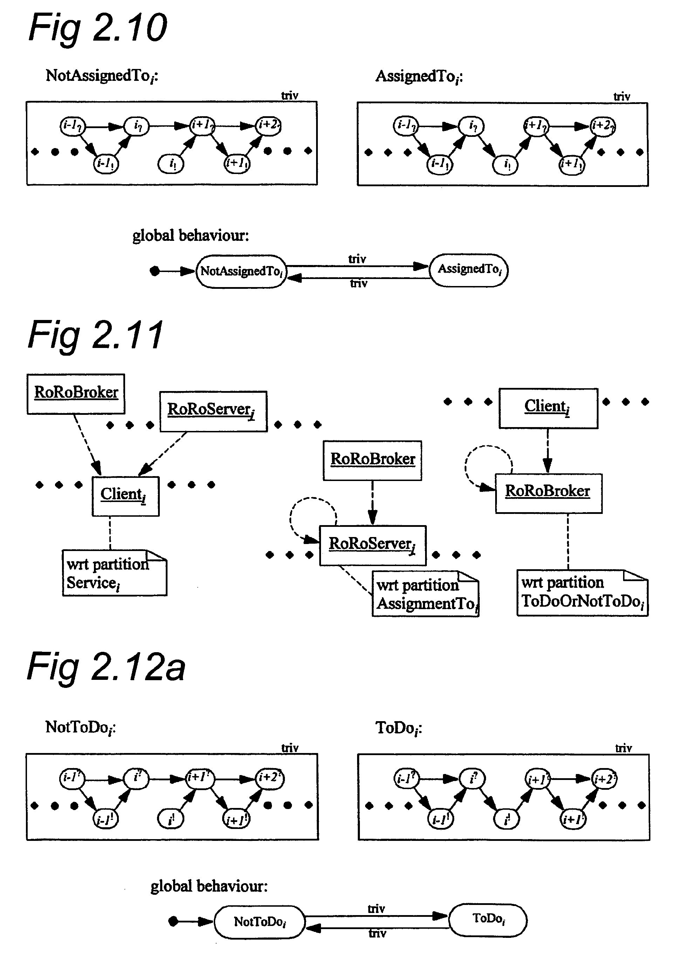

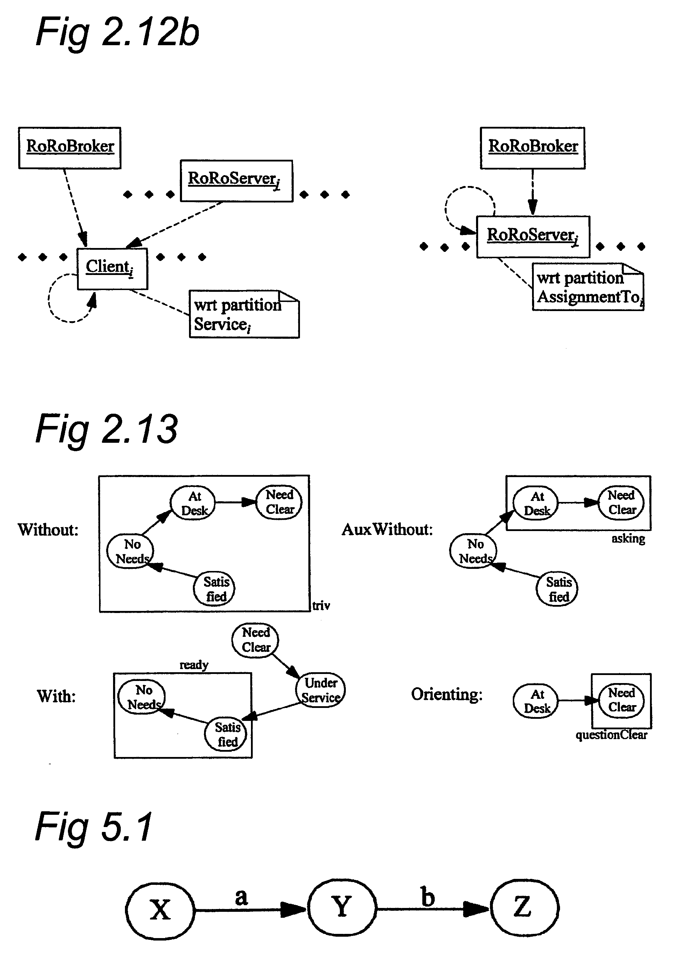

To illustrate the process notion, we present the Client process visualized in Figure 2.1. This Client process will return within our delegation example of Subsection 2.2. The example of the Client process is as follows: it models a potential client of a large service organisation; the organisation consists of a broker at an information desk and a number of specific service providing specialists.

Figure 2.1 schematically depicts the Client process.

The graphical symbols have the interpretation usual for statechart diagrams as in UML: rounded rectangles represent states; arrows between them represent transitions; if present, a black dot with arrow points to a so-called starting state, being a first state where the Client process can begin its life cycle. A Client has the following life cycle: in state NoNeeds it does not want any service; in AtDesk it asks a broker for a possibly still vague service and in NeedClear it has made clear what service it wants; in UnderService it is being served by a server and in Satisfied it expresses its wish towards this server to stop the service, upon which it returns to NoNeeds to proceed with another cycle. Although we usually prefer to omit transition labels - actions - we have given them here too. Indicating a starting state is optional too, but it is quite common to have them in case of a "normal" process (as we shall see: not being a subprocess of a larger process.)

Subprocesses and traps - Definition 2.1.b - are the two key notions of Paradigm. A subprocess of a process is itself a process, usually a smaller part of the larger process it is a subprocess of. In this way a subprocess represents a restriction, often only temporary, of the complete dynamics of the larger process. One can think of it as a phase within the complete dynamics. In the new set-up presented here, a subprocess cannot exist without its set of traps. A trap of a sub- process is a final stage of the phase represented by the subprocess. Such a trap consists of a subset of the subprocess' states, such that, once entered, the subset cannot be left during that phase, i.e. as long as the dynamics remain restricted to that subprocess. Trivial traps contain all states of a subprocess. (Although it is not forbidden to indicate explicitly - by means of the black dot notation - which states might serve as starting state of a subprocess, we usually leave such black dot details out, as the same information actually follows from the notion of a trap from one subprocess to another, to be discussed later.)

Note, for any subprocess S its set of states st(S), by definition, cannot be left as long as the process' behavior remains restricted to this subprocess. Therefore, a trivial trap serves as default final stage of any subprocess. By taking - at least - its trivial trap into account, a process can be considered as a subprocess: the phase then consists of the complete dynamics; its one trap, the trivial trap, is the stage entered, or reached, right from the beginning.

Figure 2.2 gives an example of a subprocess of the above Client process. The subprocess (is called Without. It represents the phase of Client where it does not have the attention of the broker as well as of any of the servers. From the states and transition belonging to Without - this is the way we have modelled the example subprocess Without - we can see: within the phase Without Client may leave the service providing organisation and it may (re)enter it. It may even explain its particular service wishes, but the brokering is not (yet) supposed to occur; so the action explained is to be understood as a detailed preparation of the question for a service, before the broker is available to do the actual brokering by studying that question.

**Figure 2.2** schematically depicts a subprocess of Client, called Without, together with two traps: asking and triv.

In addition to the usual process details of Without in Figure 2.2 - its four states and its three transitions and actions - we see two nested rectangles. The inner is called asking and the outer is called triv. They represent two traps of Without: triv is the trivial trap and asking is a nontrivial trap consisting of the two states AtDesk and NeedClear. In general traps are drawn as polygons: the states inside the polygon are those belonging to the particular trap.

The intuitive idea behind trap asking is: from the moment the Client process has entered it (within its current phase Without where it is not being brokered nor being served), it might go to a next phase where it is being brokered but not yet served. The trivial trap has been drawn only as a further illustration of how traps are visualized, but we usually do not draw it as its role often is rather limited.

A partition - Definition 2.1.c - is a covering set of subprocesses of a process. So, for a given process, a partition is a collection of phases of it, such that any step of the whole process occurs in at least one of the phases. In itself this is simple, but the important thing here is, to choose the phases carefully: each phase should reflect a part of the complete process dynamics seen as relevant from a point of view where, instead of the separate states, just the phases - as global dynamics - make sense. In our experience, such a viewpoint always has to do with some form of integration. The concrete integration goal "dictates" which are relevant phases of a process. Moreover, similar to the property of a process being always in exactly one of its states - its current state - we also have the property in mind of a process being, with respect to each of its partitions, always in exactly one of the partition's subprocesses - its current subprocess with respect to that partition, constituting the current phase (restriction) within the partition.

Partition Service of process Client consists of 3 subprocesses: Without, Orienting and With, drawn in Figure 2.3. Each subprocess here has one nontrivial trap. Subprocess Without is the phase where the client does not have the attention from the broker nor from any server; Orienting is the phase where the client negotiates with the broker or is waiting for a particular server (without knowing which one); With is the phase where the client is being served (again, without knowing by which server). Note that within partition Service subprocess Without is different from the subprocess of the same name in Figure 2.2: in Figure 2.3 it does not have trap triv.

The intuition behind the traps is as follows. As in the case of Figure 2.2, trap asking marks the (final) stage from which phase Orienting - i.e. being brokered but not being served - may start. Similarly, trap questionClear marks the (final) stage of phase Orienting from which phase With - i.e. being served - may start. Similarly again, trap ready marks the (final) stage of phase With from which phase Without - i.e. being without attention from broker or from any server - may start.

**Figure 2.3** schematically depicts Partition Service of process Client.

Note that partition Service is covering: each state as well as each transition and action from the complete Client process occurs at least in one of the three subprocesses.

Although we have not formally defined a notion of global behavior nor a notion of normal detailed behavior, it is clarifying to observe the following with respect to the Client process. The normal detailed behavior is actually visualised in Figure 2.1 as it consists of an alternating sequence of states and transitions, where transitions may be replaced by their corresponding label: an action if there is one and if it is sufficiently selective. So the normal behavior of Client is:

NoNeeds, enters, AtDesk, explains, NeedClear, asks, UnderService, thanks, Satisfied, leaves, NoNeeds, enters, ....

Global behavior is always formulated in terms of subprocess and traps from one particular partition. Similar to normal behavior it is an alternating sequence, but now of subprocesses and of traps. Our global behavior example with respect to partition Service is:

Without, asking, Orienting, questionClear, With, ready, Without, asking, ....
Like normal behavior, also global behavior can be visualised in a process-like way, see Figure 2.4.

**Figure 2.4** schematically depicts Global behavior of Client wrt partition Service.

2.3. Operational Semantics for Paradigm's Behavioral Consistency

Even without a formal definition of global behavior, the question is whether such global behavior is or remains sufficiently consistent with the original, underlying detailed behavior. The matter of such consistency is covered by two more definitions, thereby establishing operational semantics for the Paradigm notions too. It so happens, from this point on the new set-up of Paradigm is quite different from the old set-up. In this way we are able to weave basic ingredients for the operational semantics into the Paradigm notions, in the end leading to operational semantics for every Paradigm model. Moreover, in Part 2 the new set-up will turn out to be adaptable towards malleable situations where systems and therefore their models have to change because of all kinds of changing requirements, e.g. arising from alignment, growing insight, moving market, new technologies.

Definition 2.2.

(a) Let $\pi$ be a partition of a process P, let S , S' $\in$ $\pi$ be two subprocesses of partition $\pi$ and let $\vartheta$ be a trap of subprocess S with $\vartheta \in$ tr(S). If moreover $\vartheta \subseteq$ st(S'), trap 9 is called connecting (from S to S') or also a trap from S to S'. A subprocess change (from S to S' via trap $\tau$ of S) within partition $\pi$ is only defined if a connecting trap $\tau$ exists from S to S'; such a subprocess change is denoted as

$$S \xrightarrow{\ \tau\ } S'$$

(b) Let I be a nonempty set of indices i for processes $P_i$ and for each i $\in$ I let $J_i$ be a possibly empty set of indices j for partitions $\pi_{i,j}$ of process $P_i$.
A Paradigm model $\Pi$ is a tuple (Cf, cr)
- where is Cf is a so-called Cartesian frame

$$\left\langle P_i \, , \left\langle \pi_{i,j} \right\rangle_{j \in J_i} \right\rangle_{i \in I}$$

of tuples of two elements, the first element being a (unique) process $P_i$, $i \in I$, the second element being another - possibly empty - tuple of (unique) partition $\pi_{ij}$ of $P_i$; the frame is said to be spanned by a process coordinate for each process $P_i$ and by a partition coordinate for each partition $\pi_{i,j}$; a process coordinate for $P_i$ is referred to by means of a process label, denoted as $P_i$: and a partition coordinate for $\pi_{i,j}$ is referred to by a (process-)partition label $P_i(\pi_{i,j})$:;

$$r = P : s \xrightarrow{a} s', \left\langle P_i(\pi_{i,j}) : S_{i,j} \xrightarrow{\vartheta_{i,j}} S'_{i,j} \right\rangle \quad i \in I_r, j \in J_{i,r}$$

-- with P one of the processes Pi , i ∈ I ,

-- with $s \xrightarrow{a} s' \in \ \ tr(P)$

-- with $I_r \subseteq I$ and $J_{i,r} \subseteq J_i$;

rule r couples one state transition in process P to zero or more subprocess changes, at most one per partition $\pi_{i,j}$;

also here $P_i$: is the process label of rule r, referring to the process coordinate where (state)transition $s \xrightarrow{a} s'$ occurs; similarly, $P_i(\pi_{i,j})$: is a (process-)partition label of rule r, referring to the partition coordinate where a subprocess change occurs in unison with the one state transition.

A Paradigm model consists of all processes specifying the various sequential components relevant for some integration situation. Furthermore, the Paradigm model also consists of all relevant partitions, i.e. all phases of these processes relevant for the integration situation together with their sets of likewise relevant traps. All these processes and partitions together constitute the Cartesian frame. Such a frame spans a space of - for each process - a state and a list of subprocesses, one for each partition of the process. The underlying idea is, an element from this space represents for each process its current state and its various current subprocesses - again, one for each of its partitions. In this way the processes together with their partitions constitute the various coordinates of the space spanned.

Finally, a Paradigm model consists of a set of consistency rules. Similar to rules from a rule base in the context of logic programming, a consistency rule transforms an a priori fact into an a posteriori fact. In our context of a Pardigm model, these facts refer to the elements of the space spanned by the Cartesian frame. Therefore, a consistency rule can simultaneously express two types of transformation: a state change, where an actual transition occurs in a process from the old current state to the new current state; a list of subprocess changes, where in a number of processes with respect to a certain partition the old current subprocess is replaced by the new current subprocess. So, in a given rule, neither every process nor every partition of it is being referred to as a coordinate. This is why we used the sets $\tilde{I}$ and $\tilde{J}$ as subsets of the index sets I and J respectively.

In our case, the transformation expressed by a consistency rule concerns exactly one state change s → s' in one of the processes $P_k$ together with zero or more subprocess changes $S_{i,j} \to S'_{i,j}$, where for each i-j-combination i ∈ I, j ∈ $J_i$ at most one such subprocess change occurs. A consistency rule thus allows at most one phase change per partition. Phase changes are more accurately denoted as

$$S_{i,j} \xrightarrow{\vartheta_{i,j}} S'_{i,j}$$

to express the existence of a trap $\vartheta_{i,j}$ of $S_{i,j}$ such that all states of $\vartheta_{i,j}$ belong to $S'_{i,j}$, in other words the existence of a connecting trap from, $S_{i,j}$ to $S'_{i,j}$. The idea here is, the connecting trap serves as overlap between the two subsequent phases: of the first phase it is a trap indeed, so after being entered it cannot be left until the second phase starts; as on the level of the global dynamics the details inside a trap are hidden, the second phase may start from every state in the overlap - the connecting trap.

To give an example of a consistency rule, we consider the situation of the Client process where it starts to get the attention of the broker. So let us assume the existence of an additional process Broker containing at least a transition

$$\text{Client?} \xrightarrow{\text{startsBrokering}} \text{Client!;}$$

in state Client? the Broker process checks whether Client wants to be brokered; upon observing a positive outcome of the check, process Broker does action startsBrokering, thereby changing its state from Client? to Client!; in state Client! the Broker process performs the actual brokering of process Client. The following consistency rule exactly expresses the above, by relating this transition of Broker to those two subprocesses and connecting trap of Client's partition Service that have been modelled explicitly to discriminate between first, being neither brokered nor served but possibly asking for brokering and second, being brokered.

$$\text{Broker } \text{Client?} \xrightarrow{\text{startsBrokering}} \text{Client!, Client (Service): } \text{Without} \xrightarrow{\text{asking}} \text{Orienting}$$

This rule says, Broker's state change from Client? to Client! by doing action startsBrokering corresponds to changing Client's (up to then) current subprocess Without to (from then on) current subprocess Orienting under the additional condition Client's current state belongs to trap asking, i.e Client's current state is either AtDesk or NeedsClear. Note that both states of trap asking indeed are states of the from then on current subprocess Orienting, so trap asking is a connecting trap from Without to Orienting.

In general such a consistency rule thus specifies how exactly one change of current state corresponds to zero or more changes of current subprocess, at most one for each partition. The process in which the state change occurs, is referred to as a manager of the processes whose subprocesses are mentioned in this consistency rule, or a bit more precisely, as a manager of these processes with respect to the partitions the subprocesses belong to. These processes (whose subprocesses are mentioned) are referred to as employees of that manager (with respect to the relevant partition (s) of such employees). As the same manager can occur in many consistency rules, the collection of all its employees has to be composed from the relevant consistency rules. Conversely too, the collection of all managers of a given employee has to be composed from the relevant consistency rules.

Apparently, from the above example consistency rule we may conclude: Broker is manager of Client (wrt partition Service) and Client is employee of Broker (wrt partition Service).

So, consistency rules couple any change of current phase restriction to a "normal" transition / state change of a manager. Informally we express such coupling by saying: such a manager, by doing the transition, prescribes new (current) phases to its (relevant) employees.

On the basis of the above example consistency rule we can now say: by selecting and performing action startsBrokering in state Client?, Broker goes to state Client! and thereby prescribes the new subprocess Orienting to Client.

It is important to observe, an employee may be employee of several managers with respect to the same partition, called shared management. Before we had defined our complete operational semantics for the Paradigm notions, this situation was being considered as potentially dangerous modelling practice, because in such a situation it should be additionally assured, the different managers (with respect to the same partition each) keep each other sufficiently informed about the one current subprocess from the one partition they prescribe towards their common employee. The semantics, however, have clarified this point: it is not particularly dangerous at all, as a manager has to "wait" for the right traps having been entered, independent from what other (co-)managers are doing to their shared employee.

Furthermore, a process may be its own manager (and its own employee, for that matter), called self-management; or two processes may both be each others manager (and employee). Also this has been considered potentially risky or at least rather unclear. But again, the semantics have clarified this point. The possibility of allowing self-management in a Paradigm model, has turned out as very useful, not only for delegation, but also for evolution, the topic of the paper's second part.

As we have said above, a consistency rule expresses a change of current state - exactly one state change - combined with zero or more changes of current subprocess. As we shall point out on the basis of the last part of the next definition, the effect of such a combination of changes is stored in order to provide a suitable starting point for a next and similar combination of changes. And so on and so forth.

Definition 2.3.

Let $\Pi = (\langle P_i, \langle \pi_{i,j} \rangle_{j \in J_i} \rangle_{i \in I}, cr)$ be a Paradigm model.

(a) *A local configuration* of process $P_i$ in $\Pi$ is a tuple, possibly labelled,

$$P_i : (s, \left\langle \pi_{i,j} : S_{i,j}, \vartheta_{i,j} \right\rangle_{j \in J_i})$$

- consisting of a state s of process $P_i$
- together with a tuple of length $\#J_i$ of subprocess-trap pairs, one for each partition $\pi_{i,j}$ of process $P_i$,
- where each $S_{i,j}$ is a subprocess of $\pi_{i,j}$
- with $\vartheta_{i,j}$ the smallest trap belonging to $S_{i,j}$ containing state *s of* process $P_i$

The actual tuple in its unlabeled form consists of a state $s$, followed by as many subprocess-trap pairs $S_{i,j}$, $\vartheta_{i,j}$ as process $P_i$ has partitions. The tuple's (process) label is $P_i :$ , indicating the process to which state s and subprocess $S_{i,j}$ belong. Similarly, (partition) label $\pi_{i,j}:$ indicates the partition to which subprocess $S_{i,j}$ and trap $\vartheta_{i,j}$ belong.
(b) A global configuration, also called a global state, of Paradigm model II is a tuple, possibly labelled,

$$\left\langle P_i : (s_i , \left\langle \pi_{i,j} : S_{i,j} , \vartheta_{i,j} \right\rangle_{j \in J_i} ) \right\rangle_{i \in I}$$

 of length $\#I$ of local configurations, one for each process $P_i$.
(c) Let $k \in I$ be a process label occurring in Cartesian frame Cf. A consistency rule $r \in cr$, specified as

$$r = P_k : z \xrightarrow{a} z' , \left\langle P_i (\pi_{i,j}): Z_{i,j} \xrightarrow{\hat{\vartheta}_{i,j}} Z'_{i,j} \right\rangle_{i \in I_r , j \in J_{i,r}}$$

is called applicable in a global configuration GloC, specified as

$$GloC = \left\langle P_i : (s_i , \left\langle \pi_{i,j} : S_{i,j} , \vartheta_{i,j} \right\rangle_{j \in J_i} ) \right\rangle_{i \in I}$$

if
(c1) $z = s_k$,

(c2) $z \xrightarrow{a} z' \in tr(s_{k,j})$ for all $j \in J_k$,

(c3) $Z_{i,j} = S_{i,j}$ for all $i \in I_r$, $j \in J_{i,r}$,
(c4) $\hat{\vartheta}_{i,j} \supseteq \vartheta_{i,j}$ for all $i \in I_r$, $j \in J_{i,r}$
The conditions c1 and c2 together are called the *local consistency conditions* (with respect to the local configuration of process $P_k$); the conditions c3 and c4 together are called the *global consistency conditions.*
(d) Let GloC and GloC' be global configurations, specified as

$$GloC = \left\langle P_i : (s_i , \left\langle \pi_{i,j} : S_{i,j} , \vartheta_{i,j} \right\rangle_{j \in J_i} ) \right\rangle_{i \in I}$$

$$GloC' = \left\langle P_i : (s'_i , \left\langle \pi_{i,j} : S'_{i,j} , \vartheta'_{i,j} \right\rangle_{j \in J_i} ) \right\rangle_{i \in I}$$

and let r ∈ cr be a consistency rule specified as

$$r = P_k : z \xrightarrow{\ a\ } z', \left\langle P_i\,(\pi_{i,j}) : Z_{i,j} \xrightarrow{\ \hat{\vartheta}_{i,j}\ } Z'_{i,j} \right\rangle_{i \in I_r,\ j \in J_{i,r}}.$$

A global (configuration) transition from GloC to GloC" is a pair (GloC, GloC'), also written as GloC → GloC', provided a k ∈ I and a consistency rule r ∈ cr exist such that

- $s_i = s'_i$ if i ≠ k;
- $S_{i,j} = S'_{i,j}$ for all i, j with i ∉ $I_r$ or j ∉ $J_{i,r}$,
- consistency rule r is applicable in global configuration GloC,
- $S'_k = Z'$
- $Z'_{i,j} = S'_{i,j}$ for all i ∈ $I_r$, j ∈ $J_{i,r}$

Consistency rule r is called a (semantical) basis for the global transition Gloc → GloC'. To underline even more a specific rule serves as basis for a specific global transition, we also write $\mathrm{GloC} \xrightarrow{\ r\ } \mathrm{GloC'}$.

A local configuration reflects, for one process, its current state, its current subprocesses - one for each partition - and the currently smallest trap it is in - we also say, it has entered or it has reached - within each current subprocess. For any current subprocess, such a currently smallest trap of it has entered, is determined by the current state. Such a trap always exists as the trivial trap has been entered right from the beginning. This is why each subprocess should have at least the trivial trap among its set of (relevant) traps. For a given process, its local configuration registrates - so it indeed remembers, stores - its current state, current subprocesses and currently smallest traps entered.

A global configuration is an element from a Cartesian product-like space of local configurations of the various processes. In this way a global configuration reflects the *combined current* states, *current* subprocesses and *currently* smallest traps of all processes in the Paradigm model - as spanned by the Cartesian frame from that model. So a global configuration stores, registrates, remembers this information. That means in particular, a global configuration contains all a priori fact-like information for a consistency rule to apply. The rule then, after having been applied, establishes the a fortiori factlike information as its effect, in terms of new current (manager) state, new current (employee) subprocess and new currently smallest traps entered. Such an effect then is again stored into a next global configuration. This brings us to the notion of global transition.

A global transition expresses how on the basis of an appropriate consistency rule, provided the manager's change of current state belongs to all its current subprocesses, indeed establishes a change of global configuration: the one state changing is the manager's; the only subprocesses changing belong to the relevant employees and their relevant partition(s); for each process where some change occurs, the currently smallest trap is determined by the (new) current state and/or the (new) current subprocess.

In this way our set-up guarantees global transitions to depend on a consistency rule and on further, a priori fact-like conditions corresponding to local consistency - between an employee's state transition and current(ly prescribed) subprocesses - as well as corresponding to global consistency - between a manager's state transition and a combination of currently smallest traps entered of its relevant employees. The latter, global, consistency is expressed by the consistency rule at the basis of the global transition. The former, local, consistency is expressed by the additional consistency conditions from part d of Definition 2.3.

Note that in this paper we comply with the rather standard computer science practice of having an interleaving semantics of the strictly sequential global transitions, we nevertheless see possibilities to allow simultaneous transitions too: they can be allowed under certain conflict freeness conditions for the relevant consistency rules. This however is beyond the scope of this paper.

Although in the above discussion we have put forward our intuition underlying the various notions, our original intuition from which the whole Paradigm approach has grown, has not yet been mentioned. This intuition is as follows.

A sequential component has dynamics. It displays its dynamics by performing behavior in the course of (its relevant) time. Such a behavior is often described as an alternating sequence of states and transitions between them: each state then is the current state at the time corresponding to the position in the sequence, and the transition is the (labelled or unlabeled) transition from that (up to then current) state to the next (from then on current) state. But there is more: this one (detailed, as it is from state to state) behavior is viewed from elsewhere in a completely different manner, more globally: from phase to phase, with some phase overlaps in between where the previous phase has reached a certain final stage from which the next phase begins. In terms of the Paradigm notions, a global behavior consists of an alternating sequence of subprocesses and connecting traps between them. The subprocesses in such a sequence are each from the same partition: each subprocess in the sequence then is the current subprocess at the time, corresponding to the position in the sequence, and the connecting trap is a trap actually connecting the (up to then current) subprocess and the (from then on current) subprocess. As the global behavior is a view of the underlying, detailed behavior, the two behaviors must be sufficiently consistent: (detailed) state transitions are always in accordance with the current subprocess and (global) subprocess transitions, represented by a currently entered trap which serves as connecting trap, are always in accordance with the current state.

If more views on the same underlying detailed behavior are relevant, the dynamics are also more complicated: any sequential component while behaving, not only displays its usual, detailed behavior but simultaneously n more behaviors with n the number of different views on that behavior. These *n+1* behaviors are (locally) consistent.

Integration of (e.g. in the form of coordination between) sequential components then can be formulated in terms of their simultaneously suitable global behaviors only. (In relatively simple coordination situations one often has one global behavior for each component to be coordinated, apart from the top-most managers.) This rather unusual manner of formulating integration offers new possibilities for designing solutions to complex integration problems and for understanding as well as for analysing these solutions.

So our global behaviors reflect the essence of coordination dynamics. As such, a global behavior gives the behavior of how and when phases change. As a phase itself consists of (detailed) behavior, our global behavior is behavior of behavior: behavior behavior, larger scale dynamics observed on top of other smaller scale dynamics. In our old set-up of Paradigm, the notion of global behavior was explicitly defined, so the behavior behaviors are explicitly present in the old Paradigm models. In our new set-up they are no longer among the notions defined, but they still are plainly visible, as we shall point out in the paragraph below.

Taking the global configurations and global transitions as a process on its own, referred to as the synthesized process, all detailed as well as global behaviors can be derived from if straightforwardly. We sketch such derivations as follows. The starting point is an alternating sequence of global configurations and of global transitions between them. We call this a synthesized behavior, being a behavior of the synthesized process. Out of a synthesized behavior, one gets a detailed behavior of a component by taking the local configurations for that process (component) only, by restricting them to the state coordinate and by putting transitions in-between only where a global transition is using a consistency rule with in its left-hand side a change of state for this process (component). Where such transitions are lacking, the subsequence of (the same) states is to be represented by this one state (only once). Furthermore, out of a synthesized behavior, one gets a global behavior of a component by taking again the local configurations for that process (component) only, by restricting them in this case to the subprocesses from exactly one partition and by putting traps in-between only where a global transition is using a consistency rule with in its right-hand side a change of subprocess (from the same partition) on the basis of the very trap as connecting trap. Where such traps are lacking, the subsequence of (the same) subprocess is to be represented by this one subprocess (again, only once).

In our opinion there are two really unexpected phenomena here that make Paradigm not so easy to understand. First of all, the number of relevant behaviors usually is much larger than the number of (sequential!) processes involved: each (sequential!) employee *not only has its de- tailed behavior* (exactly one realization) *but also as many more global behaviors* (realisations: what really happens) as it has partitions. So *the views on the underlying behavior appear as separate behaviors,* although completely consistent with the underlying behavior. This is a rather unusual, even somewhat disturbing insight, but after getting used to it, it nevertheless turns out clarifying. The second point is, the overlaps between consecutive phases as reflected by connecting traps allow for a phase change on a global level, whereas on the underlying detailed level it *can remain unclear whether the next detailed transition between two consecutive states belongs to the previous phase or to the new phase.* This is counterintuitive to our usual ideas about global (general) and detailed (specialized): if on the global level there is a clear difference - of phase, in this case - it should not be completely impossible to see a similar difference on the more detailed level. But apparently, it often is. Again, after getting used to this insight, it turns out clarifying.

In the next subsection we illustrate the new set-up with an example where we reuse the Client process from above. The example specifies a situation with delegation of the following chäracter: *m+1* managers share the prescription of subprocesses from the same partition to their common employees. In the old set-up we were not able to formulate operational semantics for it, as the old operational semantics do not allow more than one manager for an employee, not even in case of a separate partition of the employee with respect to each manager. And more serious, in the old set-up the Paradigm model is hard to formulate (if not impossible in general), as the consistency relation addresses all employees if any; so in case of shared management, a partial manager has to reckon with all possible subprocess combinations for those employees it does not actually manage while managing some other employee. In the new set-up any Paradigm model has operational semantics, however, and sharing of management between a number of processes (with respect to one partition per process) is not particularly difficult to formulate, mainly because the irrelevant constituents of the subprocess combinations to be prescribed, are not to be mentioned at all.

3. Delegation Example

The example situation is as follows. There are $n + m + 1$ components of 3 types: $n$ clients, 1 broker and $m$ servers. During its life cycle a client can ask the broker for a service. They then both negotiate about the service character and quality. Based on the outcome of the negotiation, the broker assigns - this is the delegation - one of the servers to the client to do the actual serving, perhaps not immediately but in the near future. Only after having been served, a client can ask the broker for another service. As we shall see, the delegation is such that no additional communication between the broker and a server is needed concerning when the server starts or finishes the actual service.

**Figure 2.5** schematically depicts the n clients $Client_i$.

The $n$ processes of type client are referred to as $Client_1$, ... , $Client_n$, presented in Figure 2.5. Essentially it is the same process as in Figure 2.1, apart from having omitted the actions. Each $Client_i$ has the same life cycle as the above Client process: in NoNeeds it does not want any service; in AtDesk it asks the broker for a possibly still vague service and in NeedClear it has made clear what service it wants; in UnderService it is being served by a server and in Satisfied it expresses its wish towards this server to stop the service, upon which it returns to NoNeeds to proceed with another life cycle.

**Figure 2.6** schematically depicts the broker RoRoBroker.

Figure 2.6 visualizes a broker process, called RoRoBroker, using a round robin strategy for mediating between the clients and the servers, in this case by checking in turn whether a client wants to be served and if so by getting the necessary details for assigning an appropriate server to this client. More precisely: in $i^?$ it inspects whether $Client_i$ is asking for a service; if not, it continues by inspecting the next client in state $i+1^?$; if so, it negotiates with $Client_i$ in state $i^!$, selects an appropriate server for it and by going to state $i+1^?$ it assigns the selected server to $Client_i$. (Note: if i=n, then $i+1=1,$ as is usual in view of the cyclic character of the round robin strategy.)

**Figure 2.7** schematically depicts the m servers $RoRoServer_j$

The m processes of the servers are given in Figure 2.7, referred to as $RoRoServer_j$, similarly using a round robin strategy for serving the clients assigned to it. More precisely: In $i_?$ it inspects whether $Client i$ has been assigned to it and is still waiting to be served; if not, it continues by inspecting the next client in state $i+1?$; if so, it serves $Client_i$ in state $i$, until the client is satisfied, upon which it goes to state $i+1_?$.

**Figure 2.8** schematically depicts two organograms.

Before introducing the partitions, it is useful to know which process will figure as manager of which employees. Figure 2.8's object diagram fragments visualize this, by using dependency relations between objects representing concrete processes. Each dependency relation is directed from a manager to an employee and referred to as an is-mano-relation (is-manager-of). Each fragment, referred to as organogram, covers the situation with respect to one partition of each employee involved. The partitions mentioned will be specified further down.

**Figure 2.9** schematically depicts Partition $Service_i$ of each $Client_i$ and (intended) global behavior.

Concerning the n employee-partition combinations ($Client_i$, $Service_i$) we have the following consistency rules, for each i or for each $i,j$-combination:

(a) RoRoBroker: $i^? \rightarrow i^!$, $Client_i$ ($Service_i$):

$$Without \xrightarrow{\ asking\ } Orienting$$

(b*) RoRoBroker: $i^! \rightarrow i+1^?$, $Client_i$ ($Service_i$):

$$\text{Orienting} \xrightarrow{\text{questionClear}} \text{Orienting}$$

(c*) $\text{RoRoServer}_j$: $i_? \rightarrow i_!$, $\text{Client}_i$ ($\text{Service}_i$):

$$\text{Orienting} \xrightarrow{\text{questionClear}} \text{With}$$

(d) $\text{RoRoServer}_j$: $i_! \rightarrow i+1_?$, $\text{Client}_i$ ($\text{Service}_i$):

$$\text{With} \xrightarrow{\text{questionClear}} \text{Without}$$

The consistency rules with an asterix are in a preliminary version only, as further down each will be combined with another consistency rule, likewise preliminary. From the above rules one can easily see the following. Only when going to an "exclamation" state, the broker influences a client directly: by changing its current subprocess from Without, where the client is not attended, to Orienting, where the service details are being negotiated and where the client waits for the actual service to be provided by an assigned server. The broker leaves the exclamation state after having (at least) checked, the client has entered trap questionClear, so as far as the client is concerned it is ready for being served. The actual serving is delegated to an assigned server. The delegation to a server will be discussed further down, in the context of the partitions $\text{AssigmnentTo}_i$. This server, by going to an "exclamation" state, changes a client's current subprocess from Orienting to With, where the actual serving takes place; by leaving such an "exclamation" state, a server changes a client's current subprocess from With to Without. So both manager types, broker and server, indeed share the prescription of the subprocesses from partition $\text{Service}_i$, but they do it carefully in turn: the broker first and responsible for one subprocess change, followed by the assigned server responsible for two consecutive subprocess changes.

**Figure 2.10** schematically depicts Partition $\text{AssignmentTo}_i$ of each $\text{RoRoServer}_j$ and (intended) global behavior.

According to the second organogram from Figure 2.8, each $\text{RoRoServer}_j$ has (the same) n partitions $\text{AssignmentTo}_i$, for having to help $\text{Client}_i$ or not, independently from the other clients. Therefore partition $\text{AssignmentTo}_i$ of $\text{RoRoServer}_j$ consists of two subprocesses: $\text{NotAssignedTo}_i$ and $\text{AssignedTo}_i$, drawn in Figure 2.10, both provided with the trivial trap. Subprocess $\text{NotAssignedTo}_i$ is the phase where $\text{Server}_j$ does not have to look after $\text{Client}_i$, but ongoing service to $\text{Client}_i$ should continue until the client is satisfied; Assigned Toi is the phase where $\text{Server}_j$ has to start serving $\text{Client}_i$ according to the round robin order of checking clients.

Note that each subprocess in the partitions $\text{AssigmnentTo}_i$ misses exactly one transition out of all 2n transitions of the whole employee, so every state of the employee belongs to both subprocesses. Hence, both trivial traps can indeed serve as connecting traps from one to the other subprocess. Note in addition, each partition $\text{AssignmentTo}i$ governs the access to state $i_!$ : In subprocess $\text{NotAssignedTo}_i$ this state is to be skipped in the round robin cycle, although an on- going service should be finished; contrarily, in subprocess $\text{AssignedTo}_i$ this state is not to be skipped in the round robin cycle.

Concerning the nm employee-partition combinations ($\text{RoRoServer}_j$, $\text{AssignmentTo}_i$) we have the following consistency rules, one such rule for each *i,j*-combination:

(b**) RoRoBroker: $i^! \rightarrow i +1^?$,

$$\text{RoRoServer}_j \text{ (AssignmentTo}_i\text{)}: \quad \text{NotAssignedTo}_i \xrightarrow{\text{triv}} \text{AssignedTo}_i$$

(c**) $\text{RoRoServer}_j$: $i_? \rightarrow i_!$,

$$\text{RoRoServer}_j \text{ (AssignmentTo}_i\text{):} \quad \text{AssignedTo}_i \xrightarrow{\text{triv}} \text{NotAssignedTo}_i$$

Similar as before, the consistency rules with a double asterix are in a preliminary version only, as each rule has to be combined with exactly one rule from the above one-asterix rules. This results in the following set of (final) consistency rules for our solution to the delegation example.

(a) RoRoBroker: $i^? \rightarrow i^!$, Client$_i$ (Service$_i$):

$$\text{Without} \xrightarrow{\text{asking}} \text{Orienting}$$

(b) RoRoBroker: $i^! \rightarrow i + 1^?$, Client$_i$ (Service$_i$):

$$\text{Orienting} \xrightarrow{\text{questionClear}} \text{Orienting} ,$$

$$\text{RoRoServer}_j \text{ (AssignmentTo}_i\text{):} \quad \text{NotAssignedTo}_i \xrightarrow{\text{triv}} \text{AssignedTo}_i$$

(c) RoRoServer$_j$: $i_? \rightarrow i_!$, Client$_i$ (Service$_i$):

$$\text{Orienting} \xrightarrow{\text{questionClear}} \text{With} ,$$

$$\text{RoRoServer}_j \text{ (AssignmentTo}_i\text{):} \quad \text{NotAssignedTo}_i \xrightarrow{\text{triv}} \text{NotAssignedTo}_i$$

(d) RoRoServer$_j$: $i_! \rightarrow i+1_?$, Client$_i$ (Service$_i$):

$$\text{With} \xrightarrow{\text{ready}} \text{Without}$$

The above four sets of consistency rules completely specify the coordination solution of our delegation example by coupling four kinds of manager state transitions to the wanted subprocess transition( combination)s. In (a) and (c), the transition from a ?-state to the corresponding !-state marks the beginning of the brokering or of the serving, respectively. In (b) and (d), the transition from an !-state to the next ?-state marks the end of the brokering or of the serving, respectively. Because of their relevance for the coordination, we shall refer to such consistency rules as the *core* (*consistency*) *rules*.

Unfortunately, the set of core rules, although complete in specifying the coordination, formally is still incomplete: Every possible state transition should occur at least once, since otherwise there could not exist a global transition without changing any subprocess. So we need additional consistency rules for the semantics, but they do not really contribute to understanding the actual coordination. In combination with the requirement, any transition from a current state to a next should belong to the current subprocess(es), these additional consistency rules formally express the (local) consistency within subsequent local configurations, decoupled as it were from the actual coordination. To underline their different importance in view of understanding the coordination, we shall refer to these additional consistency rules as *side* (*consistency*) *rules*. The set of side rules is as follows, where rule (e) has a particular form we discuss below.

(e) RoRoBroker: $i^? \rightarrow i+1^?$, Client$_i$ (Service$_i$):

$$\text{Without} \xrightarrow{\quad\text{Asking}\quad\not\rightarrow}$$

(f) RoRoServer$_j$: i$_?$ → i+1$_?$ ,

(g) Client$_i$: NoNeeds → AtDesk

(h) Client$_i$: AtDesks → NeedClear

(i) Client$_i$: Needclear → Underservice

(j) Client$_i$: UnderService → Satisfied

(k) Client$_i$: Satisfied→NoNeeds

The side rules (e) contain a short hand notation for the following, rather negative a priori fact: Either Client$_i$'s current subprocess is not Without, or the smallest trap reached within Without currently is not Asking. As there is no a fortiori fact mentioned, the a priori fact remains unchanged. We shall refer to such side rule as a *negative* side rule. (By the way, usage of the above negative side rule could have been prevented, by means of an additional subprocess and some additional, more complicated coordination. The approach can even be generalized to all negative side rules, but this is beyond the scope of this paper.)

The side rules (g)-(k) lack any a priori fact, as the clients are no manager at all. Note, there is an intriguing difference between the broker side rules (e) and the server side rules (f) with respect to the occurrence of an a priori fact: in case of the servers the state transition from one ?- state to the next does not so much depend on the client *not yet* having reached a certain small trap, but on the subprocess currently prescribed to this server; this kind of dependency however, is expressed through the global configurations and global transitions: a state transition in a process may occur only if it belongs to each current subprocess (of that process). In the case of the broker there are no subprocesses prescribed to it, as the broker has no managers at all.

Based on the operational semantics defined by the Cartesian product-like state-transition space of global configurations and global transformations, properties can be proved like:

- any server is serving at most one client at a time;
- any client is being served by at most one server at a time;
- any client asking for service, sooner or later will be served;
- the order of serving clients compared to the order of asking a service is reasonably fair: With respect to the one server that is going to provide the service, in between asking the broker for a service and being served (by that particular server) a client can be "overtaken" at most twice by another client - roughly speaking, once per round robin handler involved, broker as well as that server - asking for service later.

These and similar properties, or rather an equivalent but more formal formulation of them, have been proved by means of the model checker SMV. The translation of the Paradigm model and semantics to SMV has been constructed according to the approach developed in [Kam 03, ref. 4].

The above Paradigm model of the delegation example shows the generality of the new set-up, whose operational semantics allows for processes being their own manager as well as for more than one manager of the same set of employees with respect to the same partition.

3.2. Variants of the Delegation Solution

To show how using negative side rules can be avoided, we present two alternative solutions of the above delegation example, referred to as Variant 1 and Variant 2.

Variant 1 re-applies the part of the original solution that already prevented a similar use of a negative side rule for RoRoServer$_k$'s transition i$^?$ → i+1$^?$. Thus our variant 1 solution further clarifies a part of our first solution.

Variant 2 presents a rather different approach to avoiding negative side rules. The idea it is based on, is applicable in all situations where a negative side rule occurs.

The presentation of our two variant solutions reuses large parts of the above solution. In view thereof our verbal explanation of the two variant solutions will remain rather restricted.

**Variant 1 Solution**

The processes of clients, broker and servers remain unchanged, see Figures 2.5, 2.6 an 2.7. The set of organograms is extended with one, in view of a new partition $ToDoOrNotToDo_i$, see Figure 2.11.

**Figure 2.11** schematically depicts three organograms.

This additional organogram is similar to the one with respect to partition $AssignmentTo_i$ of each RoRoServer$_j$. Partition $Service_i$, comprising the subprocesses Without, Orienting and With, and partition $AssignmentTo_i$, comprising the subprocesses $NotAssignedTo_i$ and $AssignedTo_i$, remain unchanged, see Figures 2.9 and 2.10 above.

The one new set of partitions of our Variant 1 solution is visualized in Figure 2.12. In this case, for each i = $I, ... , n$ a separate partition $ToDoOrNotToDo_i$ exists of the one employee process RoRoBroker, each partition with its own manager process $Client_i$. Each of the n partitions has two subprocesses $NotToDo_i$ and $ToDo_i$, very similar to the subprocesses $NotAssignedTo_i$ and $AssignedTo_i$ from partition $AssignmentTo_i$.

**Figure 2.12** schematically depicts Partition $ToDoOrNotToDo_i$ of RoRoBroker.

The set of consistency rules for the Variant 1 solution has the following core rules.

(v1-a) RoRoBroker: $i^? \rightarrow i^!$, $Client_i$ ($Service_i$):

$$\text{Without} \xrightarrow{\text{asking}} \text{Orienting} ,$$

$$\text{RoRoBroker (ToDoOrNotToDo}_i): \ \text{ToDo}_i \xrightarrow{\text{triv}} \text{NotToDo}_i$$

(v1-b) RoRoBroker: $i^! \rightarrow 1 + 1^?$, $Client_i$ ($Service_i$):

$$\text{Orienting} \xrightarrow{\text{questionClear}} \text{Orienting} ,$$

$$\text{RoRoServer}_j \text{ (AssignmentTo}_i): \ \text{NotAssignedTo}_i \xrightarrow{\text{triv}} \text{AssignedTo}_i$$

(v1-c) RoRoServer$_i$: $i_? \rightarrow i_!$, $Client_i$ ($Service_i$):

$$\text{Orienting} \xrightarrow{\text{questionClear}} \text{With} ,$$

$$\text{RoRoServer}_j \text{ (AssignmentTo}_i): \ \text{NotAssignedTo}_i \xrightarrow{\text{triv}} \text{NotAssignedTo}_i$$

(v|-d) RoRoServer$_j$: $i_i \rightarrow i + 1_?$, $Client_i$ ($Service_i$):

$$\text{With} \xrightarrow{\text{ready}} \text{Without}$$

(v1-g) $Client_i$: NoNeeds $\rightarrow$ AtDesk ,

$$\text{RoRoBroker (ToDoOrNotToDo}_i): \ \text{NotToDo}_i \xrightarrow{\text{triv}} \text{ToDo}_i$$

Note how core rules (v1-a) and (v1-g), compared to core rule (a) and side rule (g), express how the subprocesses from the partitions ToDoOrNotToDo$_i$ have to change. Note in addition,this is completely analogous to the changes of the subprocess from partitions AssignmentTo$_i$, as expressed by the rules (c) and (b) respectively.

The other new core rules (v1-b), (v1-c) and (v1-d) are the same as the rules (b), (c), and (d) respectively.

Furthermore, the set of consistency rules for the Variant 1 solution has the following side rules. The new rule (v1-e) replaces the negative side rule (e) from the original solution. So we have got rid of the negative side rule, indeed. The reason why this works, is: RoRoBroker, when making the transition $i^? \rightarrow i+1^?$, may do so if and only if its current subprocess (from partition ToDoOrNotToDo$_i$) is NotToDo$_i$.

The other side rules (v1-f), (v1-h), (v1-i), (v1-j) and (v1-k) are the same as the original ones (f), (h), (i), (j), and (k) respectively.

(v1-e) RoRoBroker: $i^? \rightarrow i+1^?$,

(v1-f) RoRoServer$_j$:$i_? \rightarrow i+1_?$ ,

(v1-h) Client$_i$: AtDesks→NeedClear

(v1-i) Client$_i$: Needclear $\rightarrow$ UnderService

(v1-j) Client$_i$: UnderService→Satisfied

(v1-k) Client$_i$: Satisfied $\rightarrow$ NoNeeds

This finishes our Variant 1 solution.

Variant 2 Solution

As before, the processes of clients, broker and servers remain unchanged, see Figures 2.5, 2.6, and 2.7.

The set of organograms is again reduced to the original two sets, but in this case, each Client$_i$ process is an additional manager of its own partition Service$_i$, see Figure 2.12. So the management of partition Service$_i$ is now shared not only with RoRoBroker and all RoRoServer$_j$ but also with Client$_i$ itself.

**Figure 2.12** schematically depicts two organograms.

Partition AssignmentTo$_i$ remains unchanged, see Figure 2.10 above.

Partition Service$_i$ has an additional subprocess, however, called AuxWithout, see Figure 2.13.

**Figure 2.13** schematically depicts Partition Service$_i$ of each Client$_i$.

As the name AuxWithout - an abbreviation for Auxiliary Without - suggests, it does resemble subprocess Without rather much, as their underlying processes are duplicates. But even compared to the original situation, the traps of both are different: trap asking has been moved to subprocess AuxWithout, as only within that subprocess its set of states functions as trap towards subprocess Orienting; the trivial trap of Without, called triv, here explicitly serves as default ("always") condition for changing from Without to AuxWithout, but - and this is important -the actual changing only happens when transition NoNeeds $\rightarrow$ AtDesk occurs, which means as soon as the former trap asking would have been entered.

The core consistency rules for the Variant 2 solution are as follows, where rules (v2-b), (v2-c), and (v2-d) are the same as the rules (b), (c) and (d) respectively.

(v2-a) RoRoBroker: $i^? \rightarrow 1^!$, Client$_i$ (Service$_i$):

$$\text{AuxWithout} \xrightarrow{\text{asking}} \text{Orienting}$$

(v2-b) RoRoBroker: $i^! \to i^?$, $\text{Client}_i$ ($\text{Service}_i$):

$$\text{Orienting} \xrightarrow{\text{questionClear}} \text{Orienting} ,$$

$$\text{RoRoServer}_j \text{ (AssignmentTo}_i\text{):} \quad \text{NotAssignedTo}_i \xrightarrow{\text{triv}} \text{AssignedTo}_i$$

(v2-c) $\text{RoRoServer}_j$: $i_? \to i_!$, $\text{Client}_i$ ($\text{Service}_i$):

$$\text{Orienting} \xrightarrow{\text{questionClear}} \text{With} ,$$

$$\text{RoRoServer}_j \text{ (AssignmentTo}_i\text{):} \quad \text{AssignedTo}_i \xrightarrow{\text{triv}} \text{NotAssignedTo}_i$$

(v2-d) $\text{RoRoServer}_j$: $i_! \to i + 1_?$, $\text{Client}_i$ ($\text{Service}_i$):

$$\text{With} \xrightarrow{\text{ready}} \text{Without}$$

(v2-e1) $\text{RoRoBroker}_j$: $i^? \to i + 1^?$, $\text{Client}_i$ ($\text{Service}_i$):

$$\text{With} \xrightarrow{\text{triv}} \text{Without}$$

(v2-e2) $\text{RoRoBroker}_j$: $i^? \to i + 1^?$, $\text{Client}_i$ ($\text{Service}_i$):

$$\text{Orienting} \xrightarrow{\text{triv}} \text{Orienting}$$

(v2-e3) $\text{RoRoBroker}_j$: $i^? \to i + 1^?$, $\text{Client}_i$ ($\text{Service}_i$):

$$\text{With} \xrightarrow{\text{triv}} \text{With}$$

(v2-g) $\text{Client}_i$: NoNeeds$\to$AtDesk

$$\text{Client}_i \text{ (Service}_i\text{):} \quad \text{Without} \xrightarrow{\text{triv}} \text{AuxWithout}$$

Note how we have replaced the one set of negative side rules (e) in the original solution by four sets of core rules in the variant 2 solution. The three sets (v2-e1), (v2-e2) and (v2-e3) are nearly side rules, as they do not change any current subprocess; but they do check whether the current subprocess from partition $\text{Service}_i$ is either Without or Orienting or With. Only in case the current subprocess is AuxWithout, RoRoBroker performs transition $i^? \to i^!$, provided that trap asking has been entered. The latter condition, however, is always fulfilled, because $\text{Client}_i$, on the moment of prescribing subprocess AuxWithout as expressed in rule (v2-g), simultaneously enters trap asking.

The side consistency rules for the Variant 2 solution cover the remaining transitions.

(v2-f) $\text{RoRoServer}_j\!:\!i_? \rightarrow i+1_?$,

(v2-h) $\text{Client}_i$: AtDesk→NeedClear

(v2-i) $\text{Client}_i$: NeedClear→UnderService

(v2-j) $\text{Client}_i$: UnderService→Satisfied

(v2-k) $\text{Client}_i$: Satisfied→NoNeeds

The idea underlying the Variant 2 solution can be used in general, in order to get rid of any negative side rule. We sketch it as follows: "duplicate" the subprocess, mentioned at the left-hand side of $\vartheta$ , possibly by prefixing its name by Aux; add the trivial trap to the original subprocess; remove trap $\vartheta$ mentioned above, from the original subprocess; adapt the consisting rules accordingly.

This finishes our Variant 2 solution.

4. Some Conclusions Concerning Part 1

The main result of Part 1 is, we have indeed succeeded in formulating operational semantics for all possible Paradigm models. Our delegation example shows the flexibility to apply the notions as well as their usefulness for clarifying a complicated coordination situation and expressing solutions for it.

Particularly self-management, a process being its own manager, seems to be a useful feature. In our example solutions self-management is used exclusively to enable delegation of a (relatively simple) part of the management (with respect to a certain partition) to the employee it concerns. The main manager, so to speak, takes the initiative of the coordination regarding that partition by prescribing a "special" subprocess to its employee, but only in certain favourable global circumstances; after that, it leaves it to the employee - this is the delegation - to proceed from there to a next subprocess, where this apparently does not depend on other comparably global circumstances.

Although the above delegation situation is only an example, the way we have specified the situation and its solutions, strongly suggests the usefulness of Paradigm for specifying all kinds of communication and coordination problems, situations and patterns. As a matter of fact, based on the same Paradigm notions, but at that time still without formal operational semantics for them, we have succeeded in specifying really large and complicated coordination situations and solutions. These situations range from multi-processor operating systems and real time systems to simulation problems, information systems, system integration, organisational processes, software processes, database management, object-orientation. It would be interesting to combine some of the older solutions with the new semantics and to derive relevant properties for these solutions.

In the past we also addressed evolution and mobility, but here we really felt the need for a more rigorous model specification, strictly in relation to semantics. The above set-up of Paradigm indeed provides such rigorous model specifications. Although this is an essential step towards specification of general evolution and mobility situations and solutions, with the results of Part 1 we have not yet reached a complete solution. The problem we are facing is, our semantics correspond to exactly one Paradigm model. But in general evolution situations we can have several Paradigm models: one model for a so-called first evolutionary phase, from which the evolution actually starts; another model for a second - or rather last - evolutionary phase, where the evolution actually stops; in addition, at least a third Paradigm model - but perhaps even a larger sequence of such models - specifies the migration from the first to the last evolutionary phase. The question then is, how do we relate these models and how do we relate the semantics for the separate models, such that we can reason about the whole by specifying them together, consistently? evolution, very briefly sketched in the next paragraph. This possibility, realized in our Part 2, constitutes a second and highly valuable result of the approach from Part 1.

Our operational semantics so far are based on a (fixed) Paradigm model, consisting of a (fixed) Cartesian frame and a (fixed) consistency rule base. We shall refer to this fixedness as *stationarity*. In the context of such a *stationary* Paradigm model we also call our operational semantics *stationary*. As a tentative answer to the above question of how to relate the semantics to the separate models, we sketch the following approach. We will relax the stationarity both of the Cartesian frame and of the consistency rule base towards a more malleable Cartesian frame as well as a more malleable consistency rule base. Moreover, both characterizations of being malleable, have to be well-integrated towards providing one context for specifying the various Paradigm models for the evolutionary phases including migration as if it is one *malleable* suite of Paradigm model, each model on its constituting a mode of the suite. All modes together should then specify how partly they are being moulded and partly they mould themselves into any (next mode needed in the suite. All this should take place in a well-structured, sufficiently gradual way. Here it turns out to be of great importance.

Part 2 of our paper is going to address this topic.

Our notion of malleable semantics allows us to specify evolution on-the-fly of a Paradigm model - i.e. a model that is in execution and remains so during migration - hand in hand with complete operational semantics for it. These semantics are not only valid during the first evolutionary phase of the model, but also during migration to a second phase as well as during this second phase, and from there towards and during later phases. It is the property of being malleable that gives the right elasticity to the semantics for remaining sufficiently,in line with the changing phases.

Part 2. Malleable Modelling

5. From Stationary Modelling to Malleable Modelling

In Part 1 we have introduced the notion of a Paradigm model together with operational semantics for it. Any situation covered by our notions so far, always consists of one fixed Paradigm model, $(Cf_1, cr_1)$ say. Both the Cartesian frame $Cf_1$ and the set of consistency rules $cr_1$ remain the same during all changes of current states and current subprocesses.

Let us now suppose, we have a process Q in our Cartesian frame $Cf_1$ containing the following transition sequence as presented in Figure 5.1.

**Figure 5.1** schematically depicts a particular transition sequence within process Q.

Furthermore, assume $X \xrightarrow{a} Y$ and $Y \xrightarrow{b} Z$ are the only transitions within process Q to reach state Y and state Z respectively. Finally, assume no consistency rule exists being applicable in state Y such that process Q indeed can perform transition $Y \xrightarrow{b} Z$. This means, state Z of process Q cannot be reached within the context of Paradigm model $(Cf_1, cr_1)$.

Suppose, furthermore, transition $X \xrightarrow{a} Y$ is performed only after a special activity in state X or before even reaching state X has been completed successfully. Thus action a can either represent this special activity or action a can represent the action of observing the termination of this special activity. This activity is actually performed by a Paradigm modeller and its successful completion means: the modeller from then on knows a new set of consistency rules according to which the current Paradigm model $(Cf_1, cr_1)$ can change itself into a new Paradigm model $(Cf_2, cr_2)$, as smoothly as needed during a sufficiently gradual migration from $(Cf_1, cr_1)$ to $(Cf_2, cr_2)$. Among the new consistency rules, there is a particular one serving as the migration's kick-off: a consistency rule that is applicable in state Y. So only now state Z can be reached. Note, state Y is the current state of process Q reached after transition $X \xrightarrow{a} Y$, which transition in turn guarantees the existence of the new rule set: just in time, so to say. Furthermore, all new rules other than the one applicable in state Y should be such that, roughly speaking, they are applicable only in global situations arising after state Z has been reached. Moreover, by reaching state Z, completely new behavior should become possible, in accordance with the migration towards the new model or eventually within the new model $(Cf_2, cr_2)$; all this new behavior is actually provided by the new rule set, just in time: immediately before the migration starts.

The above sketch thus is an example of JIT modelling: Just-In-Time modelling. If the modeller had known from the beginning how to model the new situation as well as how to model the migration from the old situation to the new situation, she would have added these new rules right from the beginning. Her impossible overall model would have specified a first period of behaving according to $(Cf_1, cry_1)$, a second period of migrating from $(Cf_1, cr_1)$ to $(Cf_2, cr_2)$ and a third period of behaving according to $(Cf_2, cr_2)$. But as she only knows how to do it immediately before process Q reaches state Y, she just adds the new rules then. Up to then the new rules were not applicable at all. Only from then on they can become applicable, each rule in due time. In addition, some of the new rules are rather special, in that they alter the Cartesian frame by creating or deleting processes or partitions, in accordance with the difference between the old model $(Cf_1, cr_1)$ and the new model $(Cf_2, cr_2)$.

In general, changing dynamic systems on-the-fly - while being in execution - is considered dangerous: for instance, it is possible to write imperative programs which alter their own statements, but they appear to be ill-structured or to become ill-structured, one should not write such programs. In line with the above sketch, however, we see new possibilities to model dynamic systems that can change on-the-fly in a sufficiently well-structured manner. The well-structuredness for changing dynamic systems on-the-fly has the following double basis:

- it is done in accordance with the Paradigm notions;
- it is done in accordance with a(n evolutionary) pattern for supporting the above JITting approach.

The pattern is named McPal, being an abbreviation of Modelling Changing Processes Ad Libitum. The idea of the pattern comes down to the following. We start with a Paradigm model $(Cf_1, cr_1)$, the old situation. Then new consistency rules needed for the migration from $(Cf_1, cr_1)$ to a new situation with Paradigm model $(Cf_2, cr_2)$, are being added just in time, JIT; thus we then have an intermediate Paradigm model

$$(Cf_1, cr_1 + cr_{mig} + cr_2).$$

Adding rules is not done by the model itself, but from outside, e.g. by a Paradigm modeller. This corresponds to the so-called *mouldability property* of the Paradigm models: the possibility to change the rules, by adding new ones before they become applicable or by removing present ones in a situation where they are not applicable.

By applying rules from $cr_{mig}$, the old Cartesian frame $Cf_1$ gradually changes via

$$Cf_{mig-1}, Cf_{mig-2}, \ldots, Cf_{mig-n}$$

into the eventual Cartesian frame $Cf_2$ we are after. During the migration the rule set according to which the subsequent Paradigm models make their global transitions, remains invariably

$$cr_1 + cr_{mig} + cr_2$$

Here the changes are done by the subsequent models themselves. This corresponds to the so-called *self-moulding property* of the (new kind of) Paradigm models we consider in this second Part.

As soon as Cartesian frame $Cf_2$ has been reached and moreover, as soon as within this frame the global transitions of the various processes remain restricted to what corresponds to the consistency rules from $cr_2$, the rules from $cr_1, + cr_{mig}$ can be discarded, as they should no longer be or become applicable. This again corresponds to the mouldability property, and like the addition of rules also the discarding is not done by the model itself but from outside.

Summarizing the types of changes, constituting the actual malleability we allow our new type of Paradigm models to exhibit, we have two categories of malleability:

- Paradigm models are *mouldable,* i.e. *from outside the model,* e.g. by a modeller, rules can be added, replaced or removed during the execution of the model in a global situation where they are not applicable;
- Paradigm models are *self-moulding,* i.e. *from inside the model* the rules themselves specify behavior able to alter the Cartesian frame of a model by creating or deleting processes or partitions.

Already our original Paradigm models are mouldable in this sense, like all programs and all models are. But without the property of being self-moulding we lack a sufficiently nice structuring feature of the malleability we need in formalizing the evolutionary phenomena we want to specify. Thus the well-known but really ill-structured notion of malleability - saying a program and also a model can change at all times - gets a certain structure, by discriminating between being mouldable and being self-moulding and by carefully combining these properties with the Paradigm notions. In particular it is important to note, the moulding from outside should be such that the self-moulding indeed can happen well-structured.

So starting from the model $(Cf_1, cr_1)$ we use its being mouldable by changing this model into the first intermediate model $(cf_1, cr_1 + cr_{mig} + cr_2)$. Based on the other property of being self-moulding the following suite of intermediate models is generated autonomously, on the basis of the rule set only, one after the other

$$(Cf_1, cr_1 + cr_{mig} + cr_2), (Cf_{mig-1}, cr_1 + cr_{mig} + cr_2), \ldots$$

$$\ldots, (Cf_{mig-n}, cr_1 + cr_{mig} + cr_2), (Cf_2, cr_1 + cr_{mig} + cr_2).$$

From there we end up with $(Cf_2, cr_2)$ by removing the then superfluous rules, thus using the model's property of being mouldable for the second time.

The details of the above sketch are actually quite complicated. To clarify the details, the remainder of Part 2 has the following structure. Section 6 gives an extension of consistency rules, covering the self-moulding changes of a Cartesian frame.

Operational semantics for these extensions are also given. In Section 7 we present the evolutionary pattern McPal, according to a template similar to the one in [Gamma, ref. 2]. The McPal pattern explicitly separates the use of the properties of being mouldable and of being self-moulding. Sections 8 and 9 offer two applications of McPal. In Section 8 we formulate the relatively simple situation of one server with n potential clients evolving into the above delegation example from Part 1, consisting of one broker and m servers with n potential clients. In Section 9 we present a substantially more complicated situation of further evolving the delegation example towards one broker and m servers for potentially infinitely many clients, where the brokering as well as the various local serving orders are the order of (local) arrivals (FIFO).

6. Malleable Paradigm with Self-Moulding Semantics

This section is similar to Section 2, as it presents the analogues of Definitions 2.1, 2.2 and 2.3 in the extended form of Definitions 6.1, 6.2, 6.3 and 6.4 in view of Paradigm models having to be both mouldable and self-moulding. As it turns out, Definition 6.1 only slightly extends Definition 2.1 by allowing partitions that are not covering. This means, only part (c) of Definition 6.1 differs from Definition 2.1. We nevertheless mention the unchanged notions briefly, by referring to the corresponding parts of Definition 2.1.

Definition 6.1.

*A process P* is a tuple (st(*P*), ac(*P*), ts(*P*) ) consisting of a set of states, a set of actions and a set of transitions, as formulated in Definition 2.1.a.

*A subprocess S* of a process P is a tuple ( restr(*P*), trps(*S*)) consisting of a restriction of P, being a process itself, and a set of *traps* of the various subprocesses, as formulated in Definition 2.1.b.

A partition $\pi$ of a process P, also denoted as P($\pi$), is a collection { Si | i $\in$ I } of subprocesses of P. If moreover

$$st(P) = \bigcup_{i \in I} st(S_i), \ ac(P) = \bigcup_{i \in I} ac(S_i) \text{ and } ts(P) = \bigcup_{i \in I} ts(S_i)$$

we call partition $\pi$ covering.

So apparently we start from essentially the same kernel notions of subprocess and trap as in the stationary case. This means, the syntax of our modelling language underlying the self-moulding semantics is the same as for the stationary case. Note, the new definition of partition generalizes the old one, by allowing non-covering partitions. In contrast to Definition 2.2, Definition 6.2 and 6.3 together do not specify one fixed Paradigm model but one appearance thereof out of a whole suite of such appearances. Such an appearance of a Paradigm model, like the above Paradigm model, is again denoted as (Cf, cr) as it also consists of a Cartesian frame Cf and a set of consistency rules cr. In this case however, the consistency rules can have the special property of changing Cartesian frame Cf into a new frame. The special property is called *moulding.* Note, the rules do not mould themselves but the Cartesian frame. Hence we do not call the rules *self*-moulding. What is self-moulding is the appearance of the Paradigm model denoted as the pair (Cf, cr). To underline the temporary character of the pair (Cf, cr) we call such a self-moulding pair a *Paradigm model mode,* rather than a Paradigm model.

Moulding consistency rules actually constitute the basis for changing - moulding - the (current) Cartesian frame Cf into another frame, with less or more processes or with less or more partitions. In addition it is specified by a moulding rule, in which state a new process will start and , similarly, in which subprocess a new partition will start.

Remember that on the basis of Definition 2.2 a consistency rule on its own does not bring about the combined state and subprocess changes: it only specifies the possibility of a specific change combination depending on conditions to be fulfilled (by the actual global configuration defined later). Similarly, a moulding consistency rule on its own will not bring about the actual moulding, as this moreover depends on additional local as well as global consistency conditions. These are covered by Definition 6.4 further down.

But we first present the new form of consistency rules in Definitions 6.2 and 6.3, together extending Definition 2.2. To be more precise, Definition 6.2 concentrates on extending part a of Definition 2.2, by introducing apart from the subprocess change four more ingredients for the later consistency rules: a partition creation, a process creation, a partition deletion and a process deletion. These five types of ingredients for consistency rules are formulated in a setting where the concrete Cartesian frame spanning the current states and current subprocesses can change too.

Definition 6.2

Let Cf be a Cartesian frame

$$\left\langle P_i, \left\langle \pi_{i,j} \right\rangle_{j \in J_i} \right\rangle_{i \in I}$$

Let $\hat{C}f$ be a second Cartesian frame

$$\left\langle P_i, \left\langle \pi_{i,j} \right\rangle_{j \in \hat{J}_i} \right\rangle_{i \in \hat{I}} \quad \text{with } \hat{I} \supseteq I \text{ and } \hat{J}_i \supseteq J_i \text{ for all } i \in \hat{I};$$

frame $\hat{C}f$ is said to be larger than Cf or, conversely, Cf is said to be smaller than $\hat{C}f$, denoted as $Cf \leq \hat{C}f$.

Furthermore, let $I^c = \hat{I} - I$ and let $J_i^c = \hat{J}_i - J_i$ for all $i \in \hat{I}$, each denoting the usual complement of the smaller index set within the larger; in addition, 1define $J_i = \varnothing$ for all $i \in I^c$.

(a)
*A partition creation* of $\pi_{n,p} \in \pi_{n,p}$ (being a partition of process $P_n$) is defined in relation to the Cartesian frames Cf and $\hat{C}f$, only if n E I and $p \in J_n^c$. Such a partition creation is denoted as

$$P_n \text{ (create } \pi_{n,p}): \bullet \rightarrow Z_{n,p}$$

subprocess $Z_{n,\,p}$ is called the starting subprocess of partition $\pi_{n,\,p}$.
The creation of more than one partition $\pi_{n,\,pl}, ..., \pi_{n,\,pr}$ of the same process $P_n$ starting in subprocesses $Z_{n,\,pl}, ..., Z_{n,\,pr}$ respectively, is denoted as

$$P_n \text{ (create } \pi_{n,p_1}, ..., \pi_{n,p_r}): (\bullet \rightarrow Z_{n,p_1}, ..., \bullet \rightarrow Z_{n,pr});$$

(the shorthand notation for) a combined creation of (different) partitions of the same process is referred to as the combined form of the separate creations.
(b)
A process creation of $P_n$ starting in state $s \in st(P_n)$ as well as in subprocesses $Z_{n,p1} \in \pi_{n,p1}, ..., Z_{n,pr} \in \pi_{n,pr}$ is defined in relation to the Cartesian frames Cf and $\hat{C}f$, only if $n \in I^c$, $p_1, ..., p_r \in J_n^c$ and $s \in st(Z_{n,p1}) \cap ... \cap st(Z_{n,pr})$. Such a process creation is denoted as

$$\text{create } P_n (\pi_{n,p_1}, ..., \pi_{n,p_r}): (\bullet \rightarrow s, \bullet \rightarrow Z_{n,p_1}, ..., \bullet \rightarrow Z_{n,p_r})$$

where s is called the starting state of $P_n$ and where $Z_{n,pj}$ is called the starting subprocess of partition $\pi_{n,Pj}$.
(c)
A partition deletion $\pi_{n,p}$ (within subprocess $Z_{n,p} \in \pi_{n,\,p}$ in trap $\pi_{n,p} \in tr(Z_{n,p})$) is defined in relation to the Cartesian frames Cf and $\hat{C}f$, only if $n \in I$, $p \in J_n$. Such a partition deletion is denoted as

$$P_n \, (\text{delete } \pi_{n,p}) : (Z_{n,p} \xrightarrow{\tau_{n,p}} \odot)$$

Similar to the notation for the creation of more than one partition, the deletion of more than one partition $\pi_{n,p1}$ ,..., $\pi_{n,pr}$ of the same process $P_n$ is denote as:

$$P_n \, (\text{delete } \pi_{n,p_1} , \ldots, \pi_{n,p_r}) : (Z_{n,p_1} \xrightarrow{\tau_{n,p}}, \ldots, Z_{n,p_r} \xrightarrow{\tau_{n,q}} \odot)$$

Similar to the notation for the creation of more than one partitions, the deletion of more than one partitions $\pi_{n,p1}$,..., $\pi_{n,Pr}$ of the same process $P_n$ is denoted as

**(d)**

A process deletion of $P_n$ (within subprocesses $Z_{n,pl} \in \pi_{n,pl}$,.... $Z_{n,pr} \in \pi_{n,Pr}$ in traps $\tau_{n,p1} \in \text{tr}(Z_{n,p1}),...,\tau_{n,pr} \in \text{tr}(Z_{n,pr})$, respectively) is defined in relation to the Cartesian frames Cf and Ĉf , only if $n \in I$, $\{p_1,..., p_r\} = J_n$. Such a partition deletion is denoted as

$$\text{delete } P_n \, (\pi_{n,p_1}, \ldots, \pi_{n,p_r}) : (Z_{n,p_1} \xrightarrow{\tau_{n,pl}} \cdots \cdots, \ldots, Z_{n,p_r} \xrightarrow{\tau_{n,p_r}} \odot)$$

**(e)**

*A subprocess change (from Z to Z' via trap τ of Z)* within a partition $\pi n$, $p$ of a process $P_n$ is defined as formulated in Definition 2.2a, but in this case in relation to the Cartesian frames Cf and Ĉf

The slightly altered notation of a subprocess change additionally refers to the relevant partition coordinate of the Cartesian frame Cf:

$$P_n (\pi_{n,p}) : Z \xrightarrow{\tau} Z'$$

**(f)**

Process and partition creation, process and partition deletion and subprocess change are collectively called global changes in relation to Cartesian frames Cf and Ĉf. The different sets of conditions as formulated in parts (a) - (e) are called the well-formedness conditions of the various global changes in relation to the Cartesian frames Cf and Ĉf . Of the global changes, process and partition creation and process and partition deletion are moreover called (frame-) moulding or, more concretely in relation to the particular Cartesian frames Cf and Ĉf , Cf-moulding (within the larger frame Cf).

The main difference between Definitions 2.2.a and 6.2 is in the four frame-moulding global changes. They constitute four new types of ingredients for the later consistency rules, to be used together with the older ingredient, the global change referred to as subprocess change. The four new global changes substantially extend the range of effects our later consistency rules can have (when applied), as these new global changes allow for transforming the Cartesian frame Cf into a new frame. Compared to C*f*, the new frame can be extended with a new partition for an already present process (partition creation) or it can be extended with a whole new process complete with a new set of partitions (process creation); or the new frame can be trimmed of a partition recently belonging to a still remaining process (partition deletion) or it can be trimmed of a whole process complete with all partitions it recently had (process deletion).

It might seem a bit tedious but it is certainly clarifying to recognize in Definition 6.2.a - 6.2.e, how the detailed conditions on the various indices for processes and partitions support these kinds of extensions and trimmings in isolation. In addition, in the case of a subprocess change via a trap, the trap has to be connecting; in the case of a process creation in a state and a collection of subprocesses, the starting state has to belong to the states of each of the starting subprocesses; in the cases of the two types of deletion within one or more subprocesses in one or more traps, the traps have to be trap of the corresponding subprocess. Without these rather detailed conditions the global change as such does not make sense. Hence these well-formedness conditions form a minimal requirement for a global change to figure as an ingredient of a consistency rule. Substantially more is needed, however, as we shall point out, to prevent unwanted combinations of global changes within one rule.

Even in the case of the stationary semantics, where we only had subprocess changes as ingredients for consistency rules, a mild but nevertheless substantial, additional condition has been formulated for subprocess combinations within one rule: no two subprocess changes occurring in one consistency rule may refer to the same partition. A similar idea is used, in a rather more general form, as the last condition in part (b) of Definition 6.3. The formulation of that particular condition is based on the function $\omega_{Cf}$, introduced in the preceding part (a) of Definition 6.3 to this specific aim. The intuitive idea of the function is, it gives the indices of the coordinate axes in relation to the Cartesian frames Cf and $\hat{Cf}$ as far as relevant for one global change. The specific last condition in part (b) of Definition 6.3 actually implies, no two global changes within the same consistency rule may have an influence on a shared dimension; this should exclude different and therefore possibly inconsistent effects within the same partition coordinate or within the same process coordinate.

But there is even more. One global change always is in relation to one smaller Cartesian frame Cf and one larger Cartesian frame $\hat{Cf}$ . The smaller frame Cf is the one concrete Cartesian frame, as it is on the particular moment the global change could be effectuated. If moreover the global change is *Cf*-moulding and if indeed it is going to be effectuated, as a result frame Cf shall be changed into another frame *Cf',* still smaller than Cf , either diminished or extended with a partition, or even with a whole process with its partitions, depending on the particular character of global change. The larger frame $\hat{Cf}$ thereby serves as a kind of fixed upper limit within which the smaller (current) frame can grow and shrink.

For the well-formedness of one rule this has the further consequence, all global changes belonging to it are in relation to the *same* smaller frame and the fixed larger frame. A set of rules however, should allow subsequent applicability of its rules. So in general it must contain rather different rules each of which is well-formed with respect to another, *different* smaller frame within the fixed larger frame. The possibility of having different frames, is reflected in Definition 6.3 by means of the term Paradigm model *mode.*

The notion of a Paradigm model mode comes rather close to the older notion of a Paradigm model, be it that one, current model mode can be succeeded by another as the next model mode - with the same set of consistency rules cr and. a new Cartesian frame *Cf'.* This however, is outside the scope of Definition 6.3: how a specific new frame Cf indeed results from applying a specific consistency rule in relation to a specific current frame *Cf*, is specified by Definition 6.4. Definition 6.3 concentrates on the well-formedness of a consistency rule.

Definition 6.3.

Let $Gc_{Cf}$ be a (sufficiently large) set of well-formed global changes in relation to two Cartesian Cf and $\hat{Cf}$ , where Cf is smaller than the fixed frame $\hat{Cf}$ .

Furthermore, let $Gc = \bigcup_{Cf \leq \hat{Cf}} Gc_{Cf}$ be a (sufficiently large) set of all global changes, well-formed in relation to whatever Cartesian frame Cf smaller than the fixed Cartesian frame $\hat{Cf}$ .

(a)
Any index pair (n, p) with $n \in \hat{I}$ and $p \in \hat{J}_n \cup \{*\}$ is called a $\hat{Cf}$ -orientation; the set of all $\hat{Cf}$ -orientations is denoted as $\Omega_{\hat{Cf}}^{\wedge}$ . In the remainder of this definition we will use $\Omega$ instead of $\Omega_{\hat{Cf}}^{\wedge}$
The function $\omega : Gc \rightarrow 2^{\Omega}$, called orientator, with $2^{\Omega}$ the power set of $\Omega$ is defined depending on the different types a global change gc can be of, in relation to Cf and $\hat{Cf}$ :

- - (subprocess change) $\omega(gc) = \{(n,p)\}$ if $gc = P_n(\pi_{n,p})$: $Z \xrightarrow{\tau} Z'$,

- - (partition deletion) $\omega(gc) = \{(n,p)\}$ if $gc = P_n(\text{delete } \pi_{n,p})$: $Z \xrightarrow{\tau} \odot$,

- - (partition creation) $\omega(gc) = \{(n, *),(n, p_1), ..., (n, p_r)\}$

if $gc = P_n (\text{create } \pi_{n,p1}, ...., \pi_{n,p})$: $\bullet \longrightarrow Z'_{n,p_1}, ..., \bullet \longrightarrow Z'_{n,p_r})$

- - (process creation) $\omega(gc) \{(n, *),(n,p_1), ..., (n, p_r)\}$

if $gc = \text{create } P_n(\pi_{n,p1}, ...., \pi_{n,pr})$: $(\bullet \longrightarrow s', \bullet \longrightarrow Z'_{n,p_1}, ..., \bullet \longrightarrow Z'_{n,p_r})$

- - (process deletion) $\omega(gc) = \{(n, *),(n, p_1), ..., (n, p_r)\}$

if gc = delete $P_n$ $(\pi_{n,p1},...,\pi_{n,pr})$: $( Z_{n,p_1} \xrightarrow{\tau_l} \odot, \ ..., \ Z'_{n,p_r} \xrightarrow{\tau_r} \odot)$

**(b)**
A Paradigm model mode II (within the larger frame $\hat{C}f$) is a tuple (Cf, cr) consisting of the Cartesian frame Cf and of a set cr of consistency rules r of the form

$$r = P : s \xrightarrow{a} s', \langle gc \rangle_{gc \in Gc_r}$$

(b1) with P one of the processes $P_i$, $i \in I$,

(b2) with $s \xrightarrow{a} s' \in tr(P)$,

with $Gc_r \subseteq Gc$ a subset of the global changes, occurring as ingredients of rule r, such that
(b3) any global change $gc \in Gc_r$ is well-formed in relation to the same smaller Cartesian frame Cf and the fixed larger Cartesian frame $\hat{C}f$,
(b4) for each process $P_i$, $i \in I$, at most one $gc \in Gc_r$ exists with gc a partition creation, possibly in combined form, of partitions in $P_i$,
(b5) $\omega(gc_1) \cap \omega(gc_2) = \emptyset$ for any two global changes $gc_1$, $gc_2 \in Gc_r$, with $\omega$ be the orientator of Gc.

These five conditions together constitute the so-called well-formedness of a consistency rule r in relation to the Cartesian frames Cf and $\hat{C}f$. A consistency rule containing a Cf-moulding global change as an ingredient, is itself called Cf-moulding.
It is not hard to see, the "mild" conditions given in Definition 2.2 defining a consistency rule, coincide with the well-formedness of a consistency rule as formulated in Definition 6.3 in case the consistency rule contains only subprocess changes as global changes. So the situation of stationary semantics, without any *Cf*-moulding rules in relation to whatever smaller frame Cf (now fixed), is apparently contained in the situation of where semantics are malleable.
Furthermore, it is worthwhile to note, condition b5 often is at the basis of properties like:

- deleting a process cannot be combined with a subprocess change within a partition of that process, within the same consistency rule;
- creating a process cannot be combined with deleting a partition of that process, within the same consistency rule;
- creating a partition of an already existing process cannot be combined with deleting that process, within the same consistency rule;
- creating a number of partitions of the same process can be combined with deleting already existing partitions of the same process;
- creating a process can be combined with deleting already existing processes.

As should be kept in mind, our properties so far have to do with well-formedness only. In which concrete, i.e. "current" situation they make sense indeed, is specified by Definition 6.4, similar to Definition 2.3 in the situation of stationary semantics. Even the structure of both definitions is equal. The differences are in the details of the notion of applicability as well as in the details of the notion of a global (mode) transition, where we have to consider different cases according to the different types of global changes. We shall come back to these differences right after the definition.

Definition 6.4.

Let II = (Cf, cr) be a Paradigm model mode within a larger frame $\hat{C}f$, with Cf and $\hat{C}f$ specified as

$$Cf = \left\langle P_i, \left\langle \pi_{i,j} \right\rangle_{j \in J_i} \right\rangle_{i \in I},$$

$$\hat{C}f = \left\langle P_i, \left\langle \pi_{i,j} \right\rangle_{j \in \hat{J}_i} \right\rangle_{i \in \hat{I}} \text{ with } \hat{I} \supseteq I \text{ and } \hat{J}_i \supseteq J_i \text{ for all } i \in \hat{I}$$

(a)

A local configuration of process $P_i$ is II is a tuple, possibly labelled,

$$P_i : (s, \left\langle \pi_{i,j} : S_{i,j}, \ldots \vartheta_{i,j} \right\rangle_{j \in J_i})$$

as formulated in Definition 2.3.a. To underline that II is a Paradigm model mode instead of a Paradigm model, we alternatively call such a local configuration a *local mode configuration.*

(b)

*A global (mode) configuration,* also called a *global (mode) state,* of Paradigm model mode $\Pi$ is a tuple, possibly labelled,

$$\left\langle P_i : (s_i, \left\langle \pi_{i,j} : S_{i,j}, \ldots \vartheta_{i,j} \right\rangle_{j \in J_i}) \right\rangle_{i \in I}$$

of length #*I* of local mode configurations, one for each process $P_i$. Apart from the addition *mode,* it is the *same formulation* as in Definition 2.3.b.

(c)

Let Gc be the set of all global changes well-formed in relation to whatever smaller frame *Cf* of $\hat{C}f$ and the fixed larger frame Cf.

Let GloC be a global configuration of II, specified as

$$GloC = \left\langle P_i : (s_i, \left\langle \pi_{i,j} : S_{i,j}, \vartheta_{i,j} \right\rangle_{j \in J_i}) \right\rangle_{i \in I}$$

Let $k \in I$ be a process label occurring in Cartesian frame Cf.

A consistency rule $r \in cr$, well-formed in relation to Cf and $\hat{C}f$ and specified as

$$r = P_k : z \xrightarrow{\ a\ } z', \left\langle gc \right\rangle_{gc \in Gc_r}, \text{ with } Gc_r \subseteq Gc$$

is called applicable in GloC (within the limiting frame $\hat{C}f$) if

(c1) $z = s_k$,

(c2) $z \xrightarrow{\ a\ } z' \in tr(S_{k,j}) \text{ for all } j \in J_k$      for all $gc \in Gc_r$ with gc a subprocess change written as

$$gc = P_i (\pi_{i,j}) : Z_{i,j} \xrightarrow{\ \hat{\vartheta}_{i,j}\ } Z'_{i,j}$$

(c3-subcha) $Z_{ij} = S_{i,j}$ and

(c4-subcha) $\hat{\vartheta}_{i,j} \supseteq \vartheta_{i,j}$

for all $gc \in Gc_r$ with gc a partition deletion written as

$$gc = P_i \, (delete \, \pi_{i,j}) : Z_{i,j} \xrightarrow{\hat{\vartheta}_{i,j}} \odot$$

(c3-pardel) $\underset{\wedge}{Z}_{i,j} = S_{i,j}$ and
(c4-pardel) $\hat{\vartheta}_{i,j} \supseteq \vartheta_{i,j}$
for all gc $\in$ Gc$_r$ with gc a process deletion written as

$$gc = delete \, P_i \, (\pi_{i,j_1}, \ldots, \pi_{i,j_p}) : (Z_{i,j_1} \xrightarrow{\hat{\vartheta}_{i,jj}} \odot, \ldots, Z_{i,j_p} \xrightarrow{\hat{\vartheta}_{i,jp}} \odot$$

(c3-prodel) $\underset{\wedge}{Z}_{i,j1} = S_{i,j1}, \ldots, Z_{i,jp} = S_{i,jp}$
(c4-prodel) $\hat{\vartheta}_{i,j1} \supseteq \vartheta_{i,j1}, \cdots, \hat{\vartheta}_{i,jp} \supseteq \vartheta_{i,jp}$
for all gc $\in$ Gc$_r$ with gc a partition creation or a process creation there are no addition condition pairs.
The conditions (c1) and (c2) together are called the local consistency conditions (with respect to the local configuration of process P$_k$); the conditions (c3-..) and (c4-..) together are called the global consistency conditions.

**(d)**
Let GloC be a global configuration of Paradigm model mode $\Pi$ = (Cf, cr), specified as

$$GloC = \left\langle P_i : (s_i, \left\langle \pi_{i,j} : S_{i,j}, \hat{\vartheta}_{i,j} \right\rangle_{j \in J_i}) \right\rangle_{i \in I}$$

and let GloC' be a global configuration of another Paradigm model mode $\Pi'$ = (Cf', cr) specified as

$$GloC' = \left\langle P_i : (s'_i, \left\langle \pi_{i,j} : S'_{i,j}, \hat{\vartheta}_{i,j} \right\rangle_{j \in J'_i}) \right\rangle_{i \in I'}$$

both Π and Π' are Paradigm model modes within the same larger Cartesian frame $\hat{Cf}$, with process index set $\hat{I}$ and with for each i $\in$ $\hat{I}$ a partition index set $\hat{J}_i$.
Let Gc be the set of all global changes well-formed in relation to whatever smaller frame Cf of $\hat{Cf}$ and the fixed larger frame $\hat{Cf}$. Let $\omega$ be the orientator defined on Gc.
Define

- $I^+ = I' \backslash I$ : the set of process indices belonging to frame Cf' and not to Cf,
- $I^- = I \backslash I'$: the set of process indices belonging to frame Cf and not to Cf',
- $J_i^+ = J'_i \backslash J_i$, for each i $\in$ I $\cap$ I' : where the two frames have a process coordinate in common, the set of partition indices belonging to frame Cf and not to Cf',
- $J_i^- = J_i \backslash J'i$ , for each i $\in$ I $\cap$ I': where the two frames have a process coordinate in common, the set of partition indices belonging to frame Cf and not to Cf',

A global (mode)(configuration) transition from GloC (in frame Cf) to GloC' (in frame Cf') is a pair (GloC, GloC'), also written as GloC $\rightarrow$ GloC', provided a well-formed consistency rule r $\in$ cr exists with

$$r = P_k : z \xrightarrow{a} z', \left\langle gc \right\rangle_{gc \in Gc_r},$$

with Gc$_r$ $\subseteq$ Gc such that
(d1) $I^+ = \{i \in I \,|: (i, *) \in \omega \, (gc) \wedge gc \in Gc_r$ is a process creation$\}$,
(d2) $I^- = \{i \in I \,|: (i, *) \in \omega \, (gc) \wedge gc \in Gc_r$ is a process deletion$\}$,
(d3) $\forall i \in I \cap I': J_i^+ = \{j \in J_i| : (i, j) \in \omega(gc) \wedge gc \in Gc_r$ is a partition creation$\}$,

(d4) $\forall i \in I \cap I': J_i^- = \{j \in \hat{J}_i|: (i, j) \in \omega(gc) \wedge gc \in Gc_r \text{ is a partition deletion}\}$,

(d5) $V\ i \in I^+ : J'_i = \{j \in \hat{J}\ | : (i, j) \in \omega(gc) \wedge gc \in Gc_r \text{ is a process creation}\}$,

(d6) $V\ i \in I^-: J_i = \{j \in \hat{J}_i\ |: (i, j) \in \omega(gc) \wedge gc \in Gc_r \text{ is a process deletion}\}$,

(d7) $s_i = s'_i$ if $i \in I \cap I'$ and $i \neq k$,

(d8) $$S_{i,j} = S_{i,j} \text{ if } i \in I \cap I' \text{ and } j \in J_i \cap J'_i \text{ and } (i, j) \notin \bigcap_{gc \in Gc_r} \omega(gc),$$

(d9) consistency rule r is applicable in global mode configuration GloC,

(d10) $z'_k = S'_k$ if $k \notin I^-$,

(d11) $Z'_{i,j} = S'_{i,j}$ if $(i, j) \in \omega(gc)$ with $gc \in Gc_r$ a subprocess change written as

$$gc = P_i(\pi_{i,j}) : Z_{i,j} \xrightarrow{\hat{\vartheta}_{i,j}} Z'_{i,j}$$

(d12) $Z'_{i,j} = S'_{i,j}$ if $(i, j) \in \omega(gc)$ with $gc \in Gc_r$ a partition creation written as

$$gc = P_i(create\ \pi_{i,j}) :: \bullet \longrightarrow Z'_{i,j}$$

(d13) $Z'_{i,j} = S'_{i,j}$ if $(i, j) \in \omega(gc)$ with $gc \in Gc_r$ a process creation written as

$$gc = create\ P_i(\ \pi_{i,j_1}, \ldots, \pi_{i,j_p}) : (\ \bullet \longrightarrow z'_i, \bullet \longrightarrow Z'_{i,j_1}, \ldots, \bullet \longrightarrow Z'_{i,j_p}\ )$$

(d14) $z'_i = s'_i$ if $(i, *) \in \omega(gc)$ with $gc \in Gc_r$ a process creation written as

$$gc = create\ P_i(\ \pi_{i,j_1}, \ldots, \pi_{i,j_p}) : (\ \bullet \longrightarrow z'_i, \bullet \longrightarrow Z'_{i,j_1}, \ldots, \bullet \longrightarrow Z'_{i,j_p}\ )$$

Consistency rule r is called a (semantical) basis for the global mode configuration transition GloC → GloC'. To underline even more, a specific rule serves as basis for a specific global mode transition, we also write

$$GloC \xrightarrow{r} GloC'$$

Parts (a) and (b) of Definition 6.4 are essentially the same as the first two parts of Definition 2.3. The larger differences come with part (c). It is easy to see, the local conditions of the two definitions are equal. It is as easy to see, the new global conditions (c3-subcha) and (c4-subcha) are precisely the old global conditions (c3) and (c4). Furthermore, it is clarifying to observe separate cases for a partition creation as well as for a process creation are altogether missing; the reason being, applicability has to do with the global mode configuration as-is; whereas any creational ingredient of a consistency rule does not contain much being relevant for the as-is configuration, particularly not in terms of subprocesses and traps *of the new partition(s),* as applicability has to do with the global mode configuration **preceding** a global mode transition; such subprocesses and traps simply do not yet exist. In contrast, the two cases for a partition deletion and for a process deletion - the two conditions (c3-pardel) and (c4-pardel) and the two conditions (c3-prodel) and (c4-prodel) respectively - just concentrate on the very subprocess(es) and trap(s) *of the current partition(s)* indeed *preceding* a possible global transition. It so happens, these condition pairs are very similar to the one pair for the subprocess change case - which in itself could have been expected.

Even larger differences come with part (d) of the above definition. This should not be surprising, as the possible effects of one consistency rule have a substantially larger range now, allowing for creations and deletions of partitions and of processes. Conditions (d1) - (d6) cover the frame changes. Together they are of a completely new but rather similar character. Conditions (d7) - (d10) are - the direct analogues of the first four conditions in part (d) of Definition 2.3; the relatively small differences are in terms of dimension indices only, as now the Cartesian frame of the current global mode configuration can differ from the frame of the next global mode configuration.

Condition (d11) is the direct analogue of the last condition in part (d) of Definition 2.3: it covers the case of a subprocess change. Furthermore, it is clarifying to observe, contra-symmetrical to the situation for applicability in part (c), separate cases for a partition deletion as well as for a process deletion are altogether missing; here the reason being, a global transition, in addition to applicability in the current global mode configuration, has to do with the global mode configuration to-be; whereas any partition or process deleting ingredient of a consistency rule does not contain much being relevant for the to-be configuration, particularly not in terms of subprocesses and traps *of the old partition (s),* as a global mode transition, apart from applicability, has to do with the global mode configuration **succeeding** it; such subprocesses and traps simply do not exist anymore. But the case for a partition creation and for a process creation are present, covered by conditions (d12 - (d14). Note, the concrete starting state of a newly created process is covered by condition (d14), whereas the concrete starting subprocess of a newly created process are covered condition (c13).

Here ends our discussion of the formal notions underpinning our malleable semantics. How we bring these new notions to bear, is the topic of the next section, introducing a specific pattern, called McPal. Via the McPal pattern we are able to specify how, on the basis of the above notions, a concrete migration from any existing situation - a seemingly stationary Paradigm model - to any new situation - a likewise seemingly stationary Paradigm model - can be organised, i.e devised (formally conceived, designed, modelled) as well as enacted (carried through, implemented, realised).

7. The Evolutionary Approach McPal: Modelling Changing Processes Ad Libitum

The roughly sketched evolutionary approach for supporting JIT modelling on the basis of selfmoulding semantics is so generic, that we prefer to present it as a pattern, called McPal. The genericity actually is two-fold. The kind of cooperating processes covered must be expressible as a Paradigm model (mode). Modelling experience over more than 15 years has learned, all kinds of coordination situations, management situations, simulation situations, scheduling situations can be expressed in Paradigm. This means, the McPal approach certainly covers all kinds of such situations as long as they make up for a first isolated evolutionary phase. In addition, there is no restriction for any such evolutionary phase to change into whatever other evolutionary phase of a similar kind. So, basically any set of cooperating processes can evolve into any other set of cooperating processes. As long as there is some freedom in choosing a migration trajectory - the requirements for it have to be feasible - the McPal approach also covers any form of evolution. Such a wide applicability range makes McPal a good candidate for a pattern.

Usually, however, a pattern is recognized only after having been applied to may different situations. But for McPal this does not make sense, as the malleable semantics on which it is based, are being introduced in this same paper. So we cannot refer to other experience and insight with respect to the McPal approach. Therefore, we first explain the technical details of the McPal approach, particularly those based on the Paradigm notions for the malleable semantics.

After that, in a second subsection, we summarize the McPal approach in the form of a pattern, thereby adding clarifying structure to the approach, this bringing McPal somewhat closer to the object-oriented concepts from UML, version 2.0.

7.1. How to Evolve, At Leasure as well as Ad Libitum

In Part 1 we have introduced the Paradigm notions covering the stationary modelling situation of having one Paradigm model, where processes, partitions and consistency rules remain fixed. In Section 5, the introduction to Part 2, we have roughly sketched how a model mode, while executing its first phase behavior, can be changed: first by adding new consistency rules to it covering a second mode phase as well as a migration from the first to the second phase - moulding the model, from the outside, on-the-fly; second by letting the model mode modify itself on the basis of the rules recently added - self-moulding of the model mode, like-wise on-the-fly; third by removing those consistency rules covering the first phase and the migration - moulding the model mode once more, on-the-fly, either by moulding it from the outside or by self-moulding.

In Section 6 we have presented the (new) consistency rules together with their operational semantics, allowing for self-moulding, a carefully restricted or rather a carefully well-structured form of self-modification directly based on the Paradigm notions of subprocess and trap. In the current section, Section 7, we introduce a complete approach for integrating the moulding as well as the self-moulding of a model with that very model while it remains in execution, i.e. on-the-fly. The approach presented is in line with the sketch given in Section 5. Although our presentation is quite detailed, it also is extremely generic as the approach can be applied to changing an "arbitrary" (first) Paradigm model into an "arbitrary" next (second) one, where possible migration trajectories range from fairly straightforward to wildly meandering. The only restriction to the arbitrariness of such models is, they all have an additional component, responsible for guiding the global behavior by specifically keeping it in conformance to the evolutionary level of the problem situation. It is in terms of this kind of global behavior, the Paradigm notions give such a well-structuredness to the solution as a whole, that required behavioral consistency can be guaranteed over the various evolutionary phases: from the first phase (corresponding to the first model) to the second (corresponding to the second model) and particularly so during the migration.

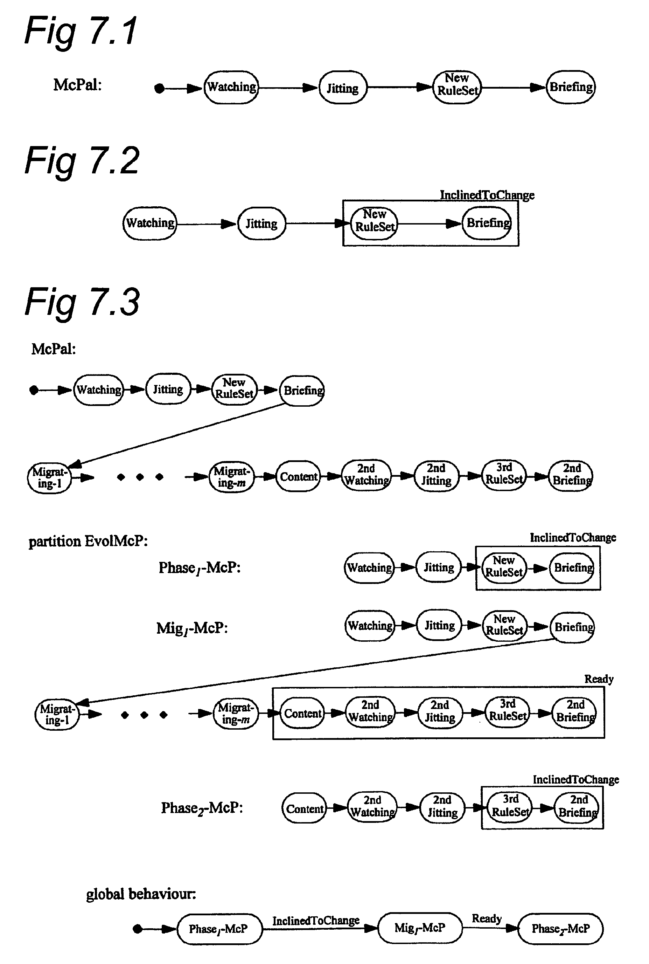

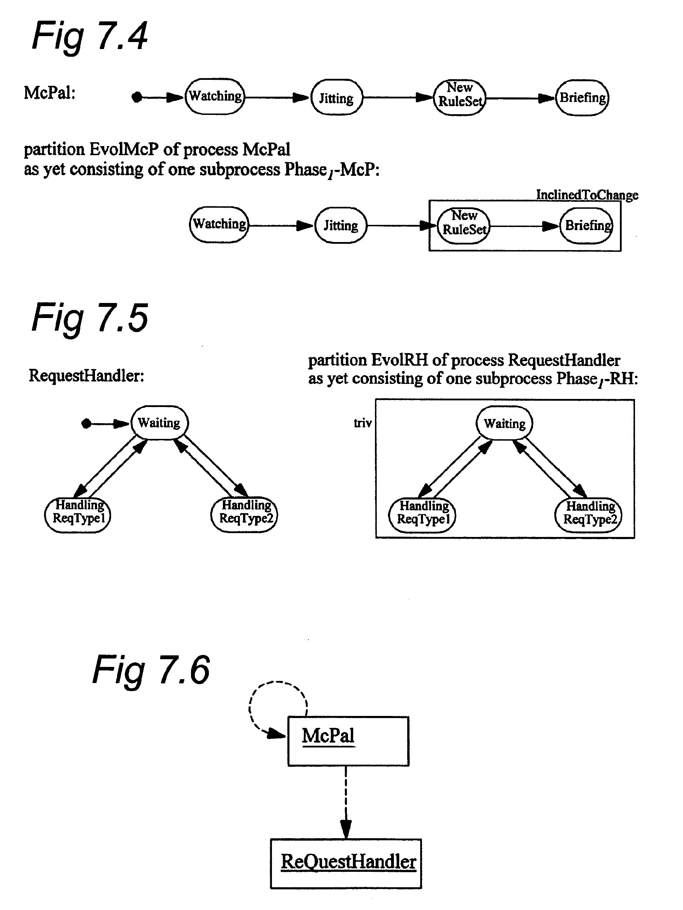

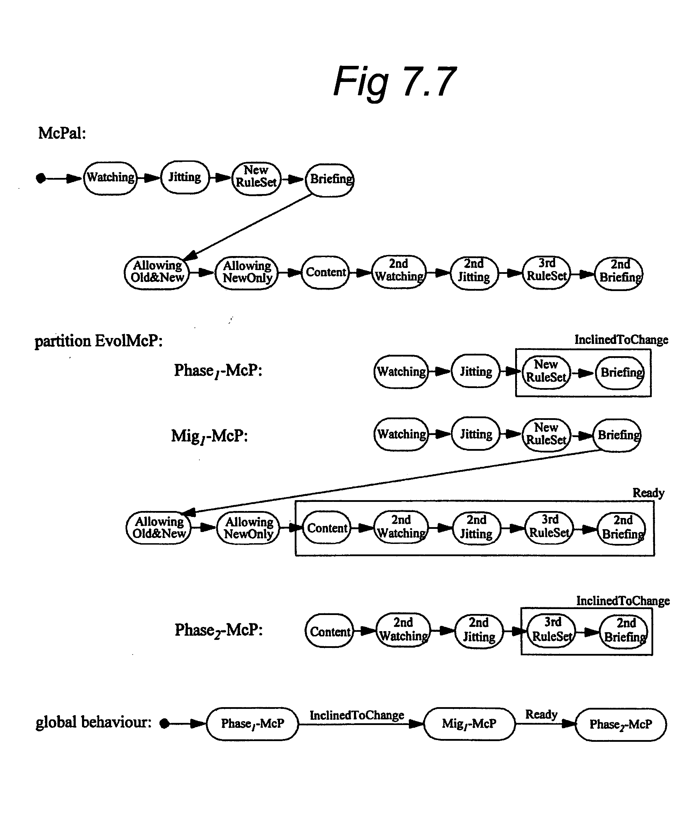

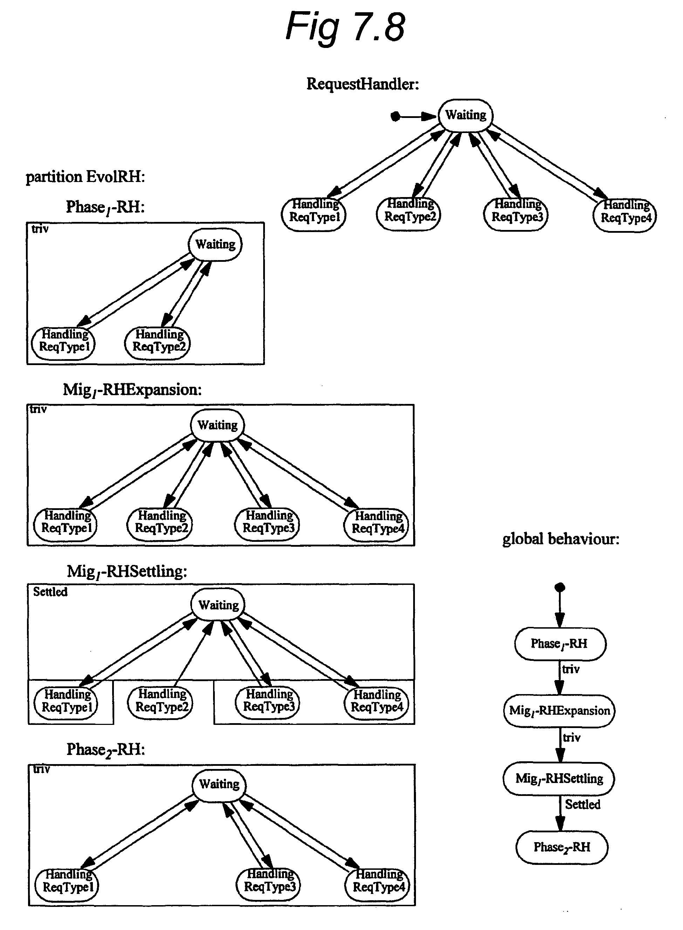

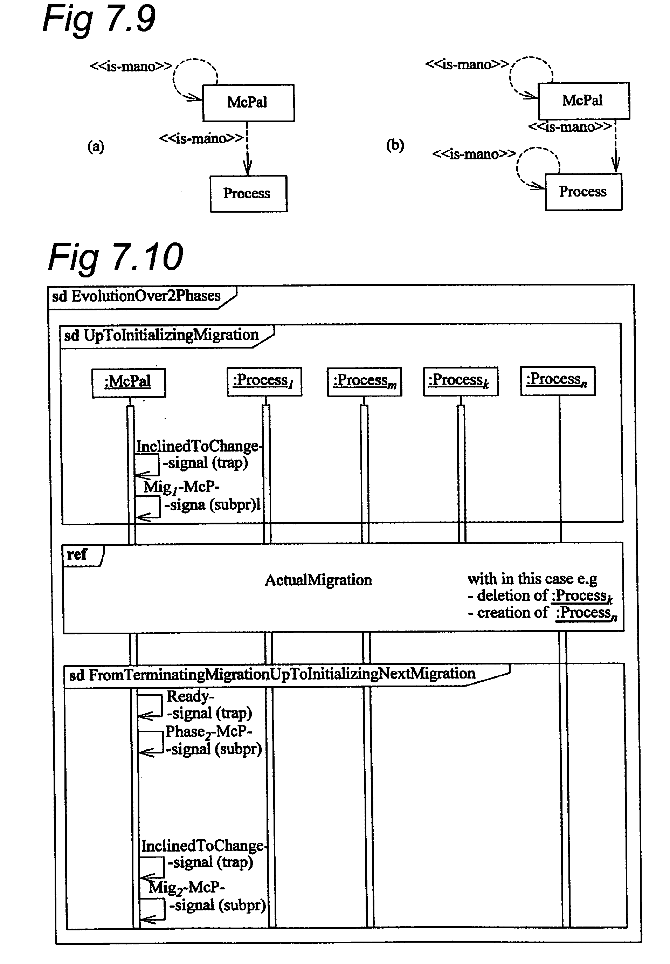

In the light of this remark, we assume the existence of a separate, sequential, special-purpose component McPal, modelled as a process and belonging to any malleable Paradigm model. In line with the sketchy remarks from Section 5, McPal belongs to a malleable model to guide both the moulding and the self-moulding in a sufficiently careful manner. The name McPal is an abbreviation for Modelling Changing Processes Ad Libitum. Figure 7.1 visualizes McPal's behavior during the first evolutionary phase, i.e. while the other processes of the first Paradigm model have (detailed) behaviors restricted to what has been specified in the first model and while (still) no other processes exist. To a surprisingly large extent, McPal's behavior is independent from the other processes, as we shall point out further down.

**Figure 7.1** schematically depicts process McPal during phase 1 of the evolution

The rather simple behavior of McPal is all one knows of it as long as details about future changes of the model as a whole are unknown, i.e. for the duration of the first evolutionary phase. To that aim McPal consists of four states, to be visited only once and in one strict order. In starting state Watching, McPal is doing nothing relevant for the evolution. Next, in state Jitting it guards the actual JIT modelling, i.e. just-in-time it redesigns a new Paradigm model or rather, it let some human modeller do so. In general, redesigning is done by defining new consistency rules and by defining new processes and new partitions. Moreover, it is done in such a way that the subset of consistency rules applicable when McPal's current state is Jitting, does not change as a result from the newly defined rules, processes and partitions. So the actual behavior of the remainder of the Paradigm model is continuing according to phase 1 of the evolution. It particularly means: a whole new Paradigm model is being formulated, while the current states, the current subprocesses and the applicable rules still change as before, so the behaviors, detailed as well as global, of the Paradigm model are as if the model has not changed yet. In the phrasing of the sketch from Section 5: the first Paradigm model ($Cf_1$, $cr_1$) is still the same. But at the end of the stay in state Jitting it is known, on the basis of the activities done in Jitting, how to change the Paradigm model, as all new rules, processes and partitions are known. These new rules cover both the eventual, next evolutionary phase aimed at, phase 2, and the sufficiently smooth migration from phase 1 to phase 2. Phase 2 is covered by the rules $cr_2$ and the migration phase is covered by the rules $cr_{mig}$.

Then a transition is made from state Jitting to state NewRuleSet. In state NewRuleSet the first Paradigm model ($Cf1$, $cr1$) then has been replaced by ($Cf1$, $cr1 \cup cr_{mig} \cup cr_2$) where the Cartesian frame is still the same, but the set of consistency rules now consists of the old and new rules together. So now we have our first new Paradigm model ($Cf_1$, $cr_1 \cup cr_{mig} \cup cr_2$) instead of the model ($cf_1$, $cr_1$) of the first evolutionary phase. The new model is generated by moulding - from outside as it were, as a human modeller actually triggers this by finishing the new model - the old set of consistency rules into a next set. This next set specifies how to migrate from the current evolutionary phase 1 to a later evolutionary phase 2 via a number of intermediate, consecutive migration phases. Furthermore, although the model is a new one, the actual behavior it specifies has been designed such that it has not yet changed, so it is still in accordance with the evolutionary phase 1. Apart from the detailed new consistency rules and how they influence the other processes, McPal itself from then on evolves in accordance with seven rather mild requirements, sufficiently structuring its own evolution on the basis of Paradigm as well as the evolution of the other processes, always on the basis of the Paradigm notions.

First of all, McPal's behavior during evolutionary phase 1 is explicitly modelled as a subprocess of a much larger partition EvolMcP. Figure 7.2 represents this one subprocess, called $Phase_1$-McP, together with a nontrivial trap InclinedToChange.

**Figure 7.2** schematically depicts process McPal's own first evolutionary phase $Phase_1$-McP.

A rather curious circumstance here is, the remainder of that partition is largely unknown: in state Watching as well as in state Jitting nothing more is known; only from arriving in state NewRuleSet on, slightly more is known, being a direct result of the JIT-modelling activity taking place while in state Jitting. That - partial - result is visualized in Figure 7.3. It is partial in two senses: it is restricted to the evolution as far as phase 2 and it is restricted to process McPal and to McPal's partition EvolMcP in particular. A very important thing to note is, subprocess $Phase_2$-MCP, apart from an additional state Content and apart from state names, is an exact copy of subprocess $Phase_1$-McP, even in the name of its nontrivial trap. This is the basis for reusing the same idea for the later evolutionary phases and the migration towards them.

Figure 7.3 schematically depicts process McPal and its first three subprocesses, during a first evolutionary phase, during a second evolutionary phase and during the migration in between .

Second, McPal is its own manager with respect to the partition EvolMcP. The global behavior is rather straightforward; up to evolutionary phase 2 it is visualized in Figure 7.3 too. The additional consistency rules needed during evolutionary phase 1 for specifying McPal's state transitions, consist of two side rules and one core rule. The side rules are:

McPal : Watching $\rightarrow$ Jitting

McPal : Jitting $\rightarrow$ NewRuleSet

They both reflect, during evolutionary phase 1 process McPal can proceed until state NewRuleSet without any impact on whatever global behavior.
Concerning the one core rule there is more to explain. The rule itself is as follows

McPal : NewRuleset $\rightarrow$ Briefing

McPal (EvolMcP): $$\text{Phase}_i - \text{McP} \xrightarrow{\quad\text{InclinedToChange}\quad} \text{Mig}_1 - \text{PcP}$$

Strictly speaking, this rule does not belong to the rule set c$r1$ as within the context of the first Paradigm model covering evolutionary phase 1 subprocess Mig$1$-McP is not yet known, because migration still is out of sight. As there is no other rule enabling the transition from NewRuleSet to Briefing, we apparently have the situation announced with Figure 5.1, where state Y, also (originally) lacking in applicable consistency rules, corresponds to state NewRuleSet, and where state X corresponds to Jitting as in both states Jitting and X, among other things, the one rule allowing the transition to leave the subsequently visited state, NewRuleSet or Y respectively, is being defined: as JIT (just-in-time) as possible.

This actually means the following. The very step from NewRuleSet to Briefing did already belong to the detailed behavior description of phase 1, but the precise rule semantically allowing for this step, was formulated only while in state Jitting. So the rule allowing the step belongs to the migration phase. An additional advantage thereof is, only from then on it is known how exactly the next subprocess Mig$_1$-McP within partition EvolMcP of process McPal looks like, as this subprocess too has been newly specified while being in state Jitting. On the basis of the core rule enabling the transition to state Briefing, one knows, from arriving in state Briefing the new current subprocess of McPal will be Mig$_1$-McP. As by then also the other processes, informally speaking, should have been informed about their newly defined subprocesses, traps and even completely new behavior, also these processes from then on, on the basis of other new consistency rules as we shall point out below under the third requirement, can start their migration towards phase 2, guided by McPal according to the details of its migration phase, subprocess Mig$_1$-McP.

Third, as a matter of fact most - quite often even all but one - new rules have been designed such that they are not applicable in any global configuration feasible within frame Cf$_1$. This is relatively easy, as within this old frame neither the new processes nor the new partitions exist, whereas the a priori facts of these new rules will be formulated in terms thereof. This also means, the actual migration of the other processes cannot start before McPal has reached state Briefing as well as its new subprocess Mig$_1$-McP. Via the consistency rules it is guaranteed, McPal's arrival in subprocess Mig$_1$-McP raises an essential, necessary condition for the other processes to start their migration. This is why we - more informally - have chosen the name Briefing for the state entered by McPal immediately after leaving state NewRuleSet.

Fourth, there is another reason too, why the other processes cannot start their new migration behavior before McPal has reached state Briefing: McPal does only start prescribing any new behavior to them after having left state Briefing - in the subsequently visited states Migration$_1$, ... , Migration$_m$. So, in state Briefing, everything is ready for the migration, but it has not really started, as even within the one new current subprocess Mig$_1$-McP no new detailed behavior (al step) has been taken: within subprocess Mig$_1$-McP process McPal is only as far as state Briefing yet.

Fifth, in state Briefing the Paradigm model still is (cf$_1$, cr$_1$ $\cup$ cr$_{mig}$ $\cup$ cr$_2$): the new rules are there, but there is no new frame yet, as no new partitions or processes have been created or old ones have been deleted. Similar to the migration behavior and actually being a part of it, creation and deletion are to happen only when McPal is moving through its states Migration$_1$, ... , Migration$_m$.

Sixth, the details of the migration and the eventual evolutionary phase 2 fully depend on the concrete phase one wants to migrate to as well as on the way one wants to perform the changing. In the detailed double example of the following two sections we shall discuss this part. Then we also discuss concrete consistency rules allowing the transitions from state Briefing via the states Migration$_1$, ... , Migration$_{m-1}$ to state Migration$_m$. For the moment let us assume, in state Migration$_m$ process McPal is observing, the migration is over as all other processes involved are behaving according the specification of the eventual evolutionary phase 2 as wanted. Then, by going to state Content, process McPal explicitly restricts all other processes involved to their phase 2 behavior, by prescribing a corresponding subprocess to each of them. In terms of the Paradigm model this means, the Paradigm model has moulded itself from (cf$_1$, cr$1$ $\cup$ cr$_{mig}$ $\cup$ cr$_2$) - as it was in state Briefing, see above- to (Cf$_2$, cr$_1$ $\cup$ cr$_{mig}$ $\cup$ cr$_2$) as it has become in state Content on the basis of the new consistency rules together with the careful migration guidance of McPal.

Seventh, as McPal by reaching state Content, also has entered trap Ready of subprocess Mig$_1$-McP, it is now in a position to restrict its own behavior from then on to subprocess $Phase_2$-McP. It does so, by making the transition from state Content to state 2ndWatching. It is allowed to do so, as the following core consistency rule exists belonging to the set c*rmig*:

7.11 MacPal: Content $\rightarrow$ 2nd Watching

McPal (EvolMcP): $Mig_1 - McP \xrightarrow{\mathbf{Ready}} Phase_2 - McP$

As a side-effect of this rule, the no longer needed consistency rules are removed from the Paradigm model, again from the outside as no rule can have such an effect. As this can be foreseen and correspondingly automated, it can be viewed as self-moulding too. So in state 2ndWatching the Paradigm model has become ($Cf_2$, $cr_2$), the eventual model we started the evolution for. In addition it should be noted, from being in state 2ndWatching on, McPal can undertake a next migration towards yet another evolutionary phase, similar to the above description from state Watching on, in which all other processes are involved too.

Here ends the description of our new approach to JIT (lazy) modelling of evolution from outside (moulding) and subsequent execution of the evolution from inside (self-moulding done by the model) on-the-fly. The well-structuredness of the approach is based on Paradigm and its global behaviors.

As this is not a restriction to the applicability of the approach, we foresee a pattern-like future for it, as the McPal approach can be reused for all kinds of changes on-the-fly. To that aim, in the next subsection we summarize our explanation of it as a pattern.

7.2 Summarizing McPal as Pattern

For the presentation of McPal as a pattern we more or less adopt the descriptive structure for patterns as given in [Gamma et al, 1996, ref. 2].
 **Name.** McPal.
**Intent.** Lazy or just-in-time modelling of how to modify a running system and subsequently letting the running model adapt the model accordingly.
**Aka**. Modelling Changing Processes Ad Libitum. Modelling Changing Processes At Leasure.
**Motivation.** An illustrative and complete example could easily be considered out of proportion at this place, being too large really for a motivation, as one might guess from the previous section. So the list of more and more frequently occurring situations mentioned under Applicability could be considered as a Motivation too. Nevertheless, we shall formulate a relatively small example, in order to present a more convincing motivation.

The example consists of two process. One process is the special component McPal responsible for guiding whatever evolution. The other process is another component originally meant to handle exactly two different user requests; so this constitutes - very roughly - its first phase behavior. Some time later the same component is supposed to handle three requests instead, one being the same as one of the former ones, the other two (new ones) replacing the other (an old one) so to say; this constitutes - very roughly again - its second phase behavior. As the two, i.e. the special and the other components should evolve on-the-fly, both are to change sufficiently smoothly from the old behavior to the new behavior. We choose to do that by allowing, for a certain restricted, intermediate time interval, the handling of both the old and the new requests.

**Figure 7.4** schematically depicts process McPal during phase 1 of the evolution, together with the subprocess representation of that phase, $Phase_1$-McP .

Process McPal is exactly as has been explained above. Figure 7.4 visualizes it, together with the (first phase of McPal's evolution; the first phase is represented as a subprocess of a partition whose other subprocesses are not known yet. Although the problem description of the first evolutionary phase essentially consists of the one process handling two service requests - to be presented further down - McPal itself is present from the beginning though, because of the malleability of the Paradigm model as a whole. As only one subprocess exists, the global behavior is restricted to (remaining within) this one subprocess. Therefore we do not visualize it.

The other process, called RequestHandler, is drawn in Figure 7.5. As during phase 1 there are no behavioral consistency matters to be solved concerning RequestHandler, one would not expect any Paradigm notions to be relevant for RequestHandler during phase 1: no partitions of it, no subprocesses of it and traps thereof, no manager roles for it, no employee roles for it. But in view of the malleability of the Paradigm model as a whole, we make evolutionary phase 1 explicit for RequestHandler too, quite similar to what we already did for McPal. The one trap indicated, is the trivial trap: it allows for starting the migration from anywhere - an example of an unconditional interruption - within subprocessPhase$_1$-RH. Like above, as only one subprocess exists, the global behavior is restricted to (remaining within) this one subprocess. So we neither visualize it.

**Figure 7.5** schematically depicts process RequestHandler during phase 1 of the evolution, together with the subprocess representation of that phase, Phase$_1$-RH.

Although there is nothing to coordinate yet, it is again in view of later evolution malleability requires manager roles of McPal with respect to any process belonging to the Paradigm model. This is reflected by Figure 7.6. Note that McPal's self-management is in line with the discussion from subsection 7.1.

**Figure 7.6** schematically depicts the organogram for the evolution.

As the model as a whole is supposed to meet the requirements of a Paradigm model, we addition- ally need consistency rules. They are all side rules though, because there is nothing to coordinate as yet. The following set of consistency rules constitutes the set cr$_1$.

7.1 McPal: Watching $\rightarrow$ Jitting

7.2 McPal Jitting $\rightarrow$ NewRuleSet

7.3 RequestHandler: Waiting$\rightarrow$ Handling Req Type1

7.4 RequestHandler: Waiting $\rightarrow$ Handling Re qType2

7.5 RequestHandler: Handling Req Type1 $\rightarrow$ Waiting

7.6 RequestHandler: Handling ReqType2 $\rightarrow$ Waiting

Note the lacking for the time being of a consistency rule regarding McPal's transition from state NewRuleSet to state Briefing, perfectly in accordance with Subsection 7.1, so McPal cannot execute that transition as long as the Paradigm model remains unchanged. As the consistency rules are side rules only, there is no dependency whatsoever between the two processes during evolutionary phase 1. Moreover, McPal can reach state NewRuleSet, if it chooses so.
For completeness sake, we also give the Cartesian frame Cf$_1$, valid during evolutionary phase 1. It comprises of two processes, McPal and RequestHandler, with one additional partition each, EvolMcP and EvolRH respectively. So the frame can be represented in terms of the following four dimensions, nested per process
Cf$_1$ = (McPal (EvolMcP), RequestHandler (EvolRH)).
Within this frame, the starting global configuration, in accordance with the starting states graphically indicated for each process separately, as well as in accordance with the only subprocess each partition consists of, is the following 6-tuple, nested in line with the Cartesian frame
((Watching, (Phase$_1$-McP, triv)), (Waiting, (Phase$_1$-RH, triv))).
So far we have specified the Paradigm model (Cf$_1$, cr$_1$) for phase 1, the first evolutionary phase. Let us furthermore assume, the evolution indeed takes place as very informally suggested. The least we can say then, is: McPal indeed arrives in state NewRuleSet. By then the JIT modelling has been done, resulting in (Cf$_1$, cr$_1$ $\cup$ cr$_{mig}$ $\cup$ cr$_2$) constituting the following adaption of the original model mode.

**Figure 7.7** schematically depicts process McPal during the first two phases of the evolution, together with partition EvolMcP containing these phases.

To begin with, the Cartesian frame Cf, is still the same and will even remain so at least until the end of evolutionary phase 2. But the two processes as well as their partitions, become rather different. We start presenting McPal, as it has been extended in view of covering the old phase 1, the new phase 2 and the migration from the phase 1 to phase 2. Figure 7.7 gives it all, very much in line with the discussion in Subsection 7.1, so we do not repeat that explanation. Note, the actual guidance of the migration consists of two subsequent steps: by going to state AllowingOld&New, process McPal first extends RequestHandler's behavior with the two new service request handling activities; by going from there to state AllowingNewOnly, as much later as it thinks suitable, process McPal again restricts RequestHandler's behavior by no longer admitting the one old service request handling activity, from now on considered obsolete. As soon as McPal then observes, the obsolete service is no longer available and every handling of a request for it has stopped, it goes to state Content, where it prescribes the eventual phase-2-behavior to RequestHandler. After that, by self-management, it prescribes its own phase-2-behavior to itself.

Process RequestHandler too has been extended in view of covering the old phase 1, the new phase 2 and the migration from the phase 1 to phase 2. The migration itself takes place in two subsequent phases: the first migration phase comprises all request type handlings, the old request types called RT1 and RT2 as well as the new request types, called RT3 and RT4; the second migration phase comprises the handling of RT1, RT3 and RT4 only, but any ongoing handling of RT2 should be finished regularly. Recognizing these combinations in the various subprocesses of partition EvolRH is fairly straightforward, see Figure 7.8.

In addition to the set of consistency rules $cr_1$ for phase 1, we have the set $cr_{mig}$ of rules for the migration and the set $cr_2$ for phase 2. We present $cr_{mig}$ first.

7.7 McPal: NewRuleSet$\rightarrow$ Briefing

$$\text{McPal(EvolMcP): } \text{Phase}_1 - \text{McP} \xrightarrow{\text{InclinedToChange}} \text{Mig}_1 - \text{McP}$$

7.8 McPal: Briefing$\rightarrow$AllowingOld&New

$$\text{Request Handler (EvolRH): } \text{Phase}_1 - \text{RH} \xrightarrow{\text{triv}} \text{Mig}_1 - \text{RHExpansion}$$

7.9 McPal: AllowingOld & New$\rightarrow$ AllowingNewOnly
RequestHandler(EvolRH):

$$\text{Mig}_1 - \text{RHExpansion} \xrightarrow{\text{triv}} \text{Mig}_1 - \text{RHSettling}$$

7.10 McPal: AllowingNewOnly $\rightarrow$ Content

$$\text{RequestHandler(EvolRH): } \text{Mig}_1 - \text{RHSettling} \xrightarrow{\text{Settled}} \text{Phase}_2 - \text{RH}$$

7.11 McPal: Content $\rightarrow$ 2ndWatching

$$\text{McPal(EvolPcP): } \text{Mig}_1 - \text{McP} \xrightarrow{\text{Ready}} \text{Phase}_2 - \text{McP}$$

For RequestHandler there are no consistency rules exclusively meant for the migration. We therefore continue with the rules constituting set $cr_2$. As the sets $cr_1$ and $cr_{mig}$ are to be removed, we duplicate within set $cr_2$ those rules from set $cr_1$ we want to keep. This duplication applies only to some of the rules for RequestHandler, as process McPal's phase 2 behavior is taking place in a completely new part of its state space.
Set $cr_2$ then contains the following consistency rules.

7.12 McPal: 2ndWatching$\rightarrow$2ndJitting

7.13 McPal: 2ndJitting$\rightarrow$3rdRuleSet

7.3 RequestHandler: Waiting$\rightarrow$HandlingReqTypel

7.14 RequestHandler: Waiting$\rightarrow$HandlingReqType3

**Figure 7.8** schematically depicts process RequestHandler during the first two phases of the evolution, together with partition EvolRH containing these phases.

7.15 RequestHandler: Waiting $\rightarrow$ Handling Re qType4

7.5 RequestHandler: Handling ReqTypel $\rightarrow$ Waiting

7.16 RequestHandler: Handling Re qType3 $\rightarrow$ Waiting

7.17 RequestHandler: Handling Req Type4 $\rightarrow$ Waiting

As the Cartesian frame, in this example, does not change at all, the only constituent of the Paradigm model changing is the set of consistency rules. During phase 1 it is $cr_1$. Then, at McPal's arrival in state NewRuleSet, the set of rules cr/ is replaced by $cr1 \cup cr_{mig} \cup cr_2$, just in time indeed as for its next transition (to state Briefing) McPal needs a rule from $cr_{mig}$. Some time later finally, at McPal's arrival in state 2ndWatching, the rule set $cr1 \cup cr_{mig} \cup cr_2$ is replaced by $cr_2$, as McPal, by executing the transition from state Content to state 2ndWatching, apparently is the last process using a rule from $cr_{mig}$: RequestHandler had already been restricted before to subprocess Phase$_2$-RH and from now on process McPal too is restricted to subprocess Phase$_2$-McP. So the other rules are no longer needed, as they cannot become applicable anymore.

**Applicability.** More and more often situations occur where running computer systems have to cope with better alignment, with circumstances varying differently from expected, with operation in an unforeseen (software) environment, with changes because of possibly even radically shifting requirements, with arrival in unknown nodes of (mobile) networks, with weaving new aspects into it. Incorporating such features explicitly and from the beginning into a model specifying such a system, is impossible as the properties needed are simply unknown, hence the solutions to be provided cannot be designed. JIT modelling (Just-In-Time) then postpones any such design until the problem is known and the solution for it can be formulated. In addition, this JIT modelling specifies a sufficiently smooth migration from the system running as it (still) is to the same system running in a new, only recently foreseen and wanted way.

The McPal pattern allows for the JIT modelling to occur and on the basis of the resulting JIT modelled extension to the original model, it let the model, while remaining in execution, gradually modify itself, thus migrating from its original version into the new one being the eventual version as wanted. Via such explicitly modelled migration the behavior of the new model is woven into the behavior of the original model.

A prerequisite to the applicability of the McPal pattern is, the problem situation and its "phase-1-solution" McPal is to be applied to, has to be specified in terms of a Paradigm model first. As Paradigm does not yet belong to the standard modelling formalisms, one might wonder whether Paradigm is sufficiently general to be used as specification vehicle for the dynamics usually met in the above mentioned range of situations. Based in years of modelling experience with Paradigm, however, we are pretty sure, it can be used extremely well there. See also the complete material in Part 1.

**Structure.** The structure of the McPal pattern represents the organogram on the type level. See Figure 7.9(a) for a minimal structure.

**Figure 7.9** schematically depicts the class diagram for the McPal pattern.

Each dependency relationship, stereotyped as <<is-mano>>, specifies on the type level where, on the instance level, the links represent an is-mano relation. The actual dependency of the manager always is in terms of a suitable global behavior of the employee: this is to be the allowed "evolutionary" behavior of the employee, i.e. the partially ordered description of the various consecutive phases of that employee relevant for the evolution, migration included, possibly in phases too.

In addition, class McPal most often is a singleton, whereas class Process represents all other processes occurring in a concrete malleable Paradigm model (at a fixed point in time). McPal thus serves as *the one evolution coordinator* of every sequential activity, whether ongoing and to be continued in whatever sense or to be broken off or just starting from scratch. If among the Process participants there happen to be other managers (coordinators of the normal cooperation between the Paradigm processes), then McPal also coordinates the migration of such managers, i.e. of their coordination, towards the new evolutionary phase with possibly different cooperations to coordinate.

In the examples given below we shall see, McPal often delegates parts of its coordination of the evolution to some managers and employees among the "Process"-participants from the McPal pattern. This is visualized by the slightly richer structure of Figure 7.9(b).

What makes the structure description of the pattern unusual, is the lack of any operation offered by one participant to another. This rather strange phenomenon is caused by the Paradigm notions. Each employee in the above pattern not so much offers one or more operations to its manager, but instead it offers its (evolutionary) partition to it, i.e. its subprocesses and traps - where relevant, the traps from one subprocess to another - expressing the various phases and stages of the employee's evolution. The manager then concretely controls the (global) dynamics between the various subprocesses offered on the basis of the offered traps entered. The UML notation however, does not (yet) allow for putting things like a partition into an interface.

**Participants.** From the above structure description the participants follow immediately. They are of two types. Class McPal represents the coordinator of the evolution. As such it is the manager of the evolutionary partitions of its employees.

Class Process represents all (other) Paradigm processes in the model that might evolve. As such they are employees of McPal with respect to their evolutionary partitions. As McPal evolves too, it is its own manager as well as employee.

A further responsibility of McPal is, it is involved in the actual JIT design of the evolution. Either it does such design itself, or it is informed from elsewhere that such a design, JIT again, has been finished. On the basis of the JIT-finished design McPal then immediately starts coordinating the newly designed part of the evolution accordingly.

Figure 7.4 expresses McPal's behavior before the evolution coordination has started. If in Figure 7.7 one omits the details concerning how to go from state Briefing to state Content, it perfectly expresses McPal's behavior after the design of the evolution has been JIT-finished: both its detailed manager behavior and its global employee behavior.

Concerning the other employees we cannot say so much in general, as here the dynamics, detailed as well as global, very much depend on the specific characteristics of the process during the original evolutionary phase as well as during the final evolutionary phase and during the different migration phases. One detail, however, seems be of more general relevance though.

For the non-migration phases of a Process it is important to provide them with the trivial trap. This then allows in a general manner to interrupt such non-migration phase *under any circumstance,* to start evolutionary coordination of it by prescribing the next subprocess to it: the trivial trap serves as an empty, i.e. non-restrictive, condition from the side of that employee. It might be wise to reuse this idea for one or more migration phases too; see e.g. the use of the trivial trap of subprocess $Mig_1$_RHExpansion in Figure 7.8 to allow an unrestricted global behavior transition towards subprocess $Mig_1$-RHSettling on the basis of consistency rule

7.9 McPal: AllowingOld & New → AllowingNewOnly
RequestHandler(EvolRH):

$$\text{Mig}_1 - \text{RHExpansion} \xrightarrow{\quad\textbf{triv}\quad} \text{Mig}_1 - \text{RHSetting}$$

from set $cr_{mig}$.

**Collaborations.** (Synonym of cooperation.) Within the Paradigm formalism the communication between the participants is organized, i.e. coordinated, in relation to the separate partitions, indicated by the various organograms for a Paradigm model. In particular, the details of such communication depend on two roles a process can have with respect to a given partition: a manager role and an employee role. A manager process "prescribes" a next current subprocess to its employee process; an employee process keeps its manager process informed about the currently smallest trap entered within the current subprocess.

There are no UML notions for expressing exactly this, but we can come close to it by using signals instead, one for each subprocess and also one for each trap thereof. Prescribing a subprocess then means: sending the corresponding subprocess signal - from the manager to the employee; keeping informed about the smallest trap then means: sending the corresponding trap signal - from the employee to the manager.

Based on this UML translation, a sequence diagram for the cooperation between McPal and the other Process participants can be drawn. As we want to leave out migration details, being too much dependent on the specific situation, UML 2.0's notation for sequence diagram turns out to be rather useful. The result is given in Figure 7.10.

Note, we have liberally added some comments in the - unspecified - sequence diagram, referred to as Actual-Migration, about deletion and creation of an example process. Moreover, note how at the end of McPal's lifeline a first preparation, standard as a matter of fact, announces the next evolutionary steps: from phase 2 via still unknown migration to yet another phase 3.

In our notation for the signals we have incorporated whether the signal refers to a smallest trap entered (sent by an employee) or to a subprocess prescribed (sent by a manager). In all cases indicated it is McPal only who sends and receives these signals, apparently to and from itself. Other types of sending and receiving where other participants are involved, do matter too, but they fully depend on how McPal actually coordinates the cooperation. The details of such cooperation between McPal and the other Process participants completely belong to the unspecified, actual migration. Only there, depending on the concrete migration one wants to achieve, it can be indicated in what order the various Process participants get their new subprocesses prescribed, get their new partitions started, loose one or more partitions, are being deleted or are being created possibly together with one or more partitions.

**Consequences.** The pattern completely solves the problem of self-modification or self-adaption of a model, on the basis of JIT-modelled extension of the older version of the model. The JIT-modelled extension also includes a suitable migration from the older version to the (new) version aimed at.

The pattern is heavily based in the Paradigm notions for modelling global behaviors consistently with detailed behaviors. This has the disadvantage of the introduction of a non-standard formalism. To make things worse, the Paradigm notions are apparently rather counterintuitive, so they are not easy to master. But the effort to master them is rather worthwhile, as the big advantage is, it gives a nice well-structuredness to the problem situations and their solutions, enabling not only formal analysis and proof checking, but also quick insight and not too difficult reasoning.

**Implementation.** Translation of suites of such Paradigm models should be rather straightforward towards interpreted imperative languages or towards logic programming languages. In the case of compiled imperative languages, however, the situation is far less clear: inserting source code statements into an existing program is one thing, but keeping the running byte-code in accordance with such changes is an unusual combination of normal compilation techniques and debugging techniques. Therefore, this point needs more study.

**Sample Model.** See Section 8, where a much larger evolution example is presented and discussed. It actually consists of two examples, the second being the evolutionary successor of the first. The two examples are chosen such that the subsequent Paradigm models consisting of the Process participants only exhibit a growing complexity in "normal" Paradigm coordination. Among other things, the two examples thus allow us to present all variants of partition and process creation and deletion.

**Known Uses.** The pattern together with the explicit Paradigm basis, is new. It has not been used before. But once well-known, every situation where alignment, requirements change, general evolution, aspect weaving, mobility, environment reconfiguration is a good candidate for applying this pattern to. So we have to wait and observe.

**Related Patterns.** The point of related patterns is not very clear at this moment. One observation, not very important, is: McPal most often is a singleton. The reason is, planned evolution - according to the JIT-modelled extension (and shrinking) of the older model version, probably is best coordinated by one super-director on the highest management level.

Relations with other patterns are vaguely suspected, but in this stage of research too unclear to bring forward.

Here ends the pattern description of McPal. The next section is devoted to two coherent examples of evolutionary coordination exerted by McPal on the basis of the new operational semantic for malleable Paradigm models.

Part 3. Fully Fledged Self-Adapting Example

8. Evolving Service Handling On-The-Fly

In the McPal pattern description of the foregoing section a rather small example had been incorporated of evolution on-the-fly. In particular, the example did not show creation or deletion, neither of a process nor of a partition. This omission is to be repaired right now. Unfortunately, incorporating such features tends to make an example of consecutive Paradigm model modes rather large. For this reason, a whole third part is devoted to the example. As a side-product of the example, we shall see other applications of delegation as well as of self-management introduced in the first Part.

The examples as a whole is from the work of service requesting and handling, like all previous examples in this paper. This is not to say, McPal should be applied only to service handling and the like. But, as evolution on-the-fly examples describe at least two Paradigm model modes and the additional migration from one towards the next, we want to reuse our delegation example from Part 1. Thus we are able to restrict the explanation of quite intricate coordination details belonging to an isolated evolutionary phase, rather considerably.

Section 8 presents the complete example, consisting of three consecutive evolutionary phases, with their two migrations from the first to the second and from the second to the third phase. The structure of the section reflects this as follows. Subsection 8.1 presents the model mode for phase 1, a non-deterministic server with n clients. Subsection 8.2 reuses the model of the round robin broker from Section 3, delegating its n clients to m round robin servers, as the model mode for evolutionary phase 2. In particular, the subsection adds the migration details from the phase 1 model mode to the phase 2 model mode. Finally, Subsection 8.3 introduces our phase 3 model mode, a ticket-number-driven broker delegating unknown many service requesters to m independently ticket-number-driven servers. As this part of the example is rather large, two further subsections are used for introducing and explaining it, with Subsection 8.3.1 covering the migration and with Subsection 8.3.2 covering the eventual phase 3.

8.1 Phase 1: A Nondeterministic Server with n Clients

During phase 1 there are *n+1* processes of 2 types: *n* clients and *1* server. During its lifecycle a client can ask the server for a service; after that a clients waits until it gets the service. Only after having been served, a client can ask the server for another service. The server, when it is not serving a client, waits until one or more clients want to be served. Then the server non-deterministically selects one such client to start serving it. After the client has been satisfied, the server stops the service and starts waiting again until one or more clients ask for a service. All this constitutes the first evolutionary phase for an ensemble of n clients and *1* server. As change is to be expected, an additional process participates in the ensemble, performing the actual McPal approach, called McPal.

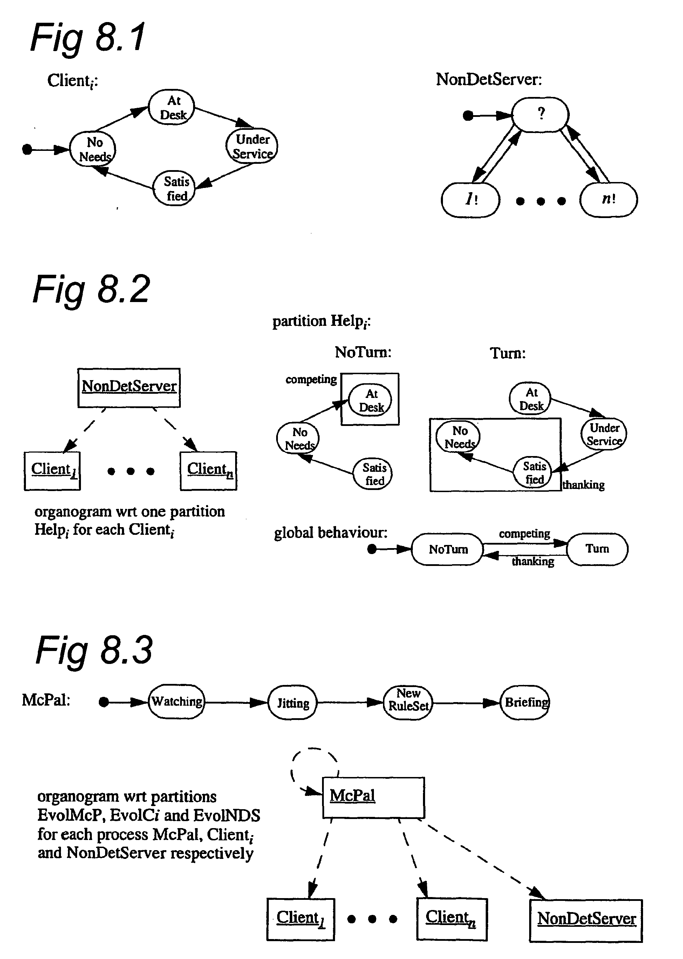

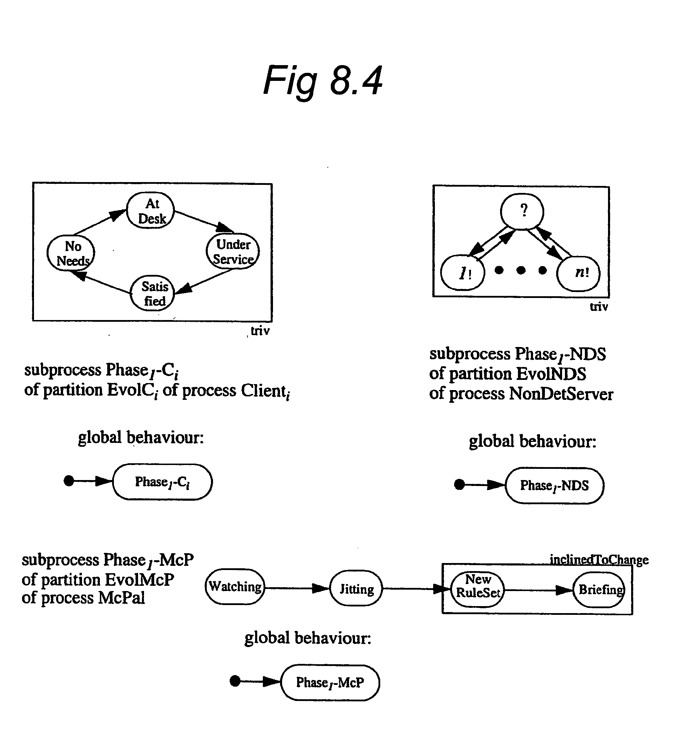

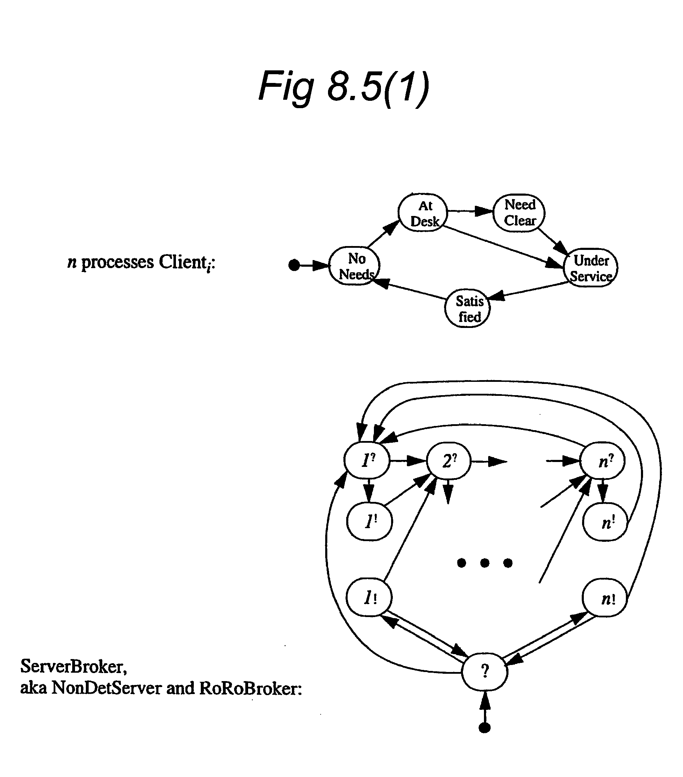

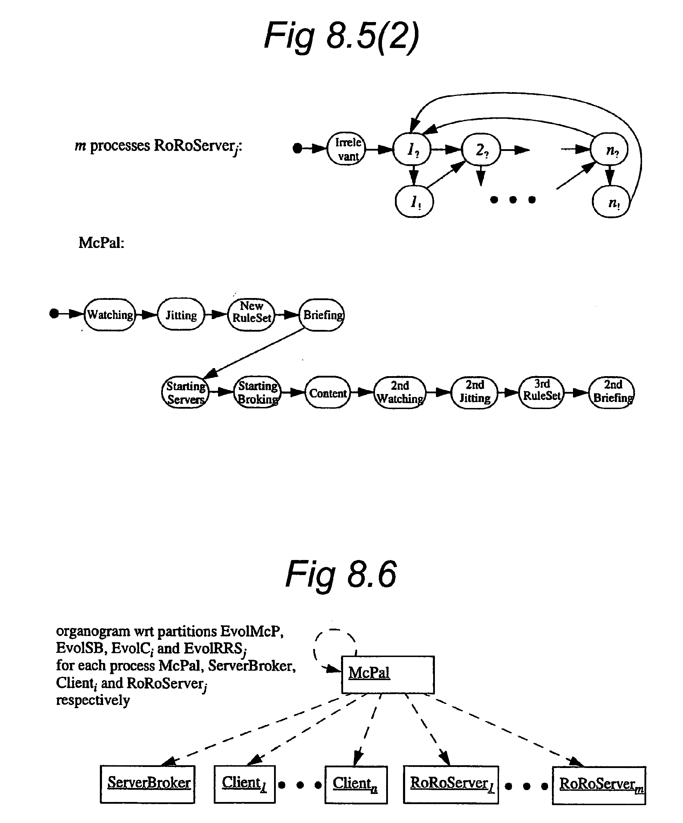

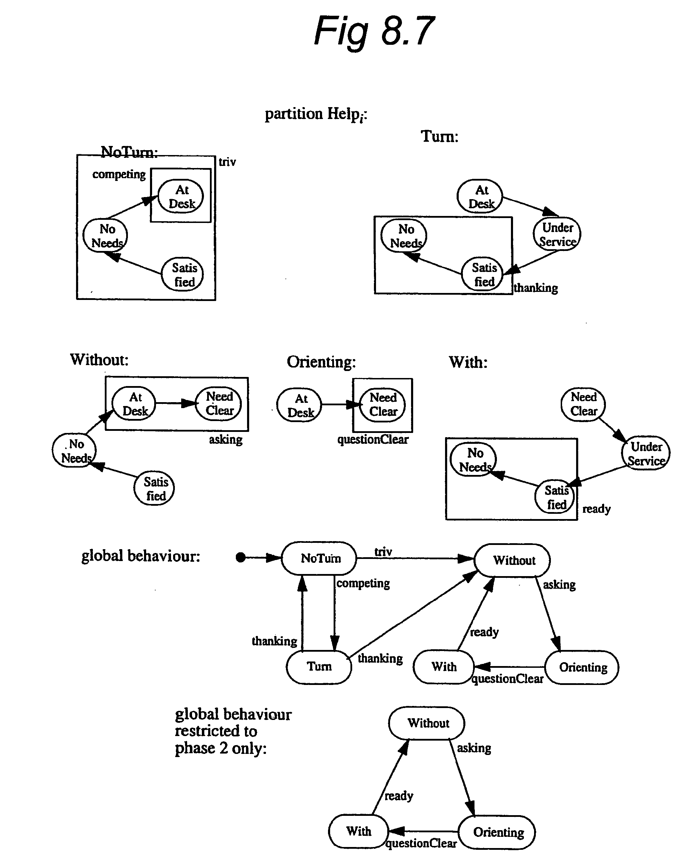

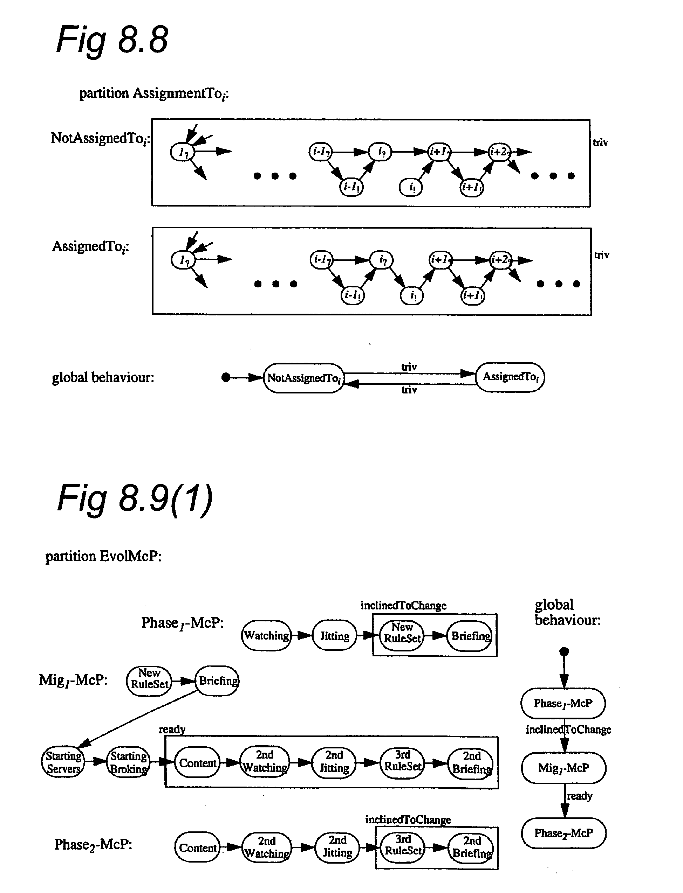

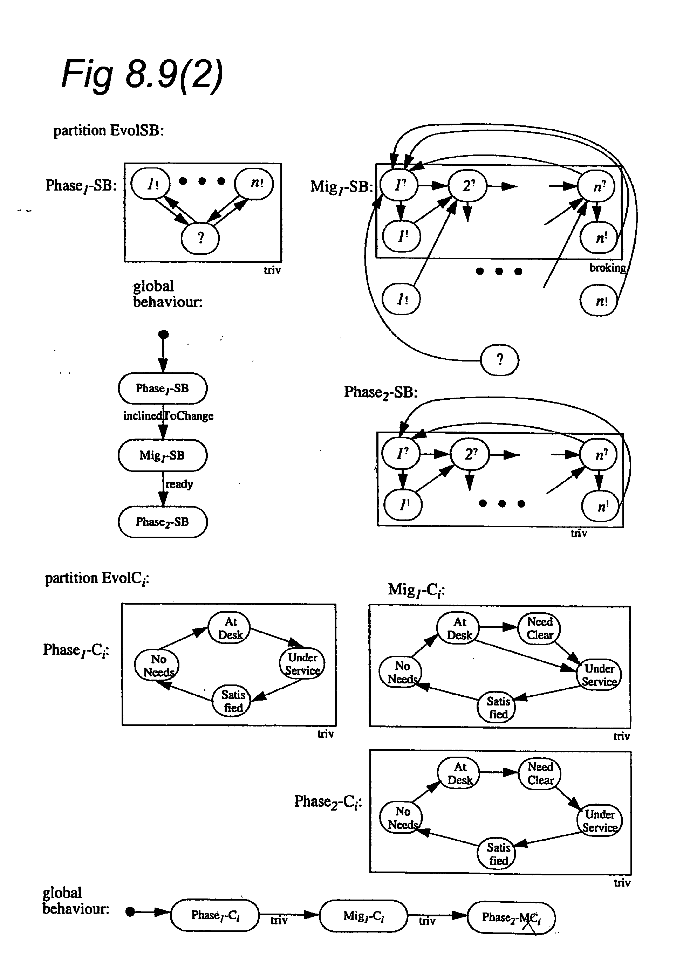

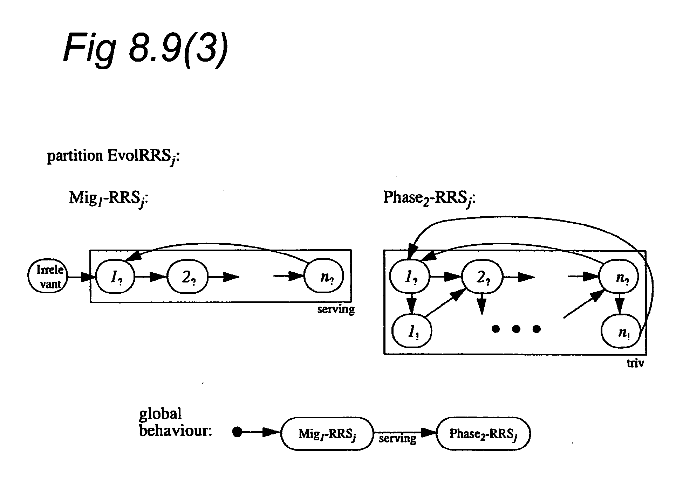

The *n* processes of type client are again referred to as $Client_1, ... , Client_n$. As they are slightly different from those presented in Figure 2.1, we visualize them in Figure 8.1. Only the interpretation of their lifecycle slightly differs: In NoNeeds it does not want any service; in AtDesk it asks the server for a service; in UnderService it is being served by the server and in Satisfied it expresses its wish towards the server to stop the service, upon which it returns to NoNeeds.

The one server is represented as the process NonDetServer; it selects the next client to serve in a nondeterministic manner. The process is drawn in Figure 8.1 too; note the resemblance with both RoRoBroker and $RoRoServer_j$ in Figures 2.2. and 2.3. In starting state ? it is serving no client at all, but it non-deterministically selects a client who wants to be served; in state *i*! the opportunity to be served is given to $Client_i$.

For any i, a partition $Help_i$ of $Client_1$ exists, consisting of 2 subprocesses: NoTurn and Turn, drawn in Figure 8.2. Subprocess NoTurn is the phase where the client does not have the attention from the server and Turn is the phase where the client is being served. The same Figure 8.2 also contains the organogram with respect to partition Help.

**Figure 8.2** schematically depicts an organogram and partition $Help_i$ of each $Client_i$.

According to the above model mode fragments the coordination during evolutionary phase 1 is relatively simple. The one manager NonDetServer manages its n employees $Client_i$. Moreover, it does so straightforwardly, without any delegation or self-management.

In this situation it so happens, we can choose exactly one core consistency rule for each manager transition. In addition, the employee transitions correspond to a side rule each. The core rules are:

8.1.1 NonDetserver: ? →i! , $Client_i$ ($Help_i$) : $NoTurn \xrightarrow{\text{competing}} Turn$

8.1.2.NonDetServer: i! → ?, $Client_i$ ($Help_i$) : $NoTurn \xrightarrow{\text{thanking}} NoTurn$

The side rules are even more simple, as usual

8.2.1 $Client_i$: NoNeeds→AtDesk

8.2.2 $Client_i$: AtDesk → UnderService

8.2.3 $Client_i$: Underservice→ Satisfied

8.2.4 $Client_i$: Satisfied → NoNeeds

The Paradigm model given so far, specifies the (coordinated) behavior of the n clients and their *1* server. As this is the behavior for the first evolutionary phase only, we now proceed by defining the additional process McPal according to the pattern discussed above. Figure 8.3 visualizes McPal for the duration of the first evolutionary phase only, where nothing is known yet concerning the evolution to come.

According to the above description, McPal must be manager of all processes involved in the evolution. So McPal is manager of at least all processes existing during the first evolutionary phase. The organogram, also represented in Figure 8.3, expresses precisely this. The partitions of the various employee processes, relevant for guiding the later evolution, are mentioned beforehand, with-out being defined. Note in particular, both McPal's detailed process specification and the detail of McPal's self-management are in accordance with the pattern description from Section 7.

**Figure 8.3** schematically depicts Process mcPal and the organogram for the evolution restricted to phase 1.

Before the JIT modelling activity in state Jitting has been finished, only little is known about the partitions EvolMcP, $EvolC_i$ and EvoINDS of the processes McPal, Client i and NonDetServer, respectively. Figure 8.4 summarizes this by means of one subprocess in each partition, each containing the complete behavior of a process as all behavior belongs to the current evolutionary phase. The two trivial traps indicate, changing to a next evolutionary phase may begin in every state (be-longing to first phase $Phase_1$-$C_i$ or to first phase $Phase_1$-NDS respectively). Note, although the de-tails are different here, this is in line with the example given in the pattern description, see also Figure 7.5. Concerning partition EvolMcP, all details are as in the pattern description, included those for subprocess $Phase_1$-McP and for its trap InclinedToChange.

Figure 8.4. schematically depicts the first evolutionary phase of each process McPal, Client i and NonDetServer.

The additional consistency rules concerning McPal's state transitions are exactly the two side rules 7.1 and 7.2 from the pattern description:

8.3.1 McPal: Watching $\to$ Jitting

8.3.2 McPal: Jitting $\to$ NewRuleSet

Summarizing the above specifications, the Paradigm model mode during evolutionary phase 1 is $(Cf_1, cr_1)$, where its constituents are defined as follows. The Cartesian frame $Cf_1$ has $4+3*n$ dimensions, comprising $2+n$ processes and $2+2*n$ partitions

$Cf_1$ = (McPal (EvolMcP), NonDetServer (EvoINDS), $Client_1$ ($EvolC_1$, $Help_1$), ... , $Client_n$ ($EvolC_n$, $Help_n$)).

Within this frame the starting global configuration is

((Watching, ($Phase_1$-McP, triv)), (?, ($Phase_1$-NDS, triv)), (NoNeeds, ($Phase_1$-$C_1$, triv), (NoTurn, triv)), ... , (NoNeeds, ($Phase_1$-$C_1$, triv), (NoTurn, triv))).

The set $cr_1$ of consistency rules valid during evolutionary phase 1 consists exactly of the above rules, repeated here for the sake of completeness

8.1.1 NonDetServer:? $\to$ $i$!, $Client_i$ ($Help_i$): $NoTurn \xrightarrow{competing} Turn$

8.1.2 NonDetServer: $i$! $\to$ ?, $Client_i$ ($Help_i$): $Turn \xrightarrow{thanking} NoTurn$ .

8.2.1 $Client_i$: NoNeeds $\to$ AtDesk

8.2.2 $Client_i$: AtDesk $\to$ UnderService

8.2.3 $Client_i$: UnderService $\to$ Satisfied

8.2.4 $Client_i$: Satisfied $\to$ NoNeeds

8.3.1 McPal: Watching $\to$ Jitting

8.3.2 McPal: Jitting $\to$ NewRuleSet

We conclude the discussion of evolutionary phase 1 by observing, as long as phase 1 is lasting, process McPall can go from its starting state Watching via state Jitting as far as state NewRuleSet, but not any further. That is to say, if McPal reaches NewRuleSet during phase 1, it gets stuck there. Within phase 1, state NewRuleSet is McPal's ultimate state In particular, McPal cannot go as far as state Briefing, at any rate not during evolutionary phase 1.

### 8.2. Phase 2: A Round Robin Broker Delegating n Clients to m Round Robin Servers

Let us assume, within phase 1 process McPal has indeed reached its ultimate state NewRuleSet. So, in its state Jitting process McPal has designed a Paradigm model mode for its second evolutionary phase, together with a migration towards it. Let us furthermore assume, the model mode of evolutionary phase 2 is the delegation solution of the round robin broker with its m round robin servers, as presented in Part 1's Section 2, together with a solution for the migration from the model mode of evolutionary phase 1 with the nondeterministic server to the newly defined model mode of evolutionary phase 2 with the broker.

The solution is such that the clients have only slightly different behavior; in view of the new co-ordination their subprocesses differ a lot more; furthermore, the NonDetServer becomes the RoRoBroker; the m RoRoServers were not yet there, so they have to be created.

The detailed processes, as far as they are known and as far as any part of such process belongs to some Paradigm model mode occurring during the first two evolutionary phases or to the migration in between, are as visualized in Figure 8.5.

**Figure 8.5** schematically depicts the processes during the two evolutionary phases.

The n processes $Client_i$ are a combination of the client behaviors from Figures 2.1 and 8.1. The one process NonDetServer - under the new name of ServerBroker - combines the behaviors of NonDetServer and RoRoBroker. In view of the migration, exactly one transition has been added in each state of the first evolutionary phase: From state ? to state $l^?$ and from any state i! to the corresponding state $i^?$. The m processes $RoRoserve_j$ have to be created during the migration. To that aim they have been extended with an additional state Irrelevant reflecting $RoRoServer_j$'s status of not (yet) being involved in helping clients. The one process McPal is extended with behavior where it guides - coordinates - all processes involved from their first evolutionary phase to their second and where it might again, by means of JIT modelling and by JIT informing its employees, plan and prepare another evolutionary phase change. Hence the organogram for the evolution from the old phase as given in Figure 8.3 has to be updated accordingly, see Figure 8.6.

**Figure 8.6** schematically depicts the updated organogram for two evolutionary phases.

The two partitions $Help_i$ and $Service_i$ of $Client_i$ are combined into one larger partition of the same name $Help_i$. The various subprocesses keep their names, as do the traps. Note the role of an additional trivial trap for the migration. Figure 8.7 summarizes them together with the corresponding global behavior.

**Figure 8.7** schematically depicts Partition $Help_i$ of each $Client_i$ extended for two evolutionary phases.

The partitions $AssignmentTo_i$ of the various processes $RoRoServer_j$ remain unaltered. Figure 8.8 presents this new version. Note, it does not have the coverage property, as any subprocess of it comprises neither state Irrelevant nor the transition from Irrelevant to state $1_?$. This means in particular, partition $AssignmentTo_i$ may come into existence only after state Irrelevant cannot become current anymore.

**Figure 8.8** schematically depicts $AssigimnentTo_i$ of each $RoRoServer_j$.

**Figure 8.9** schematically depicts Partition EvolMcP of McPal, addressing evolution.

**Figure 8.9 (continuation)** schematically depicts Partitions EvolSB of ServerBroker and $EvolC_i$ of $Client_i$.

**Figure 8.9 (continuation)** schematically depicts Partition $EvolRRs_j$ of $RoRoServer_j$ addressing evolution.

The partitions of the McPal's employees, addressing evolution, have already been mentioned in Figure 8.6, called EvolMcP, EvolSB, $EvolC_i$ and $EvolRRS_j$. Note, in line with renaming NonDetServer into ServerBroker, partition EvolNDS is renamed into EvolSB. Figure 8.9 presents the evolutionary partitions, incorporating their first phases as given in Figure 8.4, apart from some minor renaming. In this case, most partitions consist of three subprocesses, one for the first evolutionary phase, one for the migration from the first to the second phase and one for the second phase. Only the partitions $EvolRRS_j$ do not have a subprocess for the first evolutionary phase, as the round robin servers did not yet exist during this phase.

Based on the above specifications, the set $cr_{mig1}$ of consistency rules for the (first) migration phase from phase 1 to phase 2 as well as the Paradigm model mode $(Cf_2, cr_2)$ during evolutionary phase 2 can be formulated. In this particular case of relatively simple migration we can moreover give the (one) sequence of Cartesian frames during the migration phase. We start with presenting $cr_{migl}$. As it turns out, apart from 8.3.3 and 8.3.7 each rule of it uniquely corresponds to a (state) transition neither belonging to a $Phase_1$-.. subprocess nor to a $Phase_2$-.. subprocess. The two exceptions belong to the McPal pattern, specifying a migration's start and finish respectively.

8.4.1    $RoRoServer_j$: Irrelevant $\longrightarrow I_?$

8.1.3    ServerBroker: ? $\longrightarrow I^?$, $Client_1$ ($Help_1$): NoTurn $\xrightarrow{triv}$ Without. ...
          ... , $Client_n$ ($Help_n$): NoTurn $\xrightarrow{triv}$ Without

8.1.4    ServerBroker: $i!$ $\longrightarrow i+I^?$,
          $Client_1$ ($Help_1$): NoTurn $\xrightarrow{triv}$ Without, ... , $Client_{i-1}$ ($Help_{i-1}$): NoTurn $\xrightarrow{triv}$ Without,
          $Client_i$ ($Help_i$): Turn $\xrightarrow{thanking}$ Without,
          $Client_{i+1}$ ($Help_{i+1}$): NoTurn $\xrightarrow{triv}$ Without, ... , $Client_n$ ($Help_n$): NoTurn $\xrightarrow{triv}$ Without

8.3.3    McPal: NewRuleSet $\longrightarrow$ Briefing,
          McPal (EvolMcP): $Phase_1$-McP $\xrightarrow{inclinedToChange}$ $Mig_1$-McP

8.3.4    McPal: Briefing $\longrightarrow$ StartingServers,
          $create$ $RoRoServer_1$ ($EvolRRS_1$): ($\bullet\longrightarrow$ Irrelevant, $\bullet\longrightarrow$ $Mig_1$-$RRS_1$), ...
          ... , $create$ $RoRoServer_m$ ($EvolRRS_m$): ($\bullet\longrightarrow$ Irrelevant, $\bullet\longrightarrow$ $Mig_1$-$RRS_m$,)

8.3.5    McPal: StartingServers $\longrightarrow$ StartingBroking,
          $RoRoServer_1$ ($EvolRRS_1$, $create$ $AssignmentTo_1$, ... , $create$ $AssignmentTo_n$):
            ($Mig_1$-$RRS_1$ $\xrightarrow{serving}$ $Phase_2$-$RRS_1$,
            $\bullet\longrightarrow$ $NotAssignedTo_1$, ... , $\bullet\longrightarrow$ $NotAssignedTo_n$), ...
          ... , $RoRoServer_m$ ($EvolRRS_m$, $create$ $AssignmentTo_1$, ... , $create$ $AssignmentTo_n$):
            ($Mig_1$-$RRS_m$ $\xrightarrow{serving}$ $Phase_2$-$RRS_m$,
            $\bullet\longrightarrow$ $NotAssignedTo_1$, ... , $\bullet\longrightarrow$ $NotAssignedTo_n$)
          $Client_1$ ($EvolC_1$): $Phase_1$-$C_1$ $\xrightarrow{triv}$ $Mig_1$-$C_1$, ...
          ... , $Client_n$ ($EvolC_n$): $Phase_1$-$C_n$ $\xrightarrow{triv}$ $Mig_1$-$C_n$,
          ServerBroker (EvolSB): $Phase_1$-SB $\xrightarrow{triv}$ $Mig_1$-SB

8.3.6    McPal: StartingBroking $\longrightarrow$ Content,
          ServerBroker (EvolSB): $Mig_1$-SB $\xrightarrow{broking}$ $Phase_2$-SB,
          $Client_1$ ($EvolC_1$): $Mig_1$-$C_1$ $\xrightarrow{triv}$ $Phase_2$-$C_1$, ...
          ... , $Client_n$ ($EvolC_n$): $Mig_1$-$C_n$ $\xrightarrow{triv}$ $Phase_2$-$C_n$

8.3.7    McPal: Content $\longrightarrow$ 2ndWatching, McPal (EvolMcP): $Mig_1$-McP $\xrightarrow{ready}$ $Phase_2$-McP

As a (partial) explanation of these migration rules, we add the following comments.
Rule 8.4.1 is only a side rule corresponding to the first transition to happen in a round robin server's process. As the first transition belongs to the round robin server's migration phase, which is being prescribed by McPal right from the creation of such a round robin server, and as the migration phase only changes into phase 2 after the very first transition has occurred, nothing can prevent it, unless other subprocess restrictions. These however do not exist, as the only other partition of a round robin server, AssignmentTo.. , is created together with the prescription of phase2 to it, i.e. after its first transition has occurred - see also rule 8.3.5.
Rules 8.1.3 and 8.1.4 together specify when and how ServerBroker -the former NonDetServer -guides the clients' phase 1 global behavior, given in Figure 8.2, into the clients' global behavior restricted to phase 2, given in Figure 8.7.
Rules 8.3.3 to 8.3.7 specify the (main) migration coordination exerted by McPal. McPal, after having started its own migration -rule 8.3.3 -according to the pattern description from section 7, first creates the m round robin servers by means of rule 8.3.4. McPal let them indeed start in their starting state Irrelevant and from the beginning it restricts their behavior to their migration phase. Then, by means of rule 8.3.5, McPal additionally creates their AssignmentTo partitions, but not before each round robin server has entered its trap serving. So they all have left their state Irrelevant forever. Moreover, the clients as well as the one broker -the former server -may now start their migration, without any further restrictive condition -their current traps are trivial indeed.
Rule 8.3.6 allows McPal, on the basis of observing clients as well as the broker have finished their migration, to restrict clients and broker to their phase 2 behavior. Finally, rule 8.3.7 expresses how McPal ends it own migration by restricting itself to its phase 2 behavior, exactly in line with the pattern description from section 7.

For the clients no specific migration behavior exists on the detailed level, as without any intermediate state transitions they change from an old (phase 1) subprocess to a new (phase 2) subprocess in one go; see also a client's global behavior as given in Figure 8.7.

During the migration as specified by the above set of rules $cr_{mig1}$ the Cartesian frame $Cf_1$ for evolutionary phase 1 changes into the frame $Cf_2$ for phase 2 via a fixed migration trajectory corresponding to the migration coordination exerted by McPal. So in this migration case, McPal's coordinative task is relatively straightforward and it can be easily traced as follows.

Until McPal's leaving state Briefing, the Cartesian frame remains unchanged, so it equals

$Cf_1 = Cf_{mig1-1} = = $ (NonDetServer (EvolDS), $Client_1$ (EvolC$_1$. Help$_1$),..., Client,, (EvolC$_n$. Help$_n$,), McPal (EvolMcP)).

Then, in consequence of rule 8.3.4, in state StartingServers the frame has been changed into

$Cf_{mig1-2} = $ (NonDetServer (EvolNDS). $Client_l$ (EvolC$_l$. Help$_l$),... , Client$_n$ (Evolc$_n$. Help$_n$), McPal (EvolMcP), RoRoServer$_l$ (EvolRRS$_l$), ... , RoRoServer$_m$ (EvolRRS$_m$)).

Subsequently, in consequence of rule 8.3.5, in state StartingBroking the frame has been changed into

$Cf_{mig1-3} = $ (NonDetServer (EvolNDS), $Client_1$ (EvolC$_1$, Help$_1$)...., Client$_n$ (EvolC$_n$, Help$_n$), McPal (EvolMcP), RoRoServer$_1$ (Evo1RRS$_1$, AssignmentTo$_1$, ... , AssignmentTo$_n$), ..., ... , RoRoServer$_m$ (EVO1RRS$_m$, AssignmentTo$_1$, ... , AssignmentTo$_n$)).

As this Cartesian frame remains unchanged during phase 2, we have in addition, from McPal's entering state Starting-Broking (until McPal's leaving state 2ndBriefing)

$$Cf_{mig1-3} = Cf_2.$$

After the set $cr_{mig1}$ of consistency rule for the (first) migration phase and the sequence of Cartesian frames $Cf_1 = Cf_{mig1-1'}$ $Cf_{mig1-2'}$ $Cf_{mig1-3} = Cf_2$, we finally present the following set $cr_2$ of consistency rules for phase 2.

8.4.2 RoRoServer$_j$: $i_?$) → $i_!$, Client$_i$ (Help$_i$): $\text{Orienting} \xrightarrow{\text{questionClear}} \text{With}$ RoRoServer$_j$ (Assignment To$_i$):

$$\text{AssignedTo}_i \xrightarrow{\text{triv}} \text{NotAssignedTo}_i$$

8.4.3 RoRoServer$_j$: $i_! → i+ I_?$, Client$_i$ (Help$_i$): $\text{With} \xrightarrow{\text{ready}} \text{Without}$

8.4.4 RoRoServer$_j$: $i_? → i+I_?$

8.1.5 ServerBroker: $i^? → i^!$, Client$_i$ (Help$_i$):

81.6 ServerBroker: $i^! → i+I^?$,

RoRoServer$_j$ (AssignmentTo$_i$): $\text{NotAssignedTo}_i \xrightarrow{\text{triv}} \text{AssignedTo}_i$

8.1.7 ServerBroker: $i^? → i+I^?$, Client$_i$ (Service$_i$): $\text{Without} \xrightarrow{\text{asking}}$

8.2.1 Client$_i$: NoNeeds → AtDesk

8.2.5 Client$_i$: AtDesk → NeedClear

8.2.6 Client$_i$: NeedClear → UnderService

8.2.3 Client$_i$: UnderService → Satisfied

8.2.4 Client$_i$: Satisfied → NoNeeds

8.3.8 McPal: 2ndWatching → 2ndJitting

8.3.9 McPal: 2ndJitting → 3rdRuleSet

We decide not to give an explanation of the phase 2 rules as this has been mainly covered by sub-section 3.1 in Part 1: rules 8.4.2 - 8.4.4 are rephrasings of rules c, d and f; rules 8.1.5 - 8.1.7 are rephrasings of rules a, b and e; rules 8.2.1, 8.2.5, 8.2.6, 8.2.3 and 8.2.4 are copies of rules g - k. Finally, the two rules 8.3.8 and 8.3.9 have been discussed in the context of the McPal pattern in section 7.

Combining our descriptions of the various rule sets and Cartesian frames, we are able to formulate the subsequent Paradigm model modes as they occur in relation to state currently visited by McPal. Until McPal's leaving state NewRuleSet the Paradigm model model is the mode for phase 1

$$(\mathrm{Cf}_1, \mathrm{cr}_1).$$

During McPal sojourn in state Briefing the mode is

$$(\mathrm{Cf}_1, \mathrm{cr}_1 + \mathrm{cr}_{mig1} + \mathrm{cr}_2) = (\mathrm{Cf}_{mig1-1}, \mathrm{cr}_1 + \mathrm{cr}_{mig1} + \mathrm{cr}_2).$$

During McPal's subsequent sojourn in StartingServers the mode is

$$(\mathrm{Cf}_{mig1-2}, \mathrm{cr}_1 + \mathrm{cr}_{mig1} + \mathrm{cr}_2).$$

Then, during McPal's consecutive sojourns in states StartingBroking and Content the mode is

$$(\mathrm{Cf}_{mig1-3}, \mathrm{cr}_1 + \mathrm{cr}_{mig1} + \mathrm{cr}_2) = (\mathrm{Cf}_2, \mathrm{cr}_1 + \mathrm{cr}_{mig1} + \mathrm{cr}_2).$$

Finally, from McPal's leaving state Content until its leaving state 3rdRuleSet the mode is

$$(\mathrm{Cf}_2, \mathrm{cr}_2),$$

being the mode for phase 2.

Here ends our specification of the self-adaptive coordination for the migration from the first to the second evolutionary phase. As should be noted, in the above example part we have illustrated the new kinds of global changes covering creation, of a process as well as of a partition of an already existing process. Deletion has not been covered by this example, but it can be addressed similarly.

The method according to the present invention can be implemented in many ways as has been explained before.

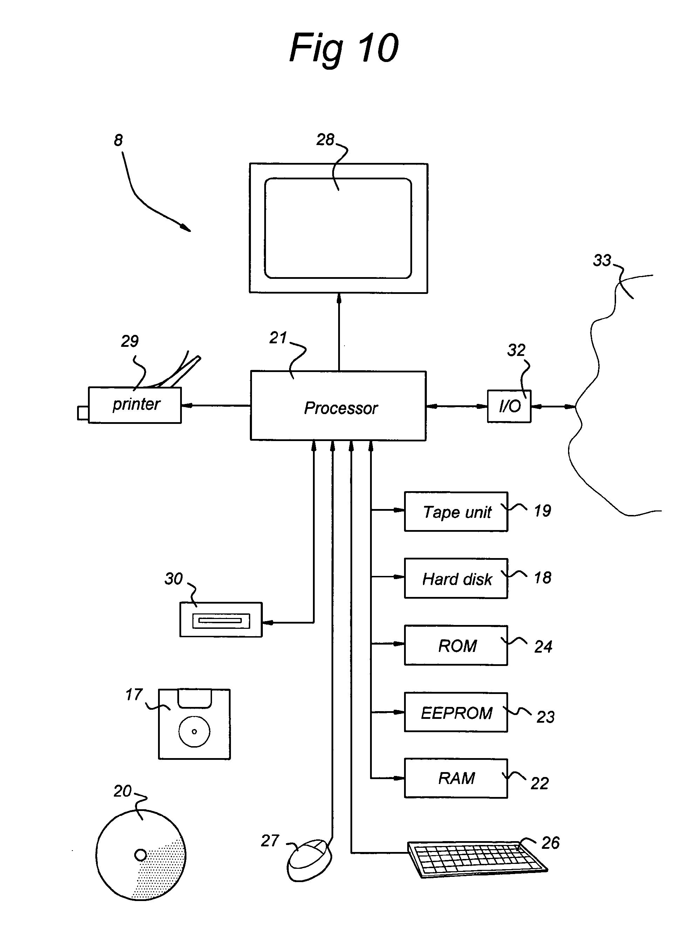

Figure 10 shows schematically a computer arrangement which implements an embodiment of the present invention.

Computer system 8 comprises host processor 21 with peripherals. The host processor 21 is connected to memory units 18, 19, 22, 23, 24 which are arranged for storing instructions and data, one or more reading units 30 (to read, e.g., floppy disks 17, CD ROM's 20, DVD's, portable memory card devices, etc.), a keyboard 26 and a mouse 27 as input devices, and as output devices, a monitor 28 and a printer 29. Other input devices, like a trackball, a touch screen or a scanner, as well as other output devices may be provided.

Further, a network I/O device 32 is provided for a connection to a network 33. Other components of the computer system may be arranged on the network.

The memory units shown comprise RAM 22, (E)EPROM 23, ROM 24, tape unit 19, and hard disk 18. However, it should be understood that there may be provided more and/or other memory units known to persons skilled in the art. Moreover, one or more of them may be physically located remote from the processor 21, if required.

The host processor 21 is shown as one box, however, it may comprise several processing units functioning in parallel or controlled by one main processor, that may be located remotely from one another, possibly distributed over the network 33, as is known to persons skilled in the art.

The host processor 21 comprises functionality either in hardware or software components to carry out respective functions for the implementation of the method of the present invention.

Skilled persons will appreciate that the functionality of the present invention may be accomplished by a combination of hardware and software components. As known by persons skilled in the art, hardware components, either analogue or digital, may be present within the host processor 21 or may be present as separate circuits which are interfaced with the host processor 21. Further it will be appreciated by persons skilled in the art that software components that are executable by the host processor may be present in a memory region of the host processor 21.

The computer system 8 shown in Figure 10 is arranged for performing computations in accordance with the method of the present invention. The present invention relates also to a computer program which implements the method of the present invention. The computer system 8 is capable of executing the computer program (or program code) to carry out the method of the present invention after loading the computer program in the computer system.

It will be appreciated by the person skilled in the art that other alternative and equivalent embodiments of the invention can be conceived and reduced to practice without departing form the true spirit of the invention, the scope of the invention being limited only by the appended claims.

References

[1] P. Clements, F. Bachmann, L. Bass, D. Garlan, J. Ivers, R. Little, R. Nord, and J. Stafford. Documenting Software Architectures: Views and Beyond. Addison-Wesley, 2003.

[2] E. Gamma, R. Helm, R. Johnson, and J. Vlissides. Design Patterns: Elements of Reusable Object-Oriented Software. Addison-Wesley, 1995.

[3] L. Groenewegen and E. de Vink. Operational Semantics for Coordination in Paradigm, In: F. Arbab and C. Talcott, editors, Proc. Coordination 2002, pages 191-206. LNCS2315, 2002.

[4] N. van Kampenhout. Systematic Specification and Verification of Coordination: towards Patterns for Paradigm Models. Master's thesis, LIACS, 2003.

[5] J. Kuester. Consistency Management of Object-Oriented Behavioral Models. PhD thesis, University of Paderborn, 2004.

[6] M. Lankhorst, editor. Enterprise Architecture at Work: Modelling, Communication and Analysis. Springer, 2005.

[7] P.J. Toussaint. Integration of Information Systems: a Study in Requirements Engineering. PhD thesis, Leiden University, 1998.

**Claims**

1. Method for transferring a computer system from a first phase (I) to a second phase (II), the computer system having a plurality of components, one of them being a coordinator;
   the first phase (I) being defined by a first rule set for a first implementation of the computer system;
   the second phase (II) being defined by a second rule set for a second implementation of the computer system;
   during the first phase (I) the coordinator being arranged for prescribing the first rule set to the plurality of components according to a first coordination scheme;
   during the second phase (II) the coordinator being arranged for prescribing the second rule set to the plurality of components according to a second coordination scheme; wherein the coordinator is arranged to execute the following for transferring the computer system from the first phase (I) to the second phase (II):

   a) loading a migration rule set comprising a first migration rules part (A) and a second migration rules part (B);
   b) adjusting the first coordination scheme of the coordinator based on the first migration rules part (A) into the second coordination scheme, and

c) gradually transferring the other components to the second phase (II) based on the second migration rules part (B).

2. Method according to claim 1, wherein the coordinator first loads the second rule set and determines the migration rule set based on the second rule set before executing b) and c).

3. Method according to any one of the preceding claims, wherein the coordinator applies the first migration rules part (A) to change itself from the first phase (I) to the second phase (II).

4. Method according to any one of the preceding claims, wherein during c) some of the components behave according to the first rule set and the other components behave according to the second rule set.

5. Method according to any one of the preceding claims, wherein each component in the first phase (I), can be in one of a plurality of states and the migration rule set specifies in which set of states from said plurality of states a component needs to be to be transferable from the first phase (I) to the second phase (II).

6. Method according to claim 1 - 5, wherein the method further comprises:

   - discarding the first rule set, as a whole or in part, after the computer system has been transferred to the second phase.

7. Method according to any of the preceding claims, wherein the method further comprises:

   - discarding the migration rule, as a whole or in part, after the computer system has been transferred to the second phase.

8. Method according to any one of the preceding claims, wherein the components may be hardware components and/or software components.

9. Method according to any one of the preceding claims, wherein one of the components of the computer system comprises a watchdog component which is arranged for recognizing a bottleneck in the first phase.

10. Method according to claim 9, wherein the watchdog component is arranged to use pattern recognition methods to recognize the bottleneck.

11. Method according to any one of the claims 9 - 10, wherein the watchdog component is arranged to select a migration rule set to overcome the bottleneck before executing a), b) and c).

12. Method according to any one of the claims 9 - 10, wherein the watchdog component is arranged to select a second rule set to overcome the bottleneck before executing a), b) and c).

13. Method according to claim 12, wherein the watchdog component is arranged to select a migration rule set based on the selected second rule set before executing a), b) and c).

14. Computer system (8) comprising a processing unit (21) and memory (18, 19, 22, 23, 24), the memory being connected to the processing unit (21), the computer system (8) having a capability of transferring from a first phase (I) to a second phase (II), the computer system having a plurality of components, one of them being a coordinator;
the first phase (I) being defined by a first rule set for a first implementation of the computer system;
the second phase (II) being defined by a second rule set for a second implementation of the computer system,
during the first phase (I) the coordinator being arranged for prescribing the first rule set to the plurality of components according to a first coordination scheme;
during the second phase (II) the coordinator being arranged for prescribing the second rule set to the plurality of components according to a second coordination scheme; wherein the coordinator is arranged to execute the following for transferring the computer system from the first phase (I) to the second phase (II):

   a) loading a migration rule set comprising a first migration rules part (A) and a second migration rules part (B),
   b) adjusting the first coordination scheme of the coordinator based on the first migration rules part (A) into the second coordination scheme; and

c) gradually transferring the other components to the second phase (II) based on the second migration rules part (B).

**15.** Computer program to be loaded by a computer system (8), the computer system (8) comprising a processing unit (21) and memory (18, 19, 22, 23, 24), the processing unit (21) being connected to the memory (18, 19, 22, 23, 24), the computer program product, after being loaded, allowing the processing unit (21) to provide to the computer system (8):

a capability of transferring from a first phase (I) to a second phase (II), the computer system having a plurality of components, one of them being a coordinator;
the first phase (I) being defined by a first rule set for a first implementation of the computer system;
the second phase (II) being defined by a second rule set for a second implementation of
the computer system,
during the first phase (I) the coordinator being arranged for prescribing the first rule set to the plurality of components according to a first coordination scheme;
during the second phase (II) the coordinator being arranged for prescribing the second rule set to the plurality of components according to a second coordination scheme; wherein the coordinator is arranged to execute the following for transferring the computer system from the first phase (I) to the second phase (II):

a) loading a migration rule set comprising a first migration rules part (A) and a second migration rules part (B),
b) adjusting the first coordination scheme of the coordinator based on the first migration rules part (A) into the second coordination scheme; and
c) gradually transferring the other components to the second phase (II) based on the second migration rules part (B).

**16.** Data carrier for a computer program in accordance with claim 15.

## Fig 2.1

## Fig 2.2

## Fig 2.3

## Fig 2.4

Orienting

asking

questionClear

Without

With

ready

## Fig 2.5

AtDesk

NeedClear

NoNeeds

UnderService

Satisfied

## Fig 2.6

$1^?$  $2^?$  $n-1^?$  $n^?$

$1^!$  $2^!$  $n-1^!$  $n^!$

# Fig 2.7

RoRoServer$_j$,
$j = 1, \ldots, m$:

# Fig 2.8

organogram wrt
one partition Service$_i$ for each Client$_i$

for each $j$:
$n$ organograms, each wrt
a partition AssignmentTo$_i$

# Fig 2.9

Without:    Orienting:    With:

global behaviour:

## Fig 2.10

NotAssignedTo$_i$:

AssignedTo$_i$:

global behaviour:

NotAssignedTo$_i$ — triv → AssignedTo$_i$ — triv →

## Fig 2.11

RoRoBroker

RoRoServer$_j$

Client$_i$

wrt partition
Service$_i$

RoRoBroker

RoRoServer$_j$

wrt partition
AssignmentTo$_j$

Client$_i$

RoRoBroker

wrt partition
ToDoOrNotToDo$_i$

## Fig 2.12a

NotToDo$_i$:

ToDo$_i$:

global behaviour:

NotToDo$_i$ — triv → ToDo$_i$ — triv →

# Fig 2.12b

# Fig 2.13

Without: ... triv

AuxWithout: ... asking

With: ... ready

Orienting: ... questionClear

# Fig 5.1

# Fig 7.1

McPal:

# Fig 7.2

# Fig 7.3

McPal:

partition EvolMcP:

Phase₁-McP:

Mig₁-McP:

Phase₂-McP:

global behaviour:

# Fig 7.4

McPal:

partition EvolMcP of process McPal
as yet consisting of one subprocess Phase$_1$-McP:

InclinedToChange

# Fig 7.5

RequestHandler:

partition EvolRH of process RequestHandler
as yet consisting of one subprocess Phase$_1$-RH:

# Fig 7.6

# Fig 7.7

McPal:

partition EvolMcP:

Phase₁-McP:

Mig₁-McP:

Phase₂-McP:

global behaviour:

# Fig 7.8

RequestHandler:

partition EvolRH:

Phase$_1$-RH:

Mig$_1$-RHExpansion:

Mig$_1$-RHSettling:

Phase$_2$-RH:

global behaviour:

## Fig 7.9

(a)

(b)

## Fig 7.10

**sd EvolutionOver2Phases**

**sd UpToInitializingMigration**

:McPal   :Process$_l$   :Process$_m$   :Process$_k$   :Process$_n$

InclinedToChange-
-signal (trap)

Mig$_l$-McP-
-signa (subpr)l

**ref**

ActualMigration

with in this case e.g
- deletion of :Process$_k$
- creation of :Process$_n$

**sd FromTerminatingMigrationUpToInitializingNextMigration**

Ready-
-signal (trap)

Phase$_2$-McP-
-signal (subpr)

InclinedToChange-
-signal (trap)

Mig$_2$-McP-
-signal (subpr)

# Fig 8.1

Client$_i$:

NonDetServer:

# Fig 8.2

partition Help$_i$:

NoTurn:

Turn:

competing

thanking

NonDetServer

Client$_1$ • • • Client$_n$

organogram wrt one partition
Help$_i$ for each Client$_i$

global behaviour:

competing

NoTurn ⇄ Turn

thanking

# Fig 8.3

McPal: Watching → Jitting → New RuleSet → Briefing

organogram wrt partitions
EvolMcP, EvolC$i$ and EvolNDS
for each process McPal, Client$_i$
and NonDetServer respectively

McPal

Client$_1$ • • • Client$_n$ NonDetServer

# Fig 8.4

subprocess $Phase_I$-$C_i$
of partition $EvolC_i$ of process $Client_i$

global behaviour:

subprocess $Phase_I$-NDS
of partition EvolNDS
of process NonDetServer

global behaviour:

subprocess $Phase_I$-McP
of partition EvolMcP
of process McPal

global behaviour:

EP 1 703 389 A2

# *Fig 8.5(1)*

*n* processes Client$_i$:

ServerBroker,
aka NonDetServer and RoRoBroker:

# Fig 8.5(2)

$m$ processes RoRoServer$_j$:

McPal:

# Fig 8.6

organogram wrt partitions EvolMcP,
EvolSB, EvolC$_i$ and EvolRRS$_j$
for each process McPal, ServerBroker,
Client$_i$ and RoRoServer$_j$
respectively

# Fig 8.7

partition Help$_i$:

# Fig 8.8

partition AssignmentTo$_i$:

global behaviour:

# Fig 8.9(1)

partition EvolMcP:

# Fig 8.9(2)

partition EvolSB:

Phase$_1$-SB:

global behaviour:

Mig$_1$-SB:

broking

Phase$_2$-SB:

triv

partition EvolC$_i$:

Phase$_1$-C$_i$:

Mig$_1$-C$_i$:

Phase$_2$-C$_i$:

global behaviour:

# Fig 8.9(3)

partition EvolRRS$_j$:

Mig$_1$-RRS$_j$:

Phase$_2$-RRS$_j$:

global
behaviour:

# Fig 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **E. GAMMA ; R. HELM ; R. JOHNSON ; J. VLISSIDES.** Design Patterns: Elements of Reusable Object-Oriented Software. Addison-Wesley, 1995
- Operational Semantics for Coordination in Paradigm. **L. GROENEWEGEN ; E. DE VINK.** Proc. Coordination 2002. 2002, 191-206
- Systematic Specification and Verification of Coordination: towards Patterns for Paradigm Models. **N. VAN KAMPENHOUT.** Master's thesis. LIACS, 2003
- Consistency Management of Object-Oriented Behavioral Models. **J. KUESTER.** PhD thesis. University of Paderborn, 2004
- Enterprise Architecture at Work. Modelling, Communication and Analysis. Springer, 2005
- Integration of Information Systems: a Study in Requirements Engineering. **P.J. TOUSSAINT.** PhD thesis. Leiden University, 1998